(19) Europäisches Patentamt
European Patent Office
Office européen des brevets

(11) **EP 3 278 302 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(21) Anmeldenummer: **16712340.5**

(22) Anmeldetag: **30.03.2016**

(51) Int Cl.:
*G06T 7/20* (2017.01)   *G01B 21/02* (2006.01)
*B25J 9/16* (2006.01)   *B23Q 17/24* (2006.01)
*G01B 5/008* (2006.01)   *G01B 11/00* (2006.01)

(86) Internationale Anmeldenummer:
**PCT/EP2016/056928**

(87) Internationale Veröffentlichungsnummer:
**WO 2016/156406 (06.10.2016 Gazette 2016/40)**

(54) **BEWEGUNGSMESSSYSTEM EINER MASCHINE UND VERFAHREN ZUM BETREIBEN DES BEWEGUNGSMESSSYSTEMS**

MOTION-MEASURING SYSTEM OF A MACHINE AND METHOD FOR OPERATING THE MOTION-MEASURING SYSTEM

SYSTÈME DE MESURE DE DÉPLACEMENT D'UNE MACHINE ET PROCÉDÉ DE FONCTIONNEMENT DU SYSTÈME DE MESURE DE DÉPLACEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2015 DE 102015205738**

(43) Veröffentlichungstag der Anmeldung:
**07.02.2018 Patentblatt 2018/06**

(73) Patentinhaber: **Carl Zeiss Industrielle Messtechnik GmbH**
**73447 Oberkochen (DE)**

(72) Erfinder:
• **HAVERKAMP, Nils**
**73431 Aalen (DE)**
• **SEITZ, Dominik**
**73525 Schwäbisch Gmünd (DE)**
• **TEUBER, Tanja**
**73431 Aalen (DE)**
• **OMLOR, Lars**
**73431 Aalen (DE)**

(74) Vertreter: **Patentanwälte Bressel und Partner mbB**
**Potsdamer Platz 10**
**10785 Berlin (DE)**

(56) Entgegenhaltungen:
**WO-A1-2012/103982    JP-A- 2010 219 940**

**Beschreibung**

Die Erfindung betrifft ein Bewegungsmesssystem für eine Maschine gemäss Anspruch 12 und ein Verfahren zum Betreiben eines Bewegungsmesssystems gemäss Anspruch 1.

Maschinen, wie z.B. Koordinatenmessgeräte oder Werkzeugmaschinen, weisen üblicherweise ein bewegliches Teil auf, das z.B. einen Sensor zur Erfassung von Koordinaten eines Werkstücks trägt oder ein Bearbeitungswerkzeug zur Bearbeitung eines Werkstücks trägt. Das bewegliche Teil ist daher insbesondere ein Sensorträger. Das bewegliche Teil ist innerhalb eines Bewegungsbereichs relativ zu einem anderen Teil der Maschine, z.B. relativ zu einer Basis, bewegbar.

Z.B. ist der Sensor des Koordinatenmessgeräts (kurz: KMG) ein Messkopf, der an dem beweglichen Teil (zum Beispiel einer Pinole oder einem Arm) des KMG angebracht ist. An dem Messkopf, kann insbesondere ein Taster (z.B. ein Taststift) angebracht sein, mit dem das KMG die Oberfläche des Werkstücks taktil antastet, um die Sensorsignale des Messkopfes zu erzeugen. Daher ist insbesondere auch ein Taster zum taktilen Antasten des zu vermessenden Werkstücks ein Beispiel für einen Sensor oder für einen Teil des Sensors.

Der Messkopf weist insbesondere eine Sensorik auf, die Messsignale erzeugt, durch deren Auswertung die Koordinaten ermittelt werden können. In der Koordinatenmesstechnik kommen jedoch auch andere Sensoren vor. Zum Beispiel kann der Sensor lediglich die Messung der Koordinaten auslösen. Dies ist zum Beispiel bei einem schaltenden Messkopf der Fall, der bei Kontakt mit dem zu vermessenden Werkstück ein Schaltsignal erzeugt, welches die Messung der Koordinaten z. B. durch Ablesung der Maßstäbe des oder der beweglichen Teile des KMG auslöst. Grundsätzlich können die Sensoren in durch Berührung (taktile Antastung des Werkstücks) und in nicht durch Berührung vermessende Sensoren eingeteilt werden. Zum Beispiel optische oder kapazitive Sensoren zur Koordinatenmessung sind Sensoren, die nicht auf dem Prinzip der taktilen Abtastung basieren. Ferner ist es bekannt, invasive, in das Innere des Messobjekts eindringende Strahlung zur Koordinatenmessung zu verwenden. Auch ist es möglich, Sensoren nach der Art oder Größe des insbesondere gleichzeitig erfassten Bereichs des Werkstücks einzuteilen. Insbesondere können Sensoren Koordinaten lediglich eines Punktes oder einer Fläche an der Oberfläche oder auch im Inneren des Werkstücks messen oder Koordinaten eines Volumens des Werkstücks messen. Zum Beispiel durch Computertomographie kann aus Messergebnissen von Strahlungsdetektoren ein dreidimensionales Bild des Messobjekts erstellt werden. Außerdem ist es möglich, verschiedene Sensoren gleichzeitig an demselben Sensorträger oder verschiedenen Sensorträger zu verwenden, entweder als separate Einheiten oder in eine gemeinsame Einheit integriert. Die verschiedenen Sensoren können gleiche und/oder unterschiedliche Messprinzipien anwenden.

Es ist üblich, KMG so auszugestalten, dass der Sensor gegen einen anderen Sensor ausgewechselt werden kann. In diesem Fall kann derjenige Teil des KMG, der die Schnittstelle zum Anbringen des jeweiligen Sensors aufweist, als Sensorträger bezeichnet werden. Jedoch kann auch derjenige Teil des angekoppelten Sensors, der in dem angekoppelten Zustand relativ zu der Ankopplungsschnittstelle unbeweglich ist, als Teil des Sensorträgers bezeichnet werden. Auch ist es, wie z.B. in dem bereits erwähnten Fall eines Messkopfes mit einem daran angebrachten taktilen Taster, möglich, zwei verschiedene Teile jeweils als Sensor zu bezeichnen. Wenn der eine Sensor den anderen Sensor trägt, kann der eine Sensor als Sensorträger des anderen Sensors bezeichnet werden.

Der Sensor dient der Erfassung von Koordinaten eines Werkstücks. Von dem Sensor erzeugte Signale aus einer Abtastung des Werkstücks reichen jedoch allein nicht aus, um die Koordinaten des Werkstücks im Koordinatensystem des Koordinatenmessgeräts ermitteln zu können. Hierzu ist außerdem Information über die Position und/oder Ausrichtung des Sensors erforderlich. Das KMG hat daher eine Positionsbestimmungseinrichtung zur Feststellung einer Position und/oder einer Ausrichtung des Sensorträgers, der den Sensor trägt, und damit des Sensors. Üblicherweise sind zusätzliche Bewegungsmesseinrichtungen mit den beweglichen Teilen des KMG kombiniert. Zum Beispiel sind eine Maßverkörperung, beispielsweise eine Maßstabteilung mit Strichen, an einem Teil des KMG angeordnet und ein Messsignalgeber an einem relativ dazu beweglichen zweiten Teil des KMG angeordnet. Eine Auswertungseinrichtung des KMG ermittelt aus einer von der Positionsbestimmungseinrichtung festgestellten Position und/oder Ausrichtung des Sensorträgers und aus Signalen des Sensors Koordinaten des Werkstücks. Wenn in dieser Beschreibung der Begriff Positionsbestimmung gebraucht wird, ist daraus alternativ oder zusätzlich eine Bestimmung einer Ausrichtung des jeweiligen Teils oder Bereichs zu verstehen, soweit sich aus dem Zusammenhang nichts anderes ergibt.

Die Positionsbestimmung des Sensorträgers hängt von äußeren Einflüssen und dem jeweiligen Betriebszustand des KMG ab. Z.B. beeinflusst die Temperatur und Luftfeuchtigkeit die Positionsbestimmung. Ferner muss die Gewichtskraft eines an den Sensorträger angekoppelten Sensors berücksichtigt werden. Auch können sich Teile des KMG abhängig von der Position des Sensorträgers verbiegen. Die Geschwindigkeit der Bewegung der beweglichen Teile des KMG und die Beschleunigung beeinflussen ebenfalls die Positionsmessung. KMG werden daher für bestimmte Umgebungsbedingungen und Betriebszustände kalibriert. Es muss dann darauf geachtet werden, dass die bei der Kalibrierung berücksichtigten Bereiche der Einflussgrößen während des Betriebes des KMG nicht verlassen werden. Aufgrund der Vielzahl der Einflussgrößen ist der Aufwand für die Kalibrierung und die entsprechenden Korrekturmodelle hoch. Ferner ist die trotz der Korrektur verbleibende Unsicherheit der von dem KMG gemessenen Messgrößen in verschiedenen Teilbereichen der Einflussgrößen unterschiedlich groß. Auch verändert sich das Verhalten des KMG im Laufe der Zeit, sodass die Kalibrierung wiederholt werden muss.

Mit Ausnahme der Unterschiede zwischen der Koordinatenmessung und der Werkstückbearbeitung treffen die Aussagen über die Positionsbestimmung analog auch auf Werkzeugmaschinen zu, die einen in einem Bewegungsbereich beweglichen Werkzeugträger aufweisen, der ein Bearbeitungswerkzeug trägt oder tragen kann. Auch derartige Werkzeugmaschinen haben üblicherweise eine Positionsbestimmungseinrichtung.

Die Kalibrierung der Positionsbestimmungseinrichtung kann zumindest vereinfacht werden, wenn eine optische Positionsbestimmung durch Aufnehmen von Kamerabildern durch zumindest eine Kamera stattfindet. Durch Auswerten der Kamerabilder lässt sich bei geeigneter Ausgestaltung und Anordnung der Kamera oder Kameras die Position des beweglichen Teils mit hoher Genauigkeit bestimmen. Alternativ oder zusätzlich zu der Positionsbestimmung mit zumindest einer Kamera kann eine Positionsbestimmungseinrichtung mit nicht bildgebender optischer Sensorik verwendet werden, zum Beispiel mit einem Korrelationssensor.

Wie bereits erwähnt, sind insbesondere bei Koordinatenmessgeräten aber auch andere Bewegungsmesseinrichtungen üblich. Deren Messergebnisse werden insbesondere für die Steuerung der Bewegung z.B. gemäß einem vorgegebenen Bewegungsablauf verwendet. Neben den bereits erwähnten Bewegungsmesseinrichtungen mit Maßstabteilung werden üblicherweise auch Tachometer verwendet, die insbesondere unmittelbar die Bewegung von Motoren der Maschine messen. Die Tachometersignale können direkt von der Motorsteuerung verwendet werden. Sie können aber z.B. auch als redundante Messergebnisse der Bewegung an eine übergeordnete Steuerung der Maschine übertragen werden.

Hochpräzise Bewegungsmesseinrichtungen, wie sie als Teil von Koordinatenmessgeräten und Werkzeugmaschinen benötigt werden, sind verhältnismäßig aufwendig in der Herstellung und müssen kalibriert werden.

WO 2012/103982 A1 beschreibt ein Verfahren und ein System zum Bestimmen von Bewegungsparametern in Zusammenhang mit einem Objekt. Das Objekt wird während einer Mehrzahl von Aufnahmezeitintervallen beleuchtet und Bildern des reflektierten Lichts werden aufgenommen. Es werden Referenzmuster verwendet, wobei jedes Referenzmuster einer Position des Objekts entspricht. Aus den aufgenommenen Bildern wird jeweils dasjenige Referenzmuster ermittelt, das dem aus dem aufgenommenen Bild entnehmbaren Muster am ähnlichsten ist. Aus den Positionen, die aus verschiedenen, nacheinander aufgenommenen Bildern ermittelt werden und aus einer entsprechenden Zeitbasis kann die Geschwindigkeit des Objekts bestimmt werden.

JP 2010-219940 A beschreibt eine Bildaufnahmevorrichtung mit einer Bildsteuerung, die eine erste Aufnahme eines Bildes durchführt mit einem Belichtungszeitintervall, das für jede Pixelgruppe einer Mehrzahl von Pixelgruppen einer Bildaufnahmevorrichtung verschieden ist. Außerdem wird die Aufnahme eines zweiten Bildes gesteuert. Aus den Bildern wird ein Bewegungsvektor des bewegten Objekts detektiert. Darauf basierend wird bestimmt, ob das Objekt in einem inaktiven oder in einem aktiven Zustand ist. Abhängig von dem Ergebnis dieser Bestimmung wird eine Mehrzahl von Bildern synthetisiert.

Rekleitis, I., "Steerable Filters and Cepstral Analysis for Optical Flow Calculation from a Single Blurred Image", Vision Interface, 1996, beschreibt die Bestimmung der Geschwindigkeit einer in einem Bild aufgenommenen Szene aus der im Bild enthaltenen Bewegungsunschärfe. Es wird ein Algorithmus beschrieben, der auf der Interpretation eines Verlaufs von der Bewegungsunschärfe beruht, um eine Karte des optischen Flusses zu berechnen. Zu diesem Zweck wird der Algorithmus für eine Reihe von einander überlappenden Bildsegmenten ausgeführt.

Es ist eine Aufgabe der vorliegenden Erfindung, ein Bewegungsmesssystem einer Maschine, eine Maschine mit einem Bewegungsmesssystem, ein Verfahren zum Betreiben eines Bewegungsmesssystems einer Maschine und/oder ein Verfahren zum Betreiben einer Maschine mit einem Bewegungsmesssystem anzugeben, bei denen der Aufwand für Herstellung und Kalibrierung reduziert werden kann.

Die Lösung der Aufgabe geht von einem Messsystem mit Bildaufzeichnungseinrichtung aus, das z.B. auch als Positionsmesssystem zur Messung der Position eines beweglichen Maschinenteils verwendbar ist. Das Messsystem weist zumindest eine Bildaufzeichnungseinrichtung auf, die in der Beschreibung auch dann als Kamera bezeichnet wird, wenn die Bildaufzeichnungseinrichtung nicht mit einer optischen Linseneinrichtung kombiniert ist. Zum Beispiel werden so genannte LSS (Lensless Smart Sensors) zum Kauf angeboten, die als Bildaufzeichnungseinrichtung geeignet sind. Die Bildaufzeichnungseinrichtung ist/wird an einem ersten Teil der Maschine angeordnet und nimmt zumindest ein Aufzeichnungsbild (im Folgenden ohne Beschränkung der Allgemeinheit auch als Kamerabild bezeichnet) eines zweiten Teils der Maschine auf bzw. ist ausgestaltet, zumindest ein Kamerabild des zweiten Teils der Maschine aufzunehmen. Unter einem Aufzeichnungsbild wird daher Information über eine abgebildete Szene verstanden, die von der Bildaufzeichnungseinrichtung erzeugt wird/wurde, wobei Bildwerte (zum Beispiel binäre Werte, Grauwerte oder Farbwerte) bezüglich eines Bild-Koordinatensystems definiert sind. Wenn auch bevorzugt, muss es sich bei dem Aufzeichnungsbild nicht um das Bild einer optischen Linse oder Linsenanordnung handeln. Vielmehr kommen auch andere Arten von Abbildungen in Frage, zum Beispiel mittels Gittern oder Masken. Insbesondere jedoch wird bei der Auswertung des Aufzeichnungsbildes die Art der Abbildung berücksichtigt.

Bei einer Relativbewegung des ersten und des zweiten Teils tritt ein beim Fotografieren von bewegten Objekten allgemein bekanntes Problem auf, nämlich die Verschmierung von Strukturen im aufgenommenen Kamerabild. Zum Beispiel wird ein scharfer Übergang (Kante) von einem hellen, weißen oder stark reflektierenden Strukturbereich zu einem dunklen, schwarzen oder schwach reflektierenden Strukturbereich zu einem allmählichen Übergang von hell, weiß oder stark reflektierend zu dunkel, schwarz oder schwach reflektierend im Kamerabild verschmiert. Entsprechendes gilt für scharfe Übergänge (Kanten) zwischen Strukturbereichen unterschiedlicher Farbe oder Farbtiefe. Bei der vorliegenden Erfindung kann die Erfassungsstruktur (nicht nur im Fall des Vorhandenseins zumindest einer Kante) Strahlung reflektieren und/oder selbst Strahlung erzeugen (z.B. ein Feld von Leuchtdioden sein). Die in dem Kamerabild erfasste Struktur unterscheidet sich somit von der tatsächlichen Erscheinung der Struktur. Grund hierfür ist die Tatsache, dass sich während des Zeitintervalls der Strukturerfassung (häufig als Belichtungszeit bezeichnet) durch die Kamera die Struktur relativ zur Kamera bewegt hat und daher eine Verschiebung des Abbilds der Struktur stattgefunden hat. Anders ausgedrückt entstehen die Verschmierungen durch eine sich im Laufe des Aufnahme-Zeitintervalls verändernde Strahlungsverteilung der von der Kamera erfassten Strahlung. Bei der Struktur kann es sich um eine Strahlung reflektierende und/oder Strahlung emittierende Struktur handeln, zum Beispiel durch eine Struktur, die durch einen leuchtenden Bildinhalt eines Displays (zum Beispiel mit einer LED- Matrix) gebildet wird. Das Display kann an dem beweglichen Teil angeordnet sein oder, in einem anderen Fall, an einem ortsfesten Teil (Basis) der Maschine. In dem zuletzt genannten Fall wird die Kamera mit dem beweglichen Teil mitbewegt. Eine Strahlung emittierende Struktur kann optional z.B. eine nicht selbst Strahlung erzeugende Teilstruktur vor einer Strahlung emittierenden hinteren Teilstruktur aufweisen. Die vordere Teilstruktur erzeugt somit eine örtlich nicht konstante Strahlungsverteilung, da sie Strahlung ortsabhängig passieren lässt. Eine solche Strahlung emittierende Struktur, aber auch Displays ohne eine in Richtung der Kamera angeordnete nicht selbst Strahlung erzeugende Teilstruktur sind besonders gut für die unten näher beschriebene Ermittlung der Orientierung der Relativbewegung des ersten Teils und des zweiten Teils der Maschine geeignet.

Es ist möglich, den Grad solcher Verschmierungen zu reduzieren, indem das Zeitintervall der Bildaufnahme verkürzt wird und/oder die zu erfassende Struktur mit sehr kurzen Strahlungspulsen beleuchtet wird. Es ist jedoch auf eine ausreichende Beleuchtung zu achten, um das Signal-Rauschverhältnis der durch die Kamera erfassten Bildinformation nicht zu gering werden zu lassen. Kurze Strahlungspulse stellen einen zusätzlichen Aufwand für die Beleuchtung dar und führen in manchen Betriebssituationen zu Störungen des Betriebs oder der Personen, die sich im Bereich der Maschine aufhalten.

In mathematischer Verallgemeinerung beruht die Lösung auf folgendem Prinzip. Physikalisch bedingt kann kein messendes System mit unendlichen Bandbreiten realisiert werden, sondern jedes Informationen verarbeitende System hat eine bestimmte endliche Übertragungsfunktion. Diese beschreibt, wie am Eingang vorliegende Informationen verändert bzw. am Ausgang des Systems ausgegeben werden, weil sie nicht in ihrer vollen Bandbreite übertragen bzw. verarbeitet werden können. Für optische Systeme gibt es verschiedene Weisen, wie die Übertragungsfunktion des Systems beschrieben wird. Die Wahl der Beschreibung wird maßgeblich durch die zu beantwortende Frage bestimmt. Für entsprechende Überlegungen, die noch anhand der Figuren näher erläutert werden, wird die Argumentationsweise der optischen Transferfunktion eines optischen Systems verwendet. Sie kann insbesondere als Faltungskern einer mathematischen Faltung aufgefasst werden und beschreibt zum Beispiel, wie Kontrast im Objekt in Kontrast im Bild überführt wird. Die Anwendung der inversen optischen Transferfunktion (als Beispiel wird noch die mathematische Faltung genauer beschrieben) erlaubt somit die Rekonstruktion des Objektinhaltes aus dem Bildinhalt. Dies gilt jedoch nur für diejenigen Komponenten einer Frequenzanalyse (zum Beispiel Fourieranalyse) des Objektes, welche vom System übertragen wurden und/oder für die eine Invertierung der optischen Transferfunktion möglich ist. Anders ausgedrückt muss die Abbildung zumindest bezüglich eines für die gewünschten Zwecke ausreichenden Informationsgehaltes bijektiv sein und/oder eine ausreichend verlustarme Rekonstruktion ermöglichen.

Es wird vorgeschlagen, die Effekte der Relativbewegung von Bildaufzeichnungseinrichtung und erfasstem Maschinenteil, nämlich insbesondere die genannten Verschmierungen der Strukturen im Aufzeichnungsbild, auszuwerten und daraus die Geschwindigkeit der Relativbewegung zu ermitteln. Es ist daher nicht erforderlich, die Belichtungszeit so weit wie möglich zu verkürzen und/oder mit Strahlungspulsen zu beleuchten.

Insbesondere wird vorgeschlagen: Ein Verfahren zum Betreiben eines Bewegungsmesssystems einer Maschine, insbesondere eines Koordinatenmessgerätes oder einer Werkzeugmaschine, wobei

- eine an einem ersten Teil der Maschine angeordnete Bildaufzeichnungseinrichtung zumindest ein Aufzeichnungsbild eines zweiten Teils der Maschine aufnimmt, wobei das erste Teil und das zweite Teil relativ zueinander beweglich sind,
- eine Erfassungsstruktur, die durch das zweite Teil gebildet ist und/oder die an dem zweiten Teil angeordnet ist, durch das zumindest eine Aufzeichnungsbild erfasst wird und
- unter Verwendung von Informationen über eine tatsächliche Erscheinung der Erfassungsstruktur aus Unterschieden des zumindest einen Aufzeichnungsbildes zu der tatsächlichen Erscheinung der Erfassungsstruktur eine Geschwindigkeit, eine Orientierung, ein zeitlicher Verlauf und/oder eine Bewegungsrichtung der Relativbewegung des ersten Teils und des zweiten Teils ermittelt wird.

Das Verfahren und seine Ausgestaltungen können insbesondere Teil eines Verfahrens zum Betreiben der Maschine sein, die das Bewegungsmesssystem aufweist.

Ferner wird vorgeschlagen: Ein Bewegungsmesssystem für eine Maschine, insbesondere ein Koordinatenmessgerät oder eine Werkzeugmaschine, die ein erstes Teil und ein zweites Teil aufweist, welche relativ zueinander beweglich sind, wobei das Bewegungsmesssystem aufweist:

- zumindest eine Erfassungsstruktur und zumindest eine Bildaufzeichnungseinrichtung, wobei die Bildaufzeichnungseinrichtung an dem ersten Teil der Maschine angeordnet oder anordenbar ist, wobei die Erfassungsstruktur durch das zweite Teil gebildet ist und/oder an dem zweiten Teil anordenbar ist und wobei die Bildaufzeichnungseinrichtung ausgestaltet ist, zumindest ein Aufzeichnungsbild der Erfassungsstruktur zu erfassen, und
- eine Ermittlungseinrichtung, die ausgestaltet ist, unter Verwendung von Informationen über eine tatsächliche Erscheinung der Erfassungsstruktur aus Unterschieden des zumindest einen Aufzeichnungsbildes zu der tatsächlichen Erscheinung der Erfassungsstruktur eine Geschwindigkeit, eine Orientierung, einen zeitlichen Verlauf und/oder eine Bewegungsrichtung der Relativbewegung des ersten Teils und des zweiten Teils zu ermitteln.

Ausgestaltungen des Bewegungsmesssystems werden noch beschrieben. Insbesondere kann das Bewegungsmesssystem so ausgestaltet sein, dass es eine entsprechende Ausgestaltung des Verfahrens zum Betreiben des Bewegungsmesssystems ausführt. Das Bewegungsmesssystem und seine Ausgestaltungen können insbesondere Teil einer Maschine sein, die das Bewegungsmesssystem aufweist. Daher gehört zum Umfang der Erfindung insbesondere auch eine Maschine, insbesondere ein Koordinatenmessgerät oder eine Werkzeugmaschine, wobei die Maschine aufweist:

- ein erstes Teil und ein zweites Teil, die relativ zueinander beweglich sind,
- ein Bewegungsmesssystem, das zumindest eine Erfassungsstruktur und zumindest eine Bildaufzeichnungseinrichtung aufweist, wobei die Bildaufzeichnungseinrichtung an dem ersten Teil der Maschine angeordnet ist, wobei die Erfassungsstruktur durch das zweite Teil gebildet ist und/oder an dem zweiten Teil angeordnet ist und wobei die Bildaufzeichnungseinrichtung ausgestaltet ist, zumindest ein Aufzeichnungsbild der Erfassungsstruktur zu erfassen, und
- eine Ermittlungseinrichtung, die ausgestaltet ist, unter Verwendung von Informationen über eine tatsächliche Erscheinung der Erfassungsstruktur aus Unterschieden des zumindest einen Aufzeichnungsbildes zu der tatsächlichen Erscheinung der Erfassungsstruktur eine Geschwindigkeit, eine Orientierung, einen zeitlichen Verlauf und/oder eine Bewegungsrichtung der Relativbewegung des ersten Teils und des zweiten Teils zu ermitteln.

Ferner gehört zum Umfang der Erfindung ein Verfahren zum Herstellen einer Erfassungsstruktur, die in dem Verfahren nach einem der vorhergehenden Ansprüche verwendbar ist oder verwendet wird, wobei Abmessungen von Strukturelementen der Erfassungsstruktur abhängig von einer Größe einer zu erwartenden Geschwindigkeit der Relativbewegung des ersten und des zweiten Teils der Maschine gewählt werden. Wie an anderer Stelle in dieser Beschreibung erwähnt, kann die Erfassungsstruktur insbesondere Strahlung reflektieren und/oder emittieren. Daher gehört zum Herstellen einer Erfassungsstruktur auch das Einstellen einer variabel einstellbaren Erfassungsstruktur, wie zum Beispiel eines Displays. Durch das Einstellen wird die von der Erfassungsstruktur ausgehende, zu der zumindest einen Kamera übertragende Strahlung verändert. Alternativ oder zusätzlich können die Abmessungen der Erfassungsstruktur im Laufe der Zeit verändert werden, zum Beispiel durch Bestrahlung mit einer Strahlungsverteilung, die sich mit der Zeit verändert, beispielsweise deren Wellenlängen (Farben) sich verändern. Zum Beispiel kann die Erfassungsstruktur abhängig von der auftreffenden Strahlungsverteilung (zum Beispiel Farbverteilung) unterschiedliche Abmessungen von Strukturmerkmalen der Erfassungsstruktur haben, die von der Kamera erfasst werden können. Eine einfache Möglichkeit zur Veränderung der Erfassungsstruktur besteht in der Verwendung zumindest eines Displays, dessen dargestellter Inhalt verändert wird. Insbesondere kann zusätzliche Information durch das Kamerabild gewonnen werden, wenn sich für die Kamera erfassbare Strukturmerkmale und insbesondere Abmessungen der Erfassungsstruktur während des Zeitintervalls, über das hinweg Bildinformation für das Kamerabild aufgenommen wird, verändern.

Teile der folgenden Beschreibung beziehen sich auf den Fall, dass die Relativbewegung senkrecht zur optischen Achse der Abbildung verläuft. Die Erfindung ist jedoch nicht auf diesen Fall beschränkt. Zum Beispiel kann durch Vorverarbeitung der Bilddaten und/oder durch Vorkenntnisse über die Geometrie der Abbildung (insbesondere über Position und/oder Ausrichtung der Erfassungsstruktur relativ zur Kamera) bei der Ermittlung der Geschwindigkeit berücksichtigt werden, dass die Relativbewegung nicht senkrecht zur optischen Achse verläuft.

Im häufigsten Anwendungsfall eines zweidimensionalen Aufzeichnungsbildes (ohne Beschränkung auf Linsenoptik auch als Kamerabild bezeichnet) sind keine Tiefeninformationen, das heißt aus Informationen zu der dritten Dimension, vorhanden. Insbesondere durch die genannte Vorverarbeitung und/oder Vorkenntnisse kann aber berücksichtigt werden, dass die Erfassungsstruktur sich nicht lediglich in einer Ebene erstrecken kann, die senkrecht zur optischen Achse der Abbildung verläuft. Zum Beispiel kann die Ebene der Erfassungsstruktur gegen diese Ebene abgewinkelt verlaufen. Auch ist es möglich, dass die Erfassungsstruktur nicht lediglich in einer Ebene verläuft, sondern zum Beispiel eine dreidimensionale Struktur aufweist und/oder entlang einer gebogenen Oberfläche verläuft. Abhängig von der Tiefenposition des jeweiligen im Kamerabild abgebildeten Punkts oder Bereichs der Erfassungsstruktur kann sich eine unterschiedlich starke Schmierung im Kamerabild ergeben.

Die Erfindung ist auch nicht auf den Fall von Bewegungen eines beweglichen Teils einer Maschine entlang einer geradlinig verlaufenden Koordinatenachse oder innerhalb einer Ebene beschränkt. Die Erfindung ist auch nicht auf geradlinige Bewegungen entlang einer beliebigen Richtung im Raum beschränkt. Vielmehr können auch Drehbewegungen oder Überlagerungen von Drehbewegungen und geradlinigen Bewegungen mit dem Bewegungsmesssystem bzw. durch das Verfahren gemessen werden.

Insbesondere kann die Erfassungsstruktur zumindest eine und vorzugsweise mehrere der Kanten aufweisen, die oben erwähnt sind. In diesen Fällen ist es insbesondere möglich, den örtlichen Verlauf der Verschmierung (d.h. z.B. den Übergang von weiß zu schwarz oder hell zu dunkel) an der Kante oder den Kanten im Kamerabild auszuwerten. Als Informationen über die tatsächliche Erscheinung der Erfassungsstruktur reichen in diesem Fall z.B. die Kenntnis der Position und/oder des Verlaufs der Kante in der Erfassungsstruktur aus. Optional kann ferner berücksichtigt werden, wie scharf die Kante in der Erfassungsstruktur ist und bis zu welchem Grad und/oder in welcher Weise die Kante bereits aufgrund der Aufnahme des Kamerabildes (z.B. durch Abbildungsfehler und örtliche Auflösung der Kamera) verändert und insbesondere verschmiert wird. Veränderung allein aufgrund der Abbildung kann aber bei der Ermittlung der Geschwindigkeit auch dann berücksichtigt werden, wenn keine Kante vorhanden oder keine Verschmierung an einer Kante ausgewertet wird.

Zum Beispiel kann eine Erfassungsstruktur ein oder mehrere strichartige Flächen aufweisen, an deren Ränder sich die Kanten, das heißt die sprungartigen Übergänge, befinden. Insbesondere kann eine Erfassungsstruktur strichartige Flächen mit unterschiedlichen Breiten, das heißt Abstände der Ränder und/oder Richtungen der Kantenverläufe aufweisen. Ihre Staffelung kann insbesondere abhängig von dem Belichtungszeitintervall der Kamera und dem Geschwindigkeitsbereich gewählt werden, in dem die Geschwindigkeit der Relativbewegung erwartet wird und ermittelt werden soll. Z. B. kann die Erfassungsstruktur eine kontinuierliche Grauwertverteilung und/oder (im Frequenzraum) ein kontinuierliches Frequenzspektrum der Strukturelemente aufweisen. Die Frequenzen des Frequenzspektrums werden zu einer gemeinsamen Grauwertverteilung überlagert. Die Frequenzüberlagerung kann dabei mit statistischer Phase erfolgen, so dass sich eine statistische Grauwertverteilung im Bild ergibt. Eine derartige Ausgestaltung der Erfassungsstruktur ist gut geeignet, um Rauschanteile in der Geschwindigkeitsmessung auszumitteln. Der Rechenaufwand für die eine Auswertung eines Bildes einer Erfassungsstruktur mit statistischer Grauwertverteilung ist jedoch verhältnismäßig hoch. Wenn, wie bevorzugt, jedes Kamerabild einer Folge von nacheinander aufgenommenen Kamerabilder (z.B. bei einer Frequenz von größer als 1 kHz) zur Ermittlung der Geschwindigkeit ausgewertet werden soll, ist der Rechenaufwand sehr hoch. Bevorzugt wird daher eine durch die Erfassungsstruktur definierte kontinuierliche Phasenbeziehung für die Fourierfrequenzen der Strukturelemente. In diesem Fall kann das Kamerabild als zusammenhängender Datensatz bezeichnet werden, sodass keine Bezugnahme bzw. kein Vergleich mit externen Informationen notwendig ist.

Mit dem beschriebenen Ansatz der Frequenzüberlagerung von kontinuierlichen Grauwertverteilungen kann erreicht werden, dass an jedem Ort in der Erfassungsstruktur jede Frequenz vorkommt. Grautonfähige Bilderzeugungsverfahren zur Erzeugung solcher kontinuierlichen Grauwertverteilungen sind bereits bekannt. Alternativ kann aber z.B. eine binäre Schwarz-Weiß- (oder Hell-Dunkel-) Ortsverteilungen durch die Erfassungsstruktur realisiert werden. Für die Ermittlung der Geschwindigkeit aus verhältnismäßig großen Entfernungen sind die Punktdichten (Pixeldichten) der Erfassungsstruktur in diesem Fall nicht auflösbar, d.h. sie liegen in einem Ortsfrequenzintervall außerhalb der Übertragungsbandbreite des verwendeten optischen Systems. Ein Beispiel für ein solches Grauwertverfahren ist die Analyse von Bernoulli-Rausch-Mustern, z.B. wie veröffentlicht in "The Non-parametric Sub-pixel Local Point Spread Function Estimation Is a Well Posed Problem" von Mauricio Delbracio et al., International Journal of Computer Vision (2012) 96, Seiten 175-195, Springer.

Die vorstehend beschriebene kontinuierliche Grauwertverteilung ist lediglich ein Ausführungsbeispiel für Erfassungsstrukturen. Grundsätzlich kann nach der Fouriertheorie jedes Signal als Überlagerung von Frequenzen dargestellt werden. D.h. auch binäre Strukturen (die somit an den Übergängen der Strukturen Kanten bilden) enthalten viele Frequenzen aus dem möglichen Frequenzspektrum. Da jedoch eine Kante, d.h. ein einzelner Kontrastsprung im Bild, ein nicht-periodisches Signal liefert, ist zu seiner Beschreibung ein Fourier-Integral, d.h. keine Fourier-Summe, erforderlich. Das Frequenzspektrum ist dabei unendlich ausgedehnt und enthält Information bei hohen Frequenzen, die vom optischen Übertragungssystem nicht mehr aufgelöst werden können. Dies führt zu einem niedrigen Signal-/Rausch-Verhältnis. Die binären Strukturen in der Fourierebene können aber so ausgelegt werden, dass sie niedrige Frequenzen enthalten. Insbesondere können Strukturelemente regelmäßig ausgelegt werden bzw. nennenswerte periodische Anteile aufweisen. Diese Periodizität hat die Folge, dass das Frequenzspektrum Peaks (das heißt schmale Frequenzbereiche mit sprungartig ansteigender und abfallender Amplitude) enthält, deren Frequenzabstand der inversen Strukturperiode entspricht.

Z.B. kann die Verschmierung der Kante im Kamerabild durch an sich bereits bekannte Verfahren auf dem Gebiet der Bildverarbeitung und Bildverbesserung ermittelt, charakterisiert und/oder ausgewertet werden. Z.B. kann die erste und/oder zweite örtliche Ableitung des Bildwertes (z.B. des Grauwertes) entlang einer Linie quer zum Verlauf der Kante und insbesondere senkrecht zum Verlauf der Kante gebildet werden. Z.B. durch Bestimmung eines Maßes für den Verlauf der ersten örtlichen Ableitung kann der Grad der Verschmierung charakterisiert werden.

Eine weitere Möglichkeit besteht darin, die Verschmierung an jeweils einer einzelnen Kante durch mathematische Faltung einer mathematischen Funktion, die die Verschmierung der Kante im Kamerabild beschreibt, mit einer zweiten mathematischen Funktion, die die Kante der Erfassungsstruktur beschreibt, zu ermitteln.

Die unmittelbare Auswertung der Verschmierung an einer einzelnen Kante ist jedoch verhältnismäßig aufwendig und kostet daher verhältnismäßig viel Rechenzeit, wenn die Auswertung, wie generell (nicht nur im Fall einer Kante) bevorzugt, von einer Datenverarbeitungseinrichtung ausgeführt wird. Auch ist der durch Auswertung einer einzelnen Kantenverschmierung gewonnene Informationsgehalt verhältnismäßig gering. Auch die Genauigkeit der Geschwindigkeitsbestimmung kann gesteigert werden, wenn nicht lediglich eine einzelne Kante ausgewertet wird. Bevorzugt wird daher, nicht nur eine einzelne Kante bezüglich der Verschmierung im Kamerabild auszuwerten, sondern eine Mehrzahl von Kanten und insbesondere auch den Abstand der Kanten zueinander zu berücksichtigen. Insbesondere ist es von Vorteil, wenn die Erfassungsstruktur eine Vielzahl von Kanten (d.h. zumindest drei Kanten) aufweist, deren Abstände zueinander nicht gleich groß sind. Dies betrifft insbesondere die Anordnung der Kanten entlang einer virtuellen oder tatsächlich vorhandenen (z.B. geraden) Linie in der Erfassungsstruktur, die die Kanten quer zu ihrem Verlauf und insbesondere senkrecht zu ihrem Verlauf schneidet. Der Kantenabstand wird insbesondere zwischen zwei nächstbenachbarten Kanten definiert, sodass sich Paare von nächstbenachbarten Kanten in unterschiedlichem Abstand zueinander in der Erfassungsstruktur befinden. Dies schließt nicht aus, dass sich Kantenabstände wiederholen, d.h. sich verschiedene Paare von Kanten, die einen gleichen Abstand zueinander haben, in verschiedenen Bereichen der Struktur befinden.

Insbesondere kann die örtliche Kantenverteilung der Erfassungsstruktur virtuell oder tatsächlich z.B. durch eine Fouriertransformation in den Frequenzraum transformiert werden und insbesondere die Frequenzverteilung analysiert werden und auf diese Weise die Geschwindigkeit ermittelt werden. Verschiedene Kantenabstände entsprechen somit verschiedenen Frequenzen im Frequenzraum, die größere Amplituden als andere Frequenzen haben. Es ist eine Möglichkeit, die Unterschiede zwischen der Fouriertransformierten eines Referenzbildes, das die nichtverschmierte Erfassungsstruktur darstellt, und der Fouriertransformierten des Kamerabildes bzw. des der Erfassungsstruktur zugeordneten Bereichs des Kamerabildes auszuwerten und daraus die Relativgeschwindigkeit zu ermitteln. Z.B. kann durch Kalibrierung des Bewegungsmesssystems bei unterschiedlich großen Relativgeschwindigkeiten und jeweils Bestimmung der Veränderung der Frequenzverteilung bezogen auf die Fouriertransformierte des Referenzbildes ermittelt werden, welche Auswirkungen der jeweilige Wert der Geschwindigkeit auf das Kamerabild und die Frequenzverteilung hat. Insbesondere werden durch die Verschmierung von Kanten hohe Amplituden der Fouriertransformierten des Referenzbildes verkleinert und die entsprechenden Peaks verbreitert. Sowohl die Amplitudenreduktion als auch die Peakverbreiterung können ausgewertet werden und dadurch die Geschwindigkeit ermittelt werden.

Nicht nur die zuvor erwähnten Erfassungsstrukturen können so ausgestaltet werden, dass Eigenschaften der Erfassungsstrukturen bezüglich mehrerer insbesondere geradlinig verlaufender Auswertungsrichtungen ausgewertet werden können. Z.B. kann die Auswertung zumindest in zwei senkrecht zueinander verlaufenden Auswertungsrichtungen bezogen auf die Erfassungsstruktur vorgenommen werden. Auf diese Weise wird nicht nur die Geschwindigkeitskomponente in einer Auswertungsrichtung, sondern in mehreren Auswertungsrichtungen bestimmt. Insbesondere ist es daher auch möglich, die Richtung der Geschwindigkeit zu ermitteln. Dazu müssen auch nicht die Auswertungsrichtungen vorher festgelegt sein. Vielmehr kann aus den Auswirkungen der Verschmierung auf die Richtung der Geschwindigkeit geschlossen werden, indem in dem Kamerabild die Richtung ermittelt wird, in der die Relativbewegung zu dem höchsten Grad der Verschmierung führt.

Wenn vorab bekannt ist, in welcher Richtung sich das bewegliche Teil bewegt, ist die zuvor beschriebene Richtungsauswertung nicht erforderlich. Dies ist z. B. bei einer so genannten Linearachse eines KMG oder einer Werkzeugmaschinen der Fall, entlang der ein Teil der Maschine geradlinig bewegt wird. Wenn allerdings auch die Richtung der Bewegung bzw. der Geschwindigkeit ermittelt werden soll, ist eine Erfassungsstruktur von Vorteil, die gleichartige Strukturmerkmale bezüglich einer Vielzahl von möglichen Auswertungsrichtungen aufweist. Gleichartige Strukturmerkmale sind nicht nur die oben beschriebenen Abstände von Kanten. Auf andere Beispiele wird noch eingegangen. Vorzugsweise weist die Struktur gleichartige Strukturmerkmale, insbesondere gleichartige geometrische Strukturmerkmale, bezüglich jeder theoretisch möglichen Richtung der Relativbewegung auf. Z.B. können daher Kanten der Struktur einen gebogenen und insbesondere kreisförmig gebogenen (z. B. konzentrischen) Verlauf haben. Die Auswertungsrichtungen verlaufen z. B. senkrecht zum Verlauf der Kante(n). Die Ermittlung der Bewegungsrichtung ist zu unterscheiden von der Ermittlung der Orientierung der Bewegung, d.h. der Orientierung der Bewegung (vorwärts oder rückwärts) entlang einem gegebenen oder möglichen Bewegungspfad. In einigen der hier beschriebenen Fälle kann die Orientierung nicht aus einem einzigen Kamerabild ermittelt werden. Eine Möglichkeit, die Orientierung zu ermitteln, besteht in dem Vergleich zwischen Kamerabildern der Erfassungsstruktur, die zu verschiedenen Zeitpunkten aufgenommen wurden. Mit einer Variante des Verfahrens kann bereits durch Auswertung eines einzigen Kamerabildes die Orientierung ermittelt werden. Dies setzt voraus, dass das Kamerabild Bildwerte enthält, die durch Auswertung (hinsichtlich der Dauer und/oder des Beginns bzw. Endes) unterschiedlicher Zeitintervalle gewonnen wurden. Darauf wird noch näher eingegangen.

Alternativ oder zusätzlich zu zumindest einer Kante kann die Erfassungsstruktur zumindest einen Bereich aufweisen, in dem sich die Helligkeit, Farbe und/oder Reflektivität für Strahlung kontinuierlich und somit nicht sprunghaft wie bei einer Kante verändert, sondern kontinuierlich zunimmt oder abnimmt. Die Veränderung ist insbesondere auf eine gerade virtuelle oder tatsächliche Linie der Struktur bezogen, die eine Auswertungsrichtung sein kann. Vorzugsweise weist die Erfassungsstruktur nicht nur in einer geraden Richtung, sondern in zumindest einer weiteren geraden Richtung, die quer zu der ersten geraden Richtung verläuft, eine solche kontinuierliche Veränderung auf. Zum Beispiel kann sich in einem kreisförmigen Bereich entlang von verschiedenen Radiuslinien des Kreises die Helligkeit, Farbe und/oder Reflektivität für Strahlung ändern. Insbesondere kann die Bewegung einer solchen Erfassungsstruktur mit zumindest einem kontinuierlichen Übergang mittels mathematischer Faltung der Bildwerte-Verteilung des Kamerabildes ausgewertet werden.

Ferner wird eine Erfassungsstruktur vorgeschlagen, die kreisförmige Strukturen, insbesondere konzentrische Strukturen, aufweist, die periodische Strukturelemente mit verschiedenen Perioden, das heißt im Frequenzraum mit verschiedenen Frequenzen hoher Amplitude, aufweist. Insbesondere eine solche Struktur, jedoch auch andere kreisförmige Strukturen, ermöglichen die Ermittlung der Geschwindigkeit bezüglich verschiedener Richtungen, bezüglich der die Geschwindigkeit bzw. Komponenten der Geschwindigkeit ermittelt werden können und sollen. Wenn eine oder mehrere Richtungen der Bewegung festgelegt ist/sind und daher vorab bekannt ist/sind, kann die Erfassungsstruktur speziell für diese Richtung(en) konzipiert und hergestellt werden. Zum Beispiel erstrecken sich die Kantenverläufe senkrecht zu der festgelegten Bewegungsrichtung. Durch diese Beschränkung auf eine oder mehrere Bewegungsrichtungen kann die örtliche Auflösung bei der Ermittlung der Geschwindigkeit und/oder die Genauigkeit der Ermittlung erhöht werden.

Die Auswertung der Kantenverschmierung bietet (wie auch andere Ausgestaltungen des Verfahrens, die an anderer Stelle in dieser Beschreibung beschrieben werden) nicht nur die Möglichkeit, den Mittelwert des Betrages der Geschwindigkeit über das Belichtungsintervall zu ermitteln, sondern unter bestimmten Voraussetzungen auch den zeitlichen Verlauf der Geschwindigkeit, z.B. die mittlere Beschleunigung oder sogar den zeitlichen Verlauf der Beschleunigung über das Belichtungsintervall. Die Voraussetzung besteht darin, dass während der Belichtungszeit keine Umkehrung der Bewegung stattgefunden hat. Dem liegt die Erkenntnis zugrunde, dass Bewegungsverläufe mit einer solchen Umkehrung und Bewegungsverläufe ohne eine solche Umkehrung zumindest weitestgehend gleiche Verschmierungen bewirken können. Der Bewegungsverlauf über das Belichtungsintervall kann z.B. aus dem Verlauf der Bildwerte und z.B. Betrachtung der örtlichen Ableitung oder Ableitungen entlang einer Auswertungslinie quer zum Verlauf der Kante ermittelt werden. Aber auch z.B. die noch näher beschriebene Bestimmung und Auswertung eines Faltungskerns ermöglicht die Ermittlung des Bewegungsverlaufs.

Die Abbildung der Erfassungsstruktur durch die Kamera auf das Kamerabild kann als mathematische Faltung beschrieben werden. Insbesondere lässt sich eine Gleichung formulieren, durch die die Bildwerteverteilung des Kamerabildes über die Bildfläche dem Ergebnis einer Operation gleichgesetzt wird, bei der der sogenannte Faltungskern mit der Intensitätswerteverteilung der aufgenommenen Erfassungsstruktur verarbeitet wird. Dabei wird insbesondere nur derjenige Teil der Bildwerteverteilung des Kamerabildes betrachtet, der der erfassten Erfassungsstruktur entspricht. Als Intensitätsverteilung der (nicht von Verschmierung betroffenen) Erfassungsstruktur eignet sich insbesondere ein Referenzbild der Erfassungsstruktur, das z.B. von der Kamera aufgenommen wurde, wenn keine Relativbewegung zwischen Kamera und Erfassungsstruktur stattfindet. Das Referenzbild kann aber alternativ z.B. aus Planungsdaten der Erfassungsstruktur und/oder durch Computersimulation der Erfassungsstruktur erhalten werden. Wie später noch näher beschrieben wird, kann der Faltungskern ermittelt werden. Er enthält die Information über die Abbildung und damit Veränderung der Intensitätsverteilung der Erfassungsstruktur und damit auch die Information über die Geschwindigkeit der Relativbewegung.

Das zumindest eine Kamerabild und das zuvor und/oder im Folgenden erwähnte Referenzbild der Erfassungsstruktur sind insbesondere digitale Bilder, d.h. weisen mehrere Pixel auf. Dementsprechend handelt es sich bei der Kamera insbesondere um eine Digitalkamera. Das Referenzbild muss jedoch nicht in demselben Datenformat vorliegen und/oder verarbeitet werden wie das Kamerabild. Insbesondere können das Referenzbild und derjenige Bereich des Kamerabildes, in dem die Erfassungsstruktur abgebildet ist, als mathematische Funktionen aufgefasst werden, sodass insbesondere eine mathematische Faltung des Bereichs des Kamerabildes mit dem Referenzbild oder einer aus dem Referenzbild abgeleiteten Funktion ausführbar ist und vorzugsweise auch ausgeführt wird.

Im bevorzugten Fall sind das Kamerabild und/oder das Referenzbild zweidimensionale Bilder. Es kann daher insbesondere eine an sich bekannte Kamera mit einer zweidimensionalen Matrix von lichtempfindlichen Sensorelementen verwendet werden, die in Zeilen und Spalten angeordnet sind. Die Pixel des Kamerabildes sind in diesem Fall dementsprechend ebenfalls in Zeilen und Spalten angeordnet.

Insbesondere kann die Information über die tatsächliche Erscheinung der Erfassungsstruktur ein Referenzbild der Erfassungsstruktur aufweisen, wobei durch Auswerten von Unterschieden des Referenzbildes und des zumindest einen von der Kamera aufgenommenen Kamerabildes die Geschwindigkeit der Relativbewegung ermittelt wird. Durch Berücksichtigung des Referenzbildes kann die Geschwindigkeit einfacher, genauer und in kürzerer Zeit ermittelt werden. Die Auswertung der Unterschiede kann sich insbesondere auf einen Teilbereich des Kamerabildes beschränken, zum Beispiel auf den Teilbereich, in dem die Erfassungsstruktur erfasst ist. Wenn mit dem Kamerabild mehrere Erfassungsstrukturen erfasst sind, kann sich die Auswertung der Unterschiede auf die Teilbereiche beschränken, in denen jeweils eine der Erfassungsstrukturen erfasst ist.

Eine bevorzugte Möglichkeit, die Unterschiede des Kamerabildes zu dem Referenzbild auszuwerten und die Geschwindigkeit der Relativbewegung zu ermitteln, bietet die oben erwähnte mathematische Beschreibung der Faltung der Intensitätsverteilung der Erfassungsstruktur mit einem Faltungskern, die die der Erfassungsstruktur entsprechende Bildwerteverteilung im Kamerabild ergibt. Insbesondere bei Verwendung bestimmter Klassen von Erfassungsstrukturen, auf deren Eigenschaften noch näher eingegangen wird, lässt sich der Faltungskern und damit die Information über die Geschwindigkeit der Relativbewegung auf einfache Weise aus dem Kamerabild unter Verwendung des Referenzbildes ermitteln.

Insbesondere kann durch mathematische Faltung des Referenzbildes mit demjenigen Bereich des Kamerabildes, in dem die Erfassungsstruktur abgebildet ist, ein Faltungskern der Faltung ermittelt werden und aus dem Faltungskern die Geschwindigkeit der Relativbewegung ermittelt werden.

Auf einfache und anschauliche Weise gelingt die Ermittlung der Geschwindigkeit der Relativbewegung, wenn der Faltungskern als geometrische Struktur interpretiert wird, deren äußere Abmessungen den äußeren Abmessungen des Referenzbildes und den äußeren Abmessungen desjenigen Bereichs des Kamerabildes entsprechen, in dem die Erfassungsstruktur abgebildet ist. In diesem Fall kann die Geschwindigkeit der Relativbewegung aus zumindest einer geometrischen Eigenschaft einer Teilstruktur des Faltungskerns ermittelt werden. Insbesondere kann bei einer geradlinigen Bewegung der Betrag der Geschwindigkeit aus einer Länge einer Teilstruktur des Faltungskerns ermittelt werden. Bei zweidimensionalem Kamerabild und Referenzbild können Betrag und/oder Richtung der Geschwindigkeit aus der Geometrie einer Teilstruktur des Faltungskerns ermittelt werden. Dies gilt insbesondere für den einfachen Fall, dass sich die Erfassungsstruktur quer zur optischen Achse der Abbildung der Erfassungsstruktur durch die Kamera bewegt. Andernfalls ist aber eine solche Auswertung ebenfalls möglich, zum Beispiel wenn eine entsprechende geometrische Korrektur vorgenommen wird und/oder die geometrischen Eigenschaften der Anordnung von Kamera und Erfassungsstruktur berücksichtigt werden.

Als Erfassungsstruktur eignen sich bestimmte Klassen von Mustern besonders gut. Auf Muster mit Kanten wurde bereits eingegangen. Wenn der Faltungskern durch mathematische Faltung einer mathematischen Funktion ermittelt wird, die die Erfassungsstruktur als Funktion des Ortes (Ortsfunktion) beschreibt, findet insbesondere eine entsprechende Operation im Frequenzraum statt. Dies bedeutet, dass Eigenschaften der Erfassungsstruktur im Frequenzraum von Bedeutung sind. Die als Funktion des Ortes beschriebene Erfassungsstruktur kann insbesondere durch eine Fouriertransformation in den Frequenzraum transformiert werden.

Vorzugsweise hat eine Erfassungsstruktur im Frequenzraum daher die Eigenschaft, innerhalb eines Frequenzbereichs, der bei der Frequenz null beginnt, der die Frequenz null aber nicht mit einschließt und der bei einer vorgegebenen Maximalfrequenz endet, keine Nullstelle aufweist. Das heißt, dass der Funktionswert der Funktion im Frequenzraum, der auch als Amplitude bezeichnet werden kann, innerhalb des Frequenzbereichs größer als null ist. Die Maximalfrequenz ist/wird insbesondere so vorgegeben, dass sie nicht kleiner ist als die Nyquist-Frequenz der Kamera. Insbesondere ist die Maximalfrequenz gleich der Nyquist-Frequenz der Kamera oder größer als die Nyquist-Frequenz der Kamera, aber beträgt nicht mehr als das Doppelte der Nyquist-Frequenz der Kamera. Eine Erfassungsstruktur ohne Nullstellen im Frequenzraum hat den Vorteil, dass die Faltung der Erfassungsstruktur durch eine auf den Frequenzraum bezogene Operation gelingt und daher in einfacher Weise durchgeführt werden kann. Bei Nullstellen dagegen ist die Operation im Frequenzraum nicht definiert.

Bei einer Weiterbildung dieser Klasse von Erfassungsstrukturen, mit der die Faltung zuverlässig und genau durchführbar ist, ist der Funktionswert der in den Frequenzraum transformierten Ortsfunktion der Erfassungsstruktur in dem gesamten Frequenzbereich von null bis zu der Maximalfrequenz größer als ein vorgegebener Mindestwert. Insbesondere ist der vorgegebene Mindestwert größer als eine durch die Aufnahme des Kamerabildes und durch die Auswertung des Kamerabildes durch eine Auswertungseinrichtung der Maschine bewirkte statistische Schwankung (Rauschen) der Bildwerte. Allgemeiner formuliert ist der vorgegebene Mindestwert größer als eine durch die Aufzeichnung des Aufzeichnungsbildes und durch eine Ermittlung der Geschwindigkeit bewirkte statistische Schwankungsamplitude von Bildwerten des Aufzeichnungsbildes. Die Schwankungsamplitude entspricht daher insbesondere der statistischen Schwankungsamplitude derjenigen mit einem zusätzlichen Rauschen behafteten Erfassungsstruktur, die unter der theoretischen Annahme einer rauschfreien Kamerabild-Aufnahme und -Verarbeitung zu demselben rauschbehafteten Auswertungsergebnis führt wie die tatsächliche rauschbehaftete Aufnahme und Verarbeitung der Erfassungsstruktur. Durch Einhaltung des Mindestwertes kann daher eine durch statistische Schwankungen nicht oder nicht wesentlich beeinflusste Auswertung des Kamerabildes erreicht werden. Eine solche Erfassungsstruktur kann zum Beispiel unter Verwendung von Barker-Codes erzeugt werden.

Vorzugsweise ist der Funktionswert der in den Frequenzraum transformierten Ortsfunktion der Erfassungsstruktur in dem gesamten Frequenzbereich von null bis zu der Maximalfrequenz konstant. Eine derartige Erfassungsstruktur ist besonders einfach und mit geringem Rechenaufwand auszuwerten.

Der konstante Funktionswert in dem Frequenzbereich entspricht der Eigenschaft, dass die Faltung der Erfassungsstruktur mit sich selbst oder ihrer inversen Funktion eine Delta-Distribution im Ortsraum ergibt. Anders ausgedrückt ist eine bevorzugte Klasse von Erfassungsstrukturen daher durch die Eigenschaft definiert, dass sie eine perfekte Autokorrelation haben. Dies bedeutet, dass das Ergebnis der Faltung der Struktur mit ihrer inversen Struktur eine Struktur im Ortsraum ergibt, die an einer einzigen Position (insbesondere in einem zentralen örtlichen Bereich der Struktur) einen von den Werten an allen anderen Positionen im zentralen Bereich der Struktur verschiedenen Wert hat. Insbesondere ist dieser eine Wert ein hoher Wert, sodass er als Peak bezeichnet werden kann. Die Werte an allen anderen Positionen im zentralen Bereich der Ergebnisstruktur sind gleich groß, z.B. null oder können auf null normiert werden, d.h. die Werteverteilung ist mit Ausnahme des Peaks konstant. Wie noch näher ausgeführt wird, kann mit einer derartigen Erfassungsstruktur auf besonders einfache und rechenzeitsparende Weise der Faltungskern der Faltung ermittelt werden, die bei Anwendung des Faltungskerns auf die Intensitätsverteilung der Erfassungsstruktur das entsprechende Abbild durch die Kamera ergibt. Ebenfalls auf besonders einfache Weise kann aus diesem Faltungskern die Geschwindigkeit ermittelt werden.

Wenn z.B. Positionen des relativ zu der Kamera beweglichen Teils der Maschine bestimmt werden oder werden sollen, kann die ermittelte Geschwindigkeit zur Korrektur bei der Positionsbestimmung verwendet werden. Außer einer Verbesserung des Positionsbestimmungsergebnisses durch unmittelbare Auswertung des aufgenommenen Kamerabildes kann die ermittelte Geschwindigkeit auch unabhängig von der Frage, ob eine Positionsbestimmung stattfindet, zur Korrektur von Verzögerungseffekten genutzt werden. Verzögerungen treten insbesondere durch die Auswertung des Kamerabildes und die Dauer von weiteren Prozessen der Informationsverarbeitung, insbesondere bei der Bewegungssteuerung der Maschine, auf. Die Kenntnis der Geschwindigkeit der Bewegung lässt zumindest eine Abschätzung zu, wie weit sich die relativ zueinander beweglichen Teile während einer Verzögerungszeitspanne bewegt haben. Bei der Betrachtung einer Relativbewegung ist es unerheblich, welches oder welche der Teile sich in einem ortsfesten Koordinatensystem der Maschine tatsächlich bewegt hat/haben. Auch bei der Kalibrierung eines optischen Positionsbestimmungssystems, das insbesondere dieselbe Kamera oder dieselben Kameras und insbesondere dieselbe(n) Erfassungsstruktur(en) aufweist, kann die ermittelte Geschwindigkeit verwendet werden, zum Beispiel um die Effekte einer Bewegung während der Aufnahme eines Kamerabildes zum Zweck der Kalibrierung zu korrigieren.

Die erfindungsgemäße Bewegungsmessung hat den Vorteil, dass bereits aus einem einzigen Kamerabild nicht nur die Position eines beweglichen Teils der Maschine, sondern auch die Geschwindigkeit der Bewegung ermittelt werden kann und insbesondere auch ermittelt wird. Zum Zweck der Positionsbestimmung kann daher insbesondere ein Positionsbestimmungsfehler, der aufgrund der Bewegung entsteht, bereits durch Auswertung des aktuellen (das heißt des zuletzt ermittelten) Kamerabildes mit Ermittlung der Geschwindigkeit korrigiert werden. Es muss nicht abgewartet werden, bis das nächste Kamerabild aufgenommen ist.

Wie bereits kurz erwähnt, kann die Ermittlung zumindest einer kinematischen Größe, die die Relativbewegung beschreibt (zum Beispiel der Geschwindigkeit), zur Steuerung und/oder Regelung der Bewegung zumindest eines beweglichen Teils der Maschine genutzt werden. Dabei kann auch die durch Auswertung zumindest eines Kamerabildes ermittelte Orientierung der Bewegung berücksichtigt werden. Alternativ oder zusätzlich kann die zumindest eine kinematische Größe zur Ermittlung von Koordinaten eines Werkstücks oder anderen Messobjekts durch ein Koordinatenmessgerät genutzt werden, insbesondere durch Korrektur eines Ergebnisses der Positionsmessung, z.B. der Messung der Position eines Sensorträgers eines KMG. Entsprechendes gilt für die Bestimmung der Position eines Werkzeugträgers einer Werkzeugmaschine.

Im Folgenden wird auf die Problematik der Ermittlung des zeitlichen Verlaufs und insbesondere auch der Orientierung der Relativbewegung des ersten und des zweiten Teils der Maschine eingegangen. Insbesondere bei Verwendung der oben beschriebenen Erfassungsstrukturen mit zumindest einer Kante, aber auch bei anderen in dieser Beschreibung beschriebenen Erfassungsstrukturen ist es bereits durch Auswertung eines einzigen Aufzeichnungsbildes der Kamera möglich, die Bewegungsgeschwindigkeit zu ermitteln, nicht aber ohne Weiteres auch den zeitlichen Bewegungsverlauf und der Orientierung. In vielen Fällen verursacht die Bewegung dieselbe durch das Aufzeichnungsbild aufgezeichnete Veränderung der tatsächlichen Erscheinung der Erfassungsstruktur, unabhängig davon, ob die Bewegung in der einen Richtung oder in der entgegengesetzten Richtung stattfindet. Dies erschwert auch die Ermittlung des zeitlichen Bewegungsverlaufs.

Es soll zumindest eine Lösung angegeben werden, die die Ermittlung der Orientierung der Bewegung und auch des zeitlichen Bewegungsverlaufs insbesondere aus einem einzigen Aufzeichnungsbild ermöglicht.

Bevor auf die Lösung oder Lösungen eingegangen wird, soll darauf hingewiesen werden, dass die Ermittlung der Orientierung der Bewegung auch ohne eine Ermittlung der Geschwindigkeit der Bewegung ausgeführt werden kann.

Dies betrifft sowohl das Bewegungsmesssystem einer Maschine, als auch eine Maschine mit einem Bewegungsmesssystem, ein Verfahren zum Betreiben eines Bewegungsmesssystems einer Maschine und ein Verfahren zum Betreiben einer Maschine mit einem Bewegungsmesssystem.

Z.B. ist die Ermittlung der Orientierung auch dann von Vorteil, wenn weitere Information über die Bewegung auf andere Weise als durch Auswertung zumindest eines Aufzeichnungsbildes erhalten wird. Dies schließt jedoch nicht aus, dass auch die Auswertung zumindest eines Aufzeichnungsbildes einer Erfassungsstruktur zusätzliche Information über die Bewegung enthält und diese Information gewonnen wird. Ein Fall, in dem eine Auswertung eines Kamerabildes zur Ermittlung der Geschwindigkeit oder Position der relativ zueinander beweglichen Teile der Maschine nicht zwingend erforderlich ist, betrifft konventionelle Maßstäbe mit Maßstabssensoren, wie sie bei KMG üblich sind. Insbesondere können die Maßstabssensoren Impulse aus der Erkennung von Markierungen (z.B. strichartigen Markierungen) an den Maßstäben gewinnen. Da die Abstände dieser Markierungen bekannt sind, kann aus den Impulsen und dem zeitlichen Verlauf der Impulse Information über die Position und die Geschwindigkeit der Bewegung gewonnen werden. Allein aus dem zeitlichen Verlauf der Impulse kann jedoch nicht auf die Orientierung der Bewegung geschlossen werden. Insbesondere in diesem Fall kann die Orientierung der Relativbewegung der beiden Maschinenteile aus zumindest einem Aufzeichnungsbild der Erfassungsstruktur ermittelt werden.

Die Lösung, die die Ermittlung der Orientierung der Bewegung und auch des zeitlichen Bewegungsverlaufs bereits aus einem einzigen Aufzeichnungsbild ermöglicht, beruht auf einer zeitlichen Variation bei der Übertragung und/oder Erfassung der von der Erfassungsstruktur ausgehenden Strahlung. Dadurch wird zusätzliche Information über die Relativbewegung der Maschinenteile gewonnen. Die zeitliche Variation kann grundsätzlich vor, während und/oder nach der Übertragung der Strahlung von der Erfassungsstruktur zu der zumindest einen Kamera sowie bei der Erfassung der Strahlung durch die zumindest eine Kamera stattfinden. Um die zusätzliche Information zu nutzen wird die Kenntnis über die zeitliche Variation bei der Auswertung des zumindest einen Aufzeichnungsbildes verwendet.

Die Feststellung der Orientierung oder die Kenntnis über die Orientierung der Bewegung ermöglicht es, eine Uneindeutigkeit bei der Auswertung zu eliminieren. Dadurch wird es möglich, den zeitlichen Bewegungsverlauf zu ermitteln. Auch wenn dies bevorzugt wird, ist die Erfindung nicht darauf beschränkt, aus dem jeweiligen Aufzeichnungsbild oder der jeweiligen Kombination von Aufzeichnungsbildern sowohl die Orientierung als auch den zeitlichen Verlauf der Bewegung zu ermitteln. Zum Beispiel kann die Kenntnis über die Orientierung der Bewegung auf andere Weise erhalten werden und ist auch, wie oben bereits erläutert, allein die Ermittlung der Orientierung von Vorteil.

Gemäß einem ersten Vorschlag für die Ermittlung der Orientierung und/oder des zeitlichen Verlaufs der Bewegung wird die während des Belichtungszeitintervalls von der Erfassungsstruktur zu der Kamera übertragene Strahlung während des Belichtungszeitintervalls variiert, d.h. die örtliche, von der Erfassungsstruktur ausgehende Strahlungsverteilung ändert sich im Laufe der Zeit während des Belichtungszeitintervalls. Dies führt daher zu einer zeitlichen Variation bei der Übertragung der Strahlung. Alle Sensorelemente der Kamera-Sensormatrix können dasselbe Belichtungszeitintervall haben, d.h. das Belichtungszeitintervall beginnt für alle Sensorelemente zum gleichen Zeitpunkt und endet auch zum gleichen Zeitpunkt. Dies ist bei handelsüblichen Kameras der Fall. Alternativ können die einzelnen Sensorelemente der Kamera, die jeweils einen örtlichen Bereich der Strahlungsverteilung erfassen, aber unterschiedliche Belichtungszeitintervalle haben.

Die sich zeitlich verändernde örtliche Strahlungsverteilung wirkt sich in unterschiedlicher Weise auf verschiedene Sensorelemente der Kamera aus und daher ist die während des Belichtungszeitintervalls von den verschiedenen Sensorelementen erfasste Strahlungsmenge (die empfangene Strahlungsleistung integriert über das Belichtungszeitintervall) selbst bei konstanter Bewegungsgeschwindigkeit verschieden. Allgemeiner formuliert erfasst ein erstes der Sensorelemente der Kamera einen bestimmten örtlichen Bereich der Erfassungsstruktur während des Belichtungszeitintervalls aufgrund der sich zeitlich verändernden örtlichen Strahlungsverteilung auf andere Weise als ein zweites Sensorelement der Kamera, das während des Belichtungszeitintervalls denselben örtlichen Bereich der Erfassungsstruktur, allerdings zu einem anderen Teilzeitraum des Belichtungszeitintervalls, erfasst. Die Kenntnis der örtlichen Strahlungsverteilung als Funktion der Zeit ermöglicht dabei die Ermittlung des zeitlichen Bewegungsverlaufs und/oder der Orientierung der Relativbewegung der beiden Teile der Maschine.

Der zeitliche Verlauf der Bewegung kann auf unterschiedliche Weise beschrieben werden.

Zum Beispiel kann er durch den Weg, die Geschwindigkeit oder durch die Beschleunigung der Bewegung jeweils als Funktion der Zeit beschrieben werden. Bereits aus einem einzigen Aufzeichnungsbild kann der zeitliche Verlauf der Bewegung während des der Erfassung des Aufzeichnungsbildes entsprechenden Belichtungszeitintervalls ermittelt werden. Optional können aus mehreren aufeinanderfolgenden Aufzeichnungsbildern jeweils die Verläufe der Bewegung ermittelt werden und daraus ein zeitlicher Verlauf der Bewegung über einen längeren Zeitraum ermittelt werden.

Wie in der Figurenbeschreibung, auch unter Bezugnahme auf mathematische Gleichungen, noch näher erläutert wird bestehen bei der Auswertung eines einzelnen Aufzeichnungsbildes zwei Uneindeutigkeiten. Die eine der Uneindeutigkeiten kann durch die hier beschriebene bekannte zeitliche Variation bei der Übertragung und Erfassung der von der Erfassungsstruktur ausgehenden Strahlung, zum Beispiel der örtlichen Strahlungsverteilung (siehe oben) und/oder der Kameraeigenschaften (siehe unten), beseitigt werden. Die andere der Uneindeutigkeiten besteht in der Orientierung der Bewegung. Bei der Auswertung des Aufzeichnungsbildes kann insbesondere zunächst die Kenntnis über die zeitliche Variation verwendet werden und dann geprüft werden, welche der beiden möglichen Orientierungen der Bewegung plausibler ist und/oder zu einem plausiblen Ergebnis für den zeitlichen Verlauf der Bewegung führt.

Insbesondere kann die Verteilung der Bildwerte im Aufzeichnungsbild mathematisch als Faltung beschrieben werden und kann ein Faltungskern der Faltung ermittelt werden, wobei der Faltungskern durch die bekannte zeitliche Variation und durch den zeitlichen Verlauf der Bewegung bestimmt ist. Mit Ausnahme der Orientierung ist der Faltungskern durch diese beiden Funktionen der Zeit eindeutig bestimmt. Unter Berücksichtigung der Kenntnis über die zeitliche Variation und durch Entscheidung, welche Orientierung der Bewegung zutrifft, kann der zeitliche Verlauf der Bewegung ermittelt werden.

Eine weitere Uneindeutigkeit entsteht, wenn die Geschwindigkeit während des Belichtungszeitintervalls null wird und insbesondere wenn sich die Richtung der Bewegung während des Belichtungszeitintervalls umkehrt. Dem kann mit entsprechend kurzer Dauer des Belichtungszeitintervalls begegnet werden. Alternativ oder zusätzlich kann der Informationsgehalt in dem zumindest einen Aufzeichnungsbild erhöht werden.

Es gibt verschiedene Möglichkeiten, die Strahlungsverteilung, die während des Belichtungszeitintervalls von der Erfassungsstruktur ausgeht und von der Sensormatrix der Kamera erfassbar ist/wird, im Laufe des Belichtungszeitintervalls zu verändern. Eine erste Möglichkeit der zeitlichen Veränderung der örtlichen Strahlungsverteilung ist die Veränderung der Strahlungsintensität, d.h. der Strahlungsflussdichte. Eine zweite Möglichkeit ist die Veränderung der spektralen Verteilung der Strahlung. Noch eine weitere Möglichkeit ist die Veränderung der Polarisation der Strahlung. Die Möglichkeiten können in beliebiger Weise miteinander kombiniert werden. Es ist z.B. aber auch möglich, dass die Gesamtintensität der Strahlung, die von jedem örtlichen Bereich der Erfassungsstruktur ausgeht, während des gesamten Belichtungszeitintervalls konstant bleibt, die Spektralverteilung und/oder die Polarisation aber im Lauf der Zeit zumindest für Teilbereiche der Erfassungsstruktur verändert wird. Z.B. können sich die im grünen, roten und blauen Spektralbereich liegenden spektralen Anteile während des Belichtungszeitintervalls ändern, beispielsweise gegenläufig ändern. Z.B. kann daher die Strahlungsintensität in einem ersten Spektralbereich zunehmen, während die Strahlungsintensität in einem zweiten Spektralbereich abnimmt und umgekehrt. Optional kann währenddessen die Strahlungsintensität in einem dritten Spektralbereich konstant bleiben. Dies ermöglicht, den konstant bleibenden Spektralbereich als Referenz zu verwenden, d.h. alle Sensorelemente, die diesen Spektralbereich über gleich lange Teil-Zeitintervalle des Belichtungszeitintervalls erfassen, empfangen auch die gleiche Strahlungsmenge in diesem Spektralbereich. Ein Sensorelement besteht üblicherweise aus mehreren Sub-Sensorelementen, die in verschiedenen Spektralbereichen (z.B. Rot, Grün und Blau) strahlungsempfindlich sind. Wenn z.B. zwei verschiedene Sensorelemente im grünen Spektralbereich die gleiche Strahlungsmenge während des Belichtungszeitintervalls empfangen haben, nicht aber im blauen und roten Spektralbereich, erlaubt dies bei Kenntnis der zeitlichen Veränderung der Strahlungsverteilung, auf die Orientierung der Bewegung zu schließen.

Sowohl bezüglich der Variation der Intensität der Spektralanteile als auch bezüglich der Gesamtintensität über den gesamten Spektralbereich der Strahlung kann die Intensität nicht nur während des gesamten Belichtungszeitintervalls monoton ansteigend oder alternativ monoton abfallend variiert werden, sondern ferner alternativ kann die Intensität zumindest ein Maximum und/oder zumindest ein Minimum durchschreiten. Insbesondere kann die Intensität periodisch variiert werden, z.B. mit sinusförmigem Intensitätsverlauf über die Zeit.

Bevorzugt wird eine sinusförmige Variation der Intensität verschiedener Spektralanteile bei zumindest drei verschiedenen Frequenzen der Strahlung, z.B. je einer Frequenz im roten, grünen und blauen Spektralbereich. Im Unterschied zu dem oben bereits erwähnten Ausführungsbeispiel findet in diesem Fall auch eine Variation der Intensität im grünen Spektralbereich statt. In der Praxis können z.B. rote, grüne und blaue Leuchtdioden verwendet werden, um die von der Erfassungsstruktur ausgehende Strahlung mit sich im Laufe der Zeit verändernder Intensität zu erzeugen. Leuchtdioden, nicht nur in dieser Kombination von drei Farben, können auf einfache Weise angesteuert werden, um den gewünschten zeitlichen Verlauf der Intensität zu erzeugen.

Die zumindest drei Spektralanteile mit sinusförmigem zeitlichem Verlauf der Intensität liegen insbesondere einen schmalen Spektralbereich. Eine Mehrzahl oder alle der zeitlichen Verläufe der Intensität können dieselbe Frequenz der Intensitätsänderung haben. Dabei sind die Spektralanteile nicht auf den sichtbaren Spektralbereich beschränkt. Vielmehr kommen insbesondere auch Strahlungsanteile im Infrarotbereich und bei Beachtung der Arbeitsschutzvorschriften auch im Ultraviolettbereich infrage.

Die zumindest drei sinusförmigen Verläufe der Strahlungsintensität in den zumindest drei Frequenzbereichen weisen jeweils paarweise betrachtet eine Phasenverschiebung auf, d.h. das Maximum der Intensität wird zu verschiedenen Zeitpunkten erreicht. Auch wenn dies bevorzugt wird, muss die Frequenz der Intensitätsänderung im Lauf der Zeit nicht bei allen zumindest drei sinusförmigen Verläufen gleich sein. Bevorzugt wird bei genau drei sinusförmigen Verläufen, dass die Frequenz der Intensitätsänderung gleich ist und die Phasenverschiebung zwischen jedem Paar von sinusförmigen Verläufen ein Drittel der Periode beträgt.

Die Verwendung von zumindest drei sinusförmigen Intensitätsverläufen in verschiedenen Spektralbereichen hat den Vorteil, dass die Orientierung der Relativbewegung der beiden Maschinenteile eindeutig jedenfalls in allen Fällen ermittelbar ist, in denen während des Belichtungszeitintervalls keine Umkehr der Bewegung vorkommt.

Alternativ zu einem sinusförmigem Intensitätsverlauf kann die Intensität in der Art einer wiederholten zufälligen sprungartigen Veränderung (im Folgenden: pseudozufällig) im Lauf der Zeit variiert werden.

Bei einer pseudozufälligen Variation kommen die verschiedenen Intensitätsniveaus der Strahlung ähnlich wie bei einer Zufallsverteilung verteilt vor, jedoch ist die Variation vorgegeben und bekannt. Denkbar wäre es, die Veränderung der Intensität tatsächlich zufällig vorzunehmen. Dies erhöht jedoch den Aufwand, die tatsächlich stattfindende Variation der Intensität festzustellen und bei der Auswertung zu berücksichtigen. Auch ergeben sich bei einer tatsächlich zufälligen Variation mit einer gewissen Wahrscheinlichkeit Variationen, die wenig Information für die Ermittlung der Orientierung enthalten.

Die pseudozufällige Variation der Intensität kann mit einem Code verglichen werden, der der zeitlichen Folge von Intensitätsniveaus entspricht. Anders als bei einer tatsächlich zufälligen Variation der Intensitätsniveaus kann vorgegeben werden, dass jeder Intensitätssprung von einem Niveau auf ein folgendes Niveau oder zumindest einer von mehreren aufeinanderfolgenden Intensitätssprüngen eine Mindest-Sprunghöhe (nach unten oder oben) haben muss.

Unabhängig von der Art der Variation der Intensität wird es bevorzugt, dass die Strahlungsmenge, die maximal auf irgendein Sensorelement der Kamera-Sensormatrix während des Belichtungszeitintervalls auftrifft, auf eine Sättigungsmenge der Sensorelemente abgestimmt ist. Unter der Sättigung versteht man, dass das Sensorsignal ab dem Erreichen einer Sättigungsmenge von Strahlung nicht mehr oder nicht mehr in geeigneter Weise die über die Sättigungsmenge hinausgehende empfangene Strahlungsmenge wiedergibt.

Die Beachtung der Sättigungsmenge ermöglicht es, insbesondere am Anfang oder am Ende des Belichtungszeitintervalls während eines kurzen Teilzeitraums einen im Verhältnis zu der Länge des Teilzeitraums hohen Anteil der Sättigungsmenge von der Erfassungsstruktur auszustrahlen (zu emittieren und/oder zu reflektieren). Z.B. kann während des ersten Prozents des Integrationszeitraums eine Strahlungsmenge im Bereich von 10 % bis 20 % der Sättigungsmenge, z.B. 15 % der Sättigungsmenge, ausgestrahlt werden. Im weiteren Verlauf des Belichtungszeitintervalls findet daher ein entsprechend schneller Abfall der Intensität statt, sodass die Sättigungsmenge nicht erreicht oder nicht überschritten werden kann. Sensorelemente, die eine bestimmte Strahlungsmenge während des Belichtungszeitintervalls empfangen haben, müssen den Bereich der Erfassungsstruktur, von dem die anfangs hohe Strahlungsmenge ausgestrahlt wurde, daher am Anfang des Belichtungszeitraums erfasst haben. Bereits diese Information gibt eindeutige Hinweise auf die Orientierung der Bewegung. Nicht nur in Bezug auf das in diesem Absatz beschriebene Ausführungsbeispiel verdeutlicht dies, dass jedenfalls bei einer Bewegung, die sich während des Belichtungszeitraums nicht umkehrt, die Orientierung der Bewegung auf einfache Weise eindeutig ermitteln lässt.

Zuvor wurde ein Beispiel für eine stark variierende Intensität beschrieben, d.h. die erste zeitliche Ableitung der Intensität der Strahlung ist groß. Wie erwähnt führt dies dazu, dass ein verhältnismäßig kleiner Anteil der Sensorelemente eine große Strahlungsmenge während des Belichtungszeitintervalls empfängt und daher auf einfache Weise auf die Orientierung der Bewegung und auch den zeitlichen Verlauf der Bewegung geschlossen werden kann. Dies ist nicht darauf beschränkt, dass die von der Erfassungsstruktur ausgehende Strahlungsmenge in einem bestimmten Teilzeitraum (z.B. am Anfang oder Ende) des Belichtungszeitintervalls besonders groß ist. Solange die Information darüber, in welchem Teilzeitraum die Strahlungsmenge besonders groß ist, bei der Auswertung des Aufnahmebildes berücksichtigt wird, lassen sich die Orientierung und auch der zeitliche Verlauf der Bewegung auf einfache Weise ermitteln. Allerdings ist bei einer bevorzugten Ausführungsform zu beachten, dass die Änderung der Strahlungsintensität jedenfalls nicht in allen spektralen Bereichen zeitlich symmetrisch zum Mittelpunkt des Belichtungszeitintervalls verläuft. Ohne weitere Maßnahmen, die noch ergriffen werden können, lässt sich bei einer solchen symmetrischen Variation der Strahlungsintensität die Orientierung nicht eindeutig ermitteln.

Oben wurde bereits erwähnt, dass die Strahlungsintensität periodisch variiert werden kann. Bei einer Weiterbildung dieses Ansatzes mit einer Vielzahl von zeitlich aufeinanderfolgenden Intensitätsmaxima und Intensitätsminima während jedes Belichtungszeitintervalls wird die Frequenz der Intensitätsmaxima oder Intensitätsminima variiert. Allerdings ist die Frequenz abgestimmt auf die erwartete Bewegungsgeschwindigkeit nicht so hoch, dass sich die Strahlungsintensität auf alle Sensorelemente entlang der Bewegungsrichtung der Bewegung gleich auswirkt. Vielmehr wird es bevorzugt, dass die Frequenz einen Maximalwert hat, der nicht überschritten wird und es erlaubt, die Auswirkungen bezüglich des Empfangs von Strahlungsmengen auf die verschiedenen Sensorelemente, die auf die Variation der Frequenz zurückzuführen ist, zu unterscheiden und daraus Schlussfolgerungen auf die Orientierung und/oder den zeitlichen Verlauf der Bewegung zu ziehen.

Eine weitere Möglichkeit, die Orientierung und/oder den zeitlichen Verlauf der Bewegung durch zeitliche Variation zu ermitteln, besteht in einer zeitlichen Variation auf der Empfangsseite der Strahlung, d.h. der Kamera. Einzelne Ausführungsbeispiele wurden bereits angedeutet. So ist es z.B. möglich, dass nicht die Belichtungszeitintervalle sämtlicher Sensorelemente der Sensormatrix der Kamera zum gleichen Zeitpunkt beginnen und zum gleichen Zeitpunkt enden. Erreicht wird dies insbesondere dadurch, dass die Werte der aufintegrierten Strahlungsmengen der einzelnen Sensorelemente nacheinander ausgelesen und mit dem Auslesen wieder auf null gesetzt werden. Dabei ist es optional möglich, das Auslesen der Strahlungsmengen gleichzeitig für mehrere der Sensorelemente vorzunehmen, sodass die Sensorelemente mehreren Auslesefolgen zugeordnet sind. Entsprechend den Auslesefolgen werden die den Auslesefolgen zugeordneten Sensorelemente nacheinander ausgelesen. Alternativ können mehrere Auslesefolgen benachbarter Sensorelemente in der Sensormatrix vorhanden sein, wobei jedoch immer nur ein Sensorelement der gesamten Sensormatrix zu einem Zeitpunkt ausgelesen wird. Z.B. bei zwei Auslesefolgen kann daher immer abwechselnd eines der Sensorelemente der beiden Auslesefolgen ausgelesen werden.

In jedem Fall wird die Kenntnis über die unterschiedlichen Belichtungszeitintervalle der einzelnen Sensorelemente bei der Auswertung und der Ermittlung der Orientierung und/oder des zeitlichen Verlaufs der Bewegung berücksichtigt. Ein vollständiges Aufzeichnungsbild der Kamera, das Werte von sämtlichen Sensorelementen enthält, ist daher nicht wie üblich eine auf ein einziges Belichtungszeitintervall begrenzte Momentaufnahme, sondern enthält Informationen über einen längeren zeitlichen Verlauf der Erfassung der Erfassungsstruktur. Hat z.B. ein Sensorelement, an dem sich ein bestimmter Teil der Erfassungsstruktur vorbeibewegt hat, diesen Teil der Erfassungsstruktur im Gegensatz zu seinen Nachbar-Sensorelementen nicht oder mit geringerer Strahlungsmenge erfasst, dann lassen sich daraus Informationen über die Orientierung und/oder den zeitlichen Verlauf der Bewegung gewinnen. Allgemein formuliert kann unter Berücksichtigung der Kenntnis über die Belichtungszeitintervalle der einzelnen Sensorelemente auf einfache Weise ermittelt werden, ob die Bewegung mit der einen Orientierung oder mit der entgegengesetzten Orientierung dem Aufzeichnungsbild der Kamera entspricht, und/oder der zeitlichen Verlauf ermittelt werden.

Alternativ oder zusätzlich zu der Verwendung unterschiedlicher Belichtungszeitintervalle können andere Eigenschaften der Kamera zeitlich variiert werden. Dies betrifft insbesondere die Beeinflussung der Strahlungsdurchlässigkeit der Strahlungsoptik der Kamera, z.B. unter Verwendung von Blenden und/oder Filtern mit zeitlich variierenden Eigenschaften (z. B. durch Bewegung oder Steuerung der Blende und/oder des Filters), als auch die Empfindlichkeit der Sensorelemente für die auftreffende Strahlung. Bei geringerer Empfindlichkeit führt die gleiche empfangene Strahlungsmenge zu einem kleineren Wert des Sensorsignals des Sensorelements und umgekehrt. Wird z.B. die Empfindlichkeit von einem hohen Wert zu Beginn des Belichtungszeitintervalls zunächst schnell abfallend und dann im weiteren Verlauf des Belichtungszeitintervalls langsamer abfallend auf einen niedrigen Wert der Empfindlichkeit verringert, dann entspricht dies dem oben beschriebenen Ausführungsbeispiel mit hoher Strahlungsintensität zu Beginn und geringer Strahlungsintensität am Ende des Belichtungszeitintervalls.

Die zeitliche Variation von Eigenschaften der Kamera, einschließlich der Verwendung unterschiedlicher Belichtungszeitintervalle der einzelnen Sensorelemente, kann mit der oben beschriebenen zeitlichen Variation der örtlichen Intensitätsverteilung von Strahlung, die von der Erfassungsstruktur ausgeht, verglichen werden und führt teilweise zu einander entsprechenden Vorgehensweisen bei der Ermittlung der Orientierung und/oder des zeitlichen Verlaufs der Bewegung. Alle genannten Vorgehensweisen der zeitlichen Variation ermöglichen es insbesondere einzeln oder in Kombination miteinander, die Orientierung und/oder den zeitlichen Verlauf der Bewegung aus einem einzigen Aufzeichnungsbild zu ermitteln.

Ferner ist es möglich, nicht lediglich eine Kamera, sondern mehrere Kameras zu verwenden, z.B. Kameras mit Sensorelementen, die im Vergleich der Kameras in unterschiedlichen Spektralbereichen empfindlich sind. Möglich ist auch der Einsatz einer Kamera, entweder als einzige Kamera oder in Kombination mit anderen Kameras, wobei die Sensormatrix der Kamera Sensorelemente aufweist, deren spektrale Empfindlichkeit sich von der spektralen Empfindlichkeit anderer Sensorelemente unterscheidet. Z.B. können die verschiedenen Maßnahmen der zeitlichen Variation miteinander kombiniert werden, indem das Intensitätsniveau der von der Erfassungsstruktur ausgehenden Strahlung pseudozufällig variiert wird, während zumindest eine Eigenschaft zumindest einer Kamera, die ein Aufzeichnungsbild der Erfassungsstruktur erzeugt, in anderer Weise als das Intensitätsniveau variiert wird.

Eine weitere Möglichkeit, die örtliche Strahlungsverteilung im Lauf der Zeit während des Belichtungszeitintervalls zu verändern, besteht darin, die Polarisation der von der Erfassungsstruktur zu der Kamera übertragenen Strahlung im Laufe der Zeit zu ändern. Z.B. kann die Erfassungsstruktur eine Lichtquelle und/oder ein Display aufweisen, wobei in Richtung der Kamera ein steuerbarer Polarisationsfilter der Erfassungsstruktur angeordnet ist, welcher es erlaubt, die Polarisation, der von ihm in Richtung der Kamera ausgehenden Strahlung örtlich verschieden und zeitabhängig zu steuern.

Die Kamera oder zumindest eine der Kameras kann Sensorelemente aufweisen, die selektiv für Strahlung einer bestimmten Polarisationsrichtung empfindlich sind. In analoger Weise wie bei üblichen Sensormatrizen das einzelne Sensorelement mehrere für unterschiedliche Spektralbereiche empfindliche Sub-Sensorelemente aufweist, können die Sensorelemente jeweils mehrere (jeweils zumindest zwei) Sub-Sensorelemente aufweisen, die für Strahlung unterschiedlicher Polarisationsrichtungen empfindlich sind. Auf diese Weise lässt sich in analoger Weise, wie oben für die unterschiedliche zeitliche Variation der Intensitäten in verschiedenen Spektralbereichen der auf die Kamera einfallenden Strahlung, die Polarisationsrichtung variieren und die gleiche Information bezüglich der Bewegungserkennung und insbesondere bezüglich der Ermittlung der Orientierung und/oder des zeitlichen Verlaufs der Bewegung gewinnen.

In der Figurenbeschreibung wird noch näher darauf eingegangen, dass die Erfassungsstruktur zumindest einen Marker aufweisen kann. Die Figurenbeschreibung konzentriert sich dabei auf konkrete Ausführungsbeispiele. Es ist aber generell möglich, dass die Erfassungsstruktur zumindest einen Marker aufweist oder aus zumindest einem Marker besteht. Insbesondere kann unter einem Marker eine Oberfläche mit in sich geschlossen umlaufender Außen-Umfangslinie (d.h. Außenrand, z.B. Kreis oder Rechtecklinie) verstanden werden, wobei sich die Strahlungseigenschaften (Emissionsgrad und/oder Reflexionsgrad) an der Umfangslinie sprungartig ändern. Insbesondere können die Strahlungseigenschaften der durch die Umfangslinie beranderten Oberfläche konstant sein. Die Umfangslinie des Markers stellt somit eine Kante im Sinne der obigen Beschreibung dar.

Insbesondere kann die Erfassungsstruktur zumindest einen kreisförmigen Marker aufweisen. Dies hat den Vorteil, dass die Relativbewegung der Erfassungsstruktur und der Kamera in jeder Richtung entlang der Markeroberfläche dazu führt, dass die Kreislinie am Außenumfang des Markers senkrecht, d.h. in Richtung eines Radius der Kreislinie, von einer Projektion des Bewegungspfad der Relativbewegung auf die Markeroberfläche gekreuzt wird. Es gibt daher in jedem dieser Fälle benachbarte Sensorelemente der Kamera-Sensormatrix, die während des Ablaufs der Relativbewegung einem sprungartigen Anstieg oder Abfall der empfangenen Strahlungsintensität ausgesetzt sind, wie es oben in Bezug auf Kanten beschrieben wurde. Insbesondere wenn nur bestimmte Bewegungsrichtungen vorkommen können, ist auch die Verwendung von anders geformten als kreisförmigen Markern von Vorteil.

Im Folgenden wird eine Weiterbildung der Bewegungserkennung und insbesondere der Ermittlung der Orientierung und/oder des zeitlichen Verlaufs der Bewegung beschrieben. Dieser Weiterbildung liegt die Problematik zugrunde, dass unterschiedliche örtliche Intensitätsverteilungen und/oder unterschiedliche zeitliche Variationen der örtlichen Intensitätsverteilung und/oder der Kameraeigenschaften zu unterschiedlich guten Ergebnissen führen. Dies hängt auch von der Art der Relativbewegung des ersten und des zweiten Maschinenteils ab. Insbesondere kann die Bewegung schneller oder langsamer sein und eine größere oder kleinere Dynamik aufweisen, d.h. die Beschleunigung und/oder der Ruck der Bewegung können unterschiedlich groß sein.

Zur Lösung dieses Problems wird vorgeschlagen, eine zeitliche Folge von Aufzeichnungsbildern durch die Kamera, durch eine Mehrzahl von Kameras oder jeweils durch eine von mehreren Kameras aufzuzeichnen und auszuwerten. Dabei wird zumindest ein erstes Aufzeichnungsbild der zeitlichen Folge ausgewertet und es wird abhängig vom Ergebnis der Auswertung zumindest einen ersten Aufzeichnungsbildes die zeitliche Variation der örtlichen Strahlungsverteilung und/oder die zeitliche Variation der Kameraeigenschaften verändert. Dementsprechend wird ein zweites, nach der Auswertung des zumindest einen ersten Aufzeichnungsbildes aufgenommenes Aufzeichnungsbild Strahlung in einem Belichtungszeitintervall erfassen, in dem die zeitliche Variation der örtlichen Strahlungsverteilung und/oder die zeitliche Variation der Kameraeigenschaften bereits gegenüber dem Belichtungszeitintervall des ersten Aufzeichnungsbildes verändert ist.

Auf diese Weise ist es möglich, die zeitliche Variation an die Relativbewegung anzupassen. Insbesondere ist mit heutigen Mitteln der Steuerung von Strahlungsquellen, z.B. Displays und/oder Anordnungen von Leuchtdioden, eine Einstellung der zeitlichen Variation der örtlichen Strahlungsverteilung bei einer Frequenz der Aufnahme von Aufzeichnungsbildern im Bereich von bis über 1 kHz oder sogar über 1 MHz möglich. Während die von Displays ausgehende Strahlung z.B. im Bereich von einigen 100 Hz, beispielsweise im Bereich von 200 - 600 Hz variiert werden kann, kann die von Leuchtdioden ausgehende Strahlung auch bei deutlich höheren Frequenzen bis in den MHz-Bereich variiert werden. Aufgrund der Rechenleistung heutzutage zur Verfügung stehender Computer ist auch die Auswertung einzelner Aufzeichnungsbilder und die Steuerung veränderter zeitlicher Variation der örtlichen Strahlungsverteilung bei diesen Frequenzen möglich. Entsprechendes gilt auch für die zeitliche Variation der Kameraeigenschaften. Z.B. kann die Reihenfolge beim Auslesen der Integrationswerte der Sensorelemente auf einfache Weise geändert werden, auch wenn dies dazu führen kann, dass während eines Zeitraums zwischen der Aufnahme des ersten Aufzeichnungsbildes der Folge und des zweiten Aufzeichnungsbildes der Folge kein sinnvolles Aufzeichnungsbild erhalten werden kann, während die Reihenfolge des Auslesens umgestellt wird.

Alternativ oder zusätzlich kann nach Auswertung des zumindest einen ersten Aufzeichnungsbildes und vor der Aufzeichnung des zweiten Aufzeichnungsbildes die Dauer des Belichtungszeitintervalls verändert werden, z.B. wenn bei der Auswertung des zumindest einen ersten Aufzeichnungsbildes festgestellt wird, dass der Sättigungswert bei zumindest einem der Sensorelemente erreicht, überschritten oder annähernd erreicht ist, oder wenn festgestellt wird, dass der Sättigungswert bei allen Sensorelementen nicht annähernd erreicht ist, z.B. lediglich 10 % oder 20 % des Sättigungswertes erreicht werden. Alternativ oder zusätzlich zu der Veränderung der Dauer des Belichtungszeitintervalls kann die Intensität der Strahlung angepasst werden. Allgemein formuliert wird es bevorzugt, dass vorgegeben wird/ist, in welchem Bereich der Strahlungsmenge zwischen Null und dem Sättigungswert die Strahlungsmenge der Sensorelemente bei Aufzeichnung von Aufzeichnungsbildern liegen soll und/oder welche Bedingungen die Verteilung der von den Sensorelementen gelieferten Werte der Strahlungsmengen einhalten soll. Wenn die Vorgabe nicht erfüllt ist, beispielsweise der vorgegebene Bereich z.B. für eine vorgegebene Anzahl oder einen vorgegebenen Prozentsatz der Sensorelemente nicht eingehalten ist, wird die Strahlungsintensität und/oder die Dauer des Belichtungszeitintervalls verändert, bis das Kriterium für ein folgendes Aufzeichnungsbild erfüllt ist.

Zurückkommend auf die zeitliche Variation der örtlichen Strahlungsverteilung werden nun zwei Ausführungsbeispiele beschrieben. Gemäß dem ersten Ausführungsbeispiel wird die Intensität der Strahlung in zumindest einem örtlichen Bereich der Strahlungsverteilung (z.B. zumindest einem einem Marker zugeordneten örtlichen Bereich) in verschiedenen spektralen Bereichen der Strahlung zeitlich sinusartig variiert, d.h. die Intensität ist eine Sinusfunktion der Zeit. Dabei können die Sinusverläufe der Intensität in zumindest zwei, vorzugsweise zumindest drei verschiedenen spektralen Bereichen phasenverschoben sein.

Wenn bei der Auswertung des ersten Aufzeichnungsbildes der Folge festgestellt wird, dass das Ergebnis der Auswertung in Bezug auf die Ermittlung der Orientierung und/oder des zeitlichen Verlaufs der Bewegung nicht zufriedenstellend ist (weil z.B. nicht eindeutig festgestellt werden kann, welche Orientierung die Bewegung hat), dann wird die Amplitude zumindest eines Sinusverlaufs, die Frequenz zumindest eines Sinusverlaufs und/oder die Phasenverschiebung zwischen zumindest zwei Sinusverläufen der verschiedenen Spektralbereiche verändert. In zumindest einem weiteren Aufzeichnungsbild, das bei veränderten Sinusverläufen aufgenommen wird, wird dann festgestellt, ob das Ergebnis der Auswertung zufriedenstellend ist oder ob eine Veränderung der zeitlichen Variation der Strahlungsverteilung vorgenommen wird. Optional werden die Sinusverläufe nach Auswertung eines oder mehrerer der weiteren Aufzeichnungsbilder wieder verändert, bis ein zufriedenstellendes Auswertungsergebnis erhalten wird. Typischer Weise werden die sinusförmigen Verläufe auf eine höhere Sinusfrequenz eingestellt, wenn die Dynamik der Bewegung größer ist und umgekehrt. Die Amplitude der sinusförmigen Verläufe wird vorzugsweise so eingestellt, dass das Signal-/Rauschverhältnis bezüglich der Auswertung der verschiedenen Spektralanteile hoch ist, wobei auch darauf zu achten ist, dass sich die von den Sensorelementen des Kamera-Sensorfeldes ermittelten Strahlungsmengen im Belichtungszeitintervall über einen wesentlichen Teilbereich zwischen Null und der Sättigungsmenge verteilen.

Gemäß einem zweiten Ausführungsbeispiel, das sich auf die oben beschriebene pseudozufällige Variation des Intensitätsniveaus bezieht, wird die Art der pseudozufälligen Variation geändert, wenn nach Auswertung des ersten Aufzeichnungsbildes festgestellt wird, dass ein Bedarf dafür besteht. Die Art der pseudozufälligen Variation des Intensitätsniveaus der Strahlung wird insbesondere durch die Länge der Zeitintervalle, während denen die Intensität konstant ist, durch den Unterschied zwischen der maximal erlaubten und der minimal erlaubten Intensität und/oder durch die maximal erlaubte Intensität bestimmt, d.h. einer oder mehrere dieser Parameter werden geändert, wenn die Art der pseudozufälligen Variation des Intensitätsniveaus der Strahlung verändert wird. Insbesondere kann die Länge der Zeitintervalle konstanter Intensität kürzer gewählt werden, wenn die Dynamik der Bewegung hoch ist und umgekehrt. Der Unterschied zwischen der maximal erlaubten Intensität und der minimal erlaubten Intensität kann in analoger Weise wie im ersten Ausführungsbeispiel für die Amplituden des sinusförmigen Verlaufs gewählt werden. Entsprechendes gilt für den Maximalwert der Intensität.

Schnelle Bildverarbeitungsalgorithmen, die eine Entscheidung darüber ermöglichen, ob die zeitliche Variation der Strahlungsintensität und/oder der Kameraeigenschaften verändert werden soll(en), nutzen beispielsweise eine schnelle Fourier-Transformation (FFT). Auch Verfahren, die Strahlungsmengen in unterschiedlichen Spektralbereichen auswerten, können in diesem Sinne schnell ausgestaltet sein. Außerdem ist auch bei Auswertung eines Aufzeichnungsbildes in Bezug auf Strahlung in einem einzelnen Spektralbereich zum Beispiel eine Frequenzverschiebung aufgrund der Relativbewegung der Maschinenteile schnell feststellbar. Dabei kann die Strahlungsintensität insbesondere periodisch (zum Beispiel Kosinus-förmig) zeitlich geändert werden. Bei konstanter Geschwindigkeit der Relativbewegung entspricht die Frequenz der periodischen Änderung im Aufzeichnungsbild unverändert dem örtlich periodischen Verlauf der Bildwerte. Dagegen führt eine nicht konstante Geschwindigkeit zu einer Frequenzverschiebung im örtlich periodischen Verlauf der Bildwerte und der zeitliche Geschwindigkeitsverlauf kann daher aus dem Aufzeichnungsbild ermittelt werden. Die Frequenzverschiebung kann zum Beispiel im Wege einer örtlich aufgelösten Frequenzanalyse an einer Vielzahl von Orten eines Aufzeichnungsbildes festgestellt werden. Dabei kann auch die örtliche Verteilung der Frequenzverschiebung festgestellt werden und somit Information über den zeitlichen Verlauf der Relativbewegung gewonnen werden.

Ferner können Informationen aus der Historie der Bewegung, insbesondere aus der in der Vergangenheit liegenden Auswertung einer Folge von Kamerabildern, dazu verwendet werden, die zeitliche Variation der Übertragung und/oder Erfassung der Strahlung einzustellen. Geeignet hierfür sind insbesondere Kalman-Filter.

Die Variation der Intensität in verschiedenen spektralen Bereichen und die alternativ oder zusätzlich ausgeführte Variation der Polarisation der Strahlung werden von Personen, die sich im Bereich der Maschine aufhalten, als weniger störend empfunden als die Variation der Gesamt-Strahlungsintensität.

Insbesondere kann zumindest eine Kamera mit Sensorelementen verwendet werden, die jeweils in einem von mehr als drei oder vier Spektralbereichen empfindlich sind. Insbesondere sind so genannte Hyperspektral-Kameras bekannt, die in mehr als zehn, zum Beispiel sechzehn verschiedenen Spektralbereichen empfindliche Sensorelemente aufweisen. Auf diese Weise kann der Informationsgehalt im Aufzeichnungsbild noch weiter erhöht werden.

Insbesondere bei solchen Kameras, jedoch auch bei Kameras mit Sensorelementen, die in weniger Spektralbereichen empfindlich sind, kann die Strahlungsintensität der von der Erfassungsstruktur ausgehenden Strahlung in den verschiedenen Spektralbereichen mit unterschiedlicher Frequenz der Intensitätsänderung variiert werden. Zum Beispiel kann in einem ersten Spektralbereich die Strahlungsintensität mit einer Frequenz von 5 kHz und in einem anderen, zweiten Spektralbereich die Strahlungsintensität mit einer Frequenz von 10 kHz variiert werden. Verschiedene Frequenzen erhöhen den Informationsgehalt und vereinfachen die Auswertung der Aufzeichnungsbilder.

Insbesondere kann der Bewegungsbereich der beiden relativ zueinander beweglichen Teile der Maschine klein sein. Es ist daher möglich, den räumlichen Erfassungsbereich der zumindest einen Kamera ebenfalls klein auszulegen, ohne dass die Erfassungsstruktur den Erfassungsbereich verlassen kann. Insbesondere in diesem Fall ist das im Folgenden beschriebene Verfahren der Einstrahlung eines Musters auf die Oberfläche der Erfassungsstruktur von Vorteil, da sowohl der relativ kleine räumliche Erfassungsbereich als auch die Auswertung des Ergebnisses der Einstrahlung des Musters geringen Aufwand erfordert oder eine Auswertung der Aufzeichnungsbilder mit besonders hoher Genauigkeit ermöglicht.

Eine Möglichkeit der zeitlichen Variation besteht in einer Einstrahlung (insbesondere Projektion) einer einstellbaren örtlichen Strahlungsverteilung auf die Erfassungsstruktur. Das Erscheinungsbild der Erfassungsstruktur, das bereits ohne die Projektion vorhanden ist, bestimmt gemeinsam mit der eingestrahlten Strahlungsverteilung das wirksame Erscheinungsbild, welches von der zumindest einen Kamera erfasst wird.

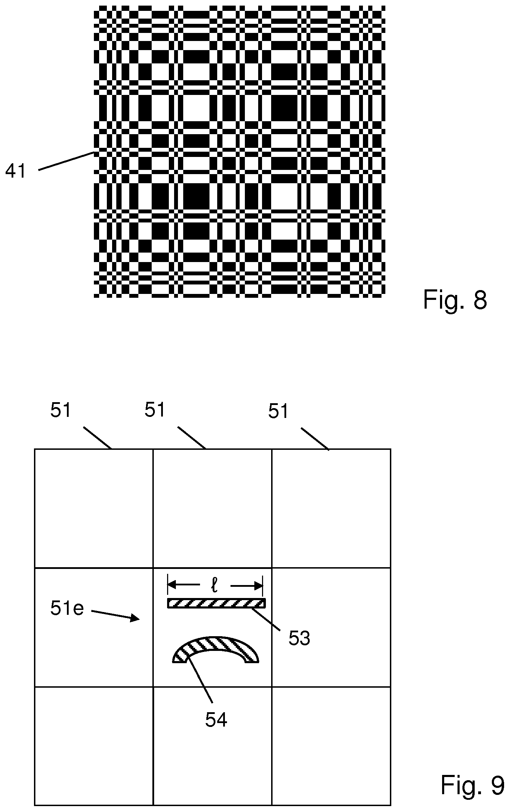

Insbesondere kann das bereits ohne Projektion vorhandene Erscheinungsbild ein erstes Muster (das heißt eine Struktur) bilden und kann die eingestrahlte örtliche Strahlungsverteilung auf der Oberfläche der Erfassungsstruktur ein zweites Muster erzeugen. Als Muster kommen insbesondere binäre Muster, zum Beispiel schachbrettartige Muster, Muster mit parallelen Streifen, Muster mit konzentrischen Ringen, und/oder Muster mit speziellen Eigenschaften wie die anhand von Fig. 8 noch erläuterten MURA infrage. Insbesondere können das erste Muster und das zweite Muster gleichartig sein, so dass die Überlagerung des ersten Musters mit dem zweiten Muster insbesondere das gleiche Erscheinungsbild wie das erste Muster allein und/oder zumindest in örtlichen Teilbereichen der Oberfläche der Erfassungsstruktur eine Auslöschung des Musters (d.h. ein homogenes Erscheinungsbild) zur Folge haben kann. Dies ermöglicht es insbesondere bei der Auswertung zumindest eines Aufzeichnungsbildes eine einfache Größe zu ermitteln, die Informationen über die relative Bewegung enthält. Zum Beispiel kann der Grad der Auslöschung des ersten binären Musters durch das zweite binäre Muster auf einfache Weise durch den Flächenanteil ermittelt werden, der nicht dem binären Wert der Auslöschung (zum Beispiel "1" für "hell") entspricht. Alternativ oder zusätzlich kann auf einfache Weise ein durch die Überlagerung der beiden Muster entstehender Moire-Effekt und/oder anderer musterspezifischer Überlagerungseffekt bestimmt und ausgewertet werden.

Bei einer Weiterbildung kann ein vorgegebener Zustand der Überlagerung des ersten und des zweiten Musters vorhanden sein und kann durch die Einstrahlung des zweiten Musters auf die Erfassungsstruktur versucht werden, diesen vorgegebenen Zustand trotz der Relativbewegung der Maschinenteile zu erreichen oder ihm möglichst nahe zu kommen. Um dies zu erreichen, wird zum Beispiel wie oben bereits beschrieben zumindest ein erstes Aufzeichnungsbild ausgewertet und die Einstrahlung des zweiten Musters abhängig von dem Ergebnis der Auswertung angepasst. Dadurch ist es insbesondere möglich, den Wertebereich für die auszuwertende Größe klein zu halten. Dies wiederum erlaubt es, die auszuwertende Größe bei geringem Aufwand mit gutem Signal-/Rausch-Verhältnis zu ermitteln.

Ausführungsbeispiele der Erfindung werden nun unter Bezugnahme auf die beigefügte Zeichnung beschrieben. Die einzelnen Figuren der Zeichnung zeigen:

Fig. 1 in vereinfachter schematischer Darstellung ein Koordinatenmessgerät in Portalbauweise, wobei eine Mehrzahl von Kameras auf den Bewegungsbereich des Sensorträgers am unteren Ende der Pinole des KMG ausgerichtet ist,

Fig. 2 eine schematische Darstellung mit vier Kameras, deren Erfassungsbereiche den Bewegungsbereich eines Sensorträgers eines KMG abdecken, wobei an dem Sensorträger eine Mehrzahl von Erfassungsstrukturen angeordnet ist,

Fig. 3 schematisch in vereinfachter Darstellung ein Koordinatenmessgerät in Portalbauweise mit Kameras, die am Sensorträger befestigt sind, und eine Vielzahl von Erfassungsstrukturen, die mit der Basis des KMG verbunden sind,

Fig. 4 eine Werkzeugmaschine in Portalbauweise, in einer Fig. 1 ähnlichen Darstellung, wobei jedoch am unteren Ende der Pinole statt eines Mess-Sensors ein Bearbeitungswerkzeug getragen wird,

Fig. 5 eine schematische Darstellung verschiedener Teilbereiche einer Erfassungsstruktur mit unterschiedlichen Abmessungen und einer zugehörigen Bildwerteverteilung in einem Kamerabild, wobei keine Relativbewegung zwischen Erfassungsstruktur und Kamera stattfindet,

Fig. 6 eine schematische Darstellung der Teilbereiche und der zugehörigen Bildwerteverteilung wie in Fig. 5, wobei jedoch eine Relativbewegung zwischen Erfassungsstruktur und Kamera stattfindet,

Fig. 7 zeitliche Verläufe der von zwei Pixeln des Kamerabildes erfassten Strahlungsflussdichte für den links oben in Fig. 6 dargestellten Teilbereich der Erfassungsstruktur während der Relativbewegung,

Fig. 8 ein MURA (Modified Uniformly Redundant Array) als Beispiel für einen Teil einer Erfassungsstruktur, deren Kamerabild sich bei geringem Aufwand zur Ermittlung der Geschwindigkeit der Relativbewegung auswerten lässt,

Fig. 9 schematisch in einer einzigen Darstellung einen Faltungskern als zweidimensionale ortsabhängige Funktion, wobei in einem zentralen Bereich des Faltungskerns für zwei unterschiedliche Fälle einer Teilstruktur dargestellt ist, anhand deren geometrischer Eigenschaften die Geschwindigkeit der Relativbewegung ermittelt werden kann,

Fig. 10 Beispiele für den zeitlichen Verlauf einer Strahlungsflussdichte bei drei unterschiedlichen Bewegungen, wobei durch Integration der Strahlungsmenge über das Belichtungszeitintervall allein nicht zwischen den drei unterschiedlichen Bewegungen unterschieden werden kann,

Fig. 11 integrierte Strahlungsmengen eines Pixels eines Kamerabildes im Laufe der Zeit für die drei Bewegungen, für die in Fig. 10 die zeitlichen Verläufe der Strahlung Flussdichte dargestellt sind,

Fig. 12 integrierte Strahlungsmengen des Pixels ähnlich wie in Fig. 11, wobei jedoch die Integrationszeiträume zeitlich gegen die Integrationszeiträume der Darstellung in Fig. 11 versetzt sind,

Fig. 13 ein Beispiel für einen einfachen Positionsregler zur Regelung der Position eines beweglichen Teils einer Maschine,

Fig. 14 eine kaskadierte Regelung zur Regelung der Position und Geschwindigkeit und optional auch der Beschleunigung eines beweglichen Teils einer Maschine als Beispiel für eine Regelung, die den aus einem einzelnen Kamerabild ermittelten Istwert der Geschwindigkeit des beweglichen Teils berücksichtigt,

Fig. 15 schematisch Positionen eines kreisförmigen Markers bei einer Bewegung mit konstanter Bewegungsgeschwindigkeit in geradliniger Richtung, einen Verlauf von Bildwerten eines Sensorfeldes entlang der Bewegungsrichtung und einen zeitlichen Intensitätsverlauf während des Belichtungszeitintervalls, wobei die von dem Marker zu dem Sensorfeld einer Kamera übertragene Strahlung hinsichtlich der Intensität nicht zeitlich variiert wird,

Fig. 16 eine schematische Darstellung für einen Fall wie in Fig. 15, wobei der Marker jedoch eine Bewegung in geradliniger Richtung mit abnehmender Geschwindigkeit ausführt,

Fig. 17 eine schematische Darstellung für einen Fall wie in Fig. 15 und Fig. 16, wobei jedoch der Marker eine Bewegung in geradliniger Richtung ausführt, die sich während des Belichtungszeitintervalls umkehrt, d.h. die Orientierung der Bewegung ändert sich während des Belichtungszeitintervalls,

Fig. 18 eine schematische Darstellung für einen Fall wie in Fig. 17, wobei jedoch die Intensität der von dem Marker zu dem Sensorfeld der Kamera übertragenen Strahlung während des Belichtungszeitintervalls mit konstanter Steigung abnimmt,

Fig. 19 den sinusförmigen zeitlichen Verlauf der Intensitäten von Strahlungsanteilen in drei verschiedenen Spektralbereichen und

Fig. 20 den Intensitätsverlauf von Strahlung bei einer pseudozufälligen Variation des Intensitätsniveaus.

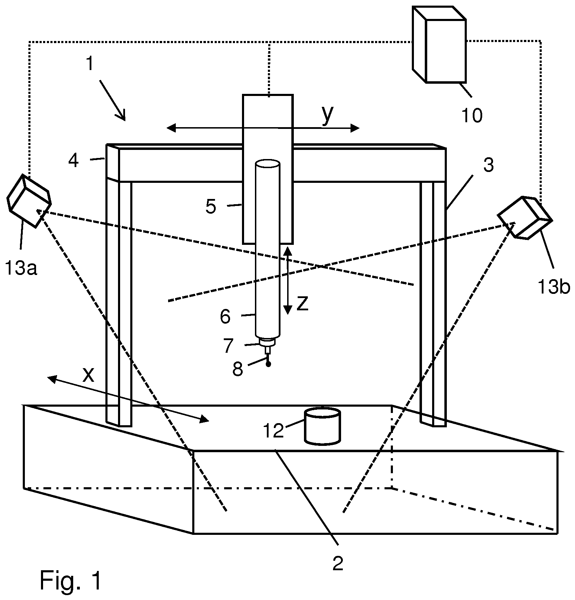

Fig. 1 zeigt ein Koordinatenmessgerät 1 in Portalbauweise. Auf einem Messtisch 2 des KMG 1 ist das in X-Richtung eines kartesischen Koordinatensystems des KMG 1 bewegliche Portal 3 angeordnet. Ein Schlitten 5 kann in Y-Richtung des Koordinatensystems entlang einem Querträger 4 des Portals 3 bewegt werden. Ferner ist eine Pinole 6 in Z-Richtung des Koordinatensystems beweglich an dem Schlitten 5 angeordnet. Am unteren Ende der Pinole 6 ist ein Messkopf 7, d.h. ein Sensor, befestigt, der einen Taster 8 trägt. In der vereinfachten Darstellung sind keine Antriebe dargestellt.

Wie in Fig. 1 schematisch dargestellt ist, weist das Koordinatenmessgerät 1 eine Steuerungs- und Auswertungseinrichtung 10 auf, die beispielsweise Teil eines handelsüblichen oder speziell für den Betrieb des KMG ausgestalteten Computers ist, der mit Software für den Betrieb des KMG 1 ausgestattet ist. Die Steuerungs- und Auswertungseinrichtung 10 ist, wie durch eine gepunktete Linie dargestellt ist, mit den beweglichen Teilen des KMG 1 verbunden. Auf dem Messtisch befindet sich ein Werkstück 12 innerhalb des Bewegungsbereichs des Tasters 8.

Bei konventionellen KMG, und auch bei Werkzeugmaschinen, sind Messgeber und Maßverkörperungen an den relativ zueinander beweglichen Teilen angebracht, um die Position des Sensorträgers (hier der Pinole 6) zu bestimmen. Aus den Positionen zu verschiedenen Zeitpunkten lässt sich auch die Geschwindigkeit und optional auch die Beschleunigung ermitteln. In dem dargestellten Beispiel eines KMG wird jedoch das untere Ende der Pinole von einer Mehrzahl von Kameras erfasst, die über nicht dargestellte Verbindungen mit der Basis des KMG 1 verbunden sind. Zu der Basis gehört insbesondere der Messtisch 2. Bereits aus einem einzigen der vorzugsweise wiederholt nacheinander aufgenommenen Kamerabilder wird die Geschwindigkeit, der zeitliche Verlauf und/oder die Orientierung der Bewegung des unteren Endes der Pinole und optional auch deren Position ermittelt. Insbesondere kann jeweils das aktuelle, zuletzt aufgenommene Kamerabild in dieser Weise ausgewertet werden.

In dem konkret in Fig. 1 dargestellten Ausführungsbeispiel sind lediglich zwei Kameras 13a, 13b dargestellt, die den Bewegungsbereich des unteren Pinolenendes jeweils vollständig erfassen, dabei jedoch in unterschiedliche Blickrichtungen blicken. Bei den Kameras 13 handelt es sich z.B. um Weitwinkelkameras. Sie sind, wie durch gepunktete Linien dargestellt ist, ebenfalls mit der Steuerungs- und Auswertungseinrichtung 10 verbunden.

Alternativ zu der Anordnung an einem nicht im Laborkoordinatensystem bewegten Teil der Maschine, z. B. der Basis, kann die zumindest eine Kamera an dem im Laborkoordinatensystem beweglichen Teil, z.B. der Pinole, angeordnet werden. In diesem Fall ist die zumindest eine Erfassungsstruktur an dem nicht im Laborkoordinatensystem bewegten Teil angeordnet. Ferner ist es möglich, dass sowohl die zumindest eine Kamera als auch die zumindest eine Erfassungsstruktur jeweils an verschiedenen im Laborkoordinatensystem beweglichen Teilen angeordnet sind. Wenn die zumindest eine Kamera an einem beweglichen Teil der Maschine angeordnet ist, kann die Erfassungsstruktur im Laborkoordinatensystem ortsfest sein. Alternativ kann die Erfassungsstruktur selbst dann, wenn die zumindest eine Kamera auf ein nicht bewegliches Teil der Maschine ausgerichtet ist, ebenfalls bewegt werden. Hierzu weist das nicht bewegliche Teil der Maschine zum Beispiel zumindest ein Display auf, auf dem die Erfassungsstruktur dargestellt ist/wird. Unter Berücksichtigung der Information darüber, wo sich die Erfassungsstruktur zu einem gegebenen Zeitpunkt befindet und/oder mit welcher Bewegung sie sich bewegt, kann dann die Relativbewegung und/oder Relativposition ermittelt werden. Eine ebenfalls wie die Kamera bewegte Erfassungsstruktur, insbesondere eine mit etwa der Geschwindigkeit der Kamera bewegte Erfassungsstruktur, ermöglicht es, eine Kamera mit normalem Öffnungswinkel des erfassten Raumbereiches oder sogar mit schmalem Öffnungswinkel zu verwenden. Hierdurch wird die Auflösung durch das Kamerabild verfeinert und/oder kann eine Digitalkamera mit weniger Pixeln verwendet werden.

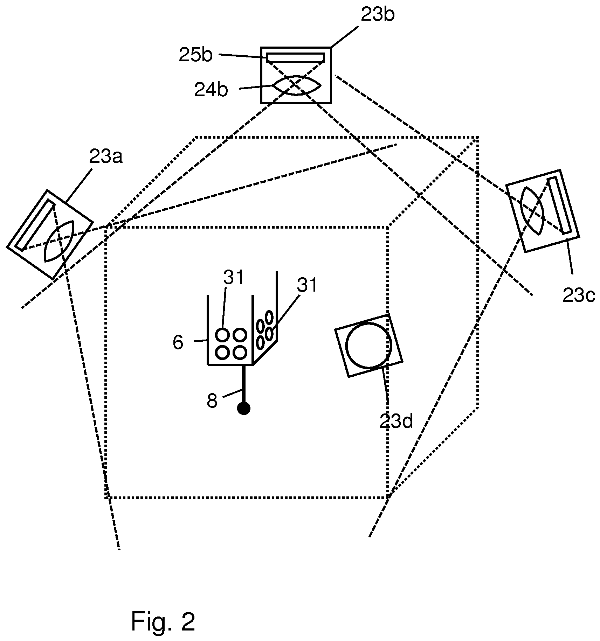

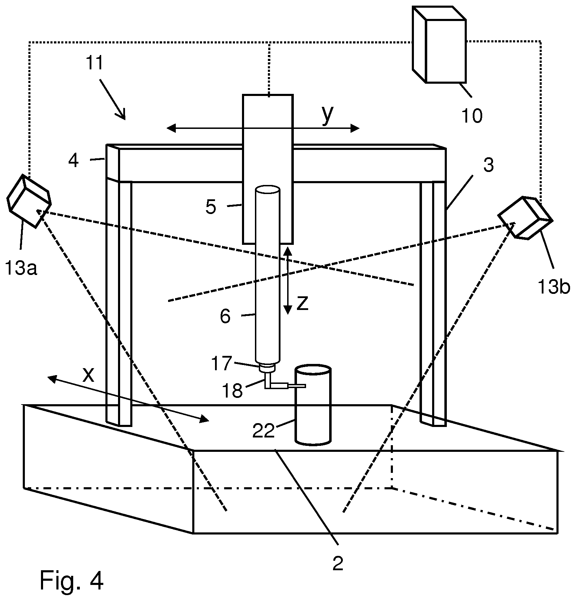

Fig. 2 zeigt ein durch einen Würfel mit gepunkteten Kantenlinien dargestellten Bewegungsbereich eines beweglichen Teils eines KMG. In der Figur ist als Beispiel der untere Endbereich einer Pinole 6 eines KMG mit daran angekoppelten Taststift 8 als bewegliches Teil dargestellt. Das bewegliche Teil könnte jedoch auch ein anderes Teil eines KMG oder einer Werkzeugmaschine sein, z.B. ein Messkopf eines KMG oder ein Werkzeug oder Werkzeugträger einer Werkzeugmaschine. Die Kameraanordnung in Fig. 2 kann zum Beispiel alternativ zu der Anordnung in Fig. 1 oder 4 verwendet werden.

Insgesamt vier Kameras 23a, 23b, 23c, 23d sind bei unterschiedlicher Richtung jeweils auf den Bewegungsbereich ausgerichtet. Ränder des Erfassungsbereichs von drei der Kameras 23a, 23b, 23c sind wie in Fig. 1 durch gestrichelte Linien dargestellt. Am Beispiel der oben in Fig. 2 dargestellten Kamera 23b ist ferner schematisch dargestellt, dass die Kameras jeweils eine Optik 24b, z.B. eine Linsenanordnung, und eine Sensorelementen-Matrix 25b aus strahlungsempfindlichen Sensorelementen aufweisen.

Das bewegliche Teil 6 weist an verschiedenen Seiten, hier an unterschiedlich orientierten Oberflächen, jeweils zumindest einen Marker 31 auf. Der Marker oder Gruppen von Markern bildet/bilden dabei eine Erfassungsstruktur, die von zumindest einer der Kameras 23 erfasst wird. Im Beispiel sind an der nach vorne weisenden Oberfläche und an der nach rechts weisenden Oberfläche jeweils vier Marker 31 angeordnet. Die vier Marker 31 werden jeweils zumindest von einer der Kameras 23 erfasst. Z.B. werden die Marker 31 der nach rechts weisenden Oberfläche des beweglichen Teils 6 von den Kameras 23c, 23d rechts und im Vordergrund der Fig. 2 erfasst. Die im Vordergrund dargestellte Kamera 23d kann z.B. außerdem, die nach vorne weisende Oberfläche erfassen, die auch von der links oben dargestellten Kamera 23a erfasst wird.

Die schematisch in Fig. 1 und Fig. 2 dargestellten Anordnungen von Kameras, die an der Basis eines KMG oder einer Werkzeugmaschine befestigt sind, sind lediglich Beispiele. Dies gilt auch für die in Fig. 1 dargestellte Konstruktion eines KMG. In Fig. 4 ist als Variante eine Werkzeugmaschine 11 dargestellt, deren Konstruktion der Konstruktion des KMG 1 aus Fig. 1 mit wenigen Ausnahmen gleicht. Im Folgenden wird kurz der Unterschied zwischen der Werkzeugmaschine 11 in Fig. 4 und dem KMG 1 in Fig. 1 beschrieben. Gleiche Bezugszeichen bezeichnen gleiche Teile, die nicht erneut beschrieben werden. Die Werkzeugmaschine 11 in Fig. 4 weist am unteren Ende der Pinole 6 einen Werkzeugträger 17 auf, der ein Bearbeitungswerkzeug 18 zum Bearbeiten eines Werkstücks 22 auf dem Tisch trägt.

Bei den in Fig. 1, 2 und 4 dargestellten Anordnungen mit an der Basis befestigten Kameras 13; 23 wird die Geschwindigkeit, der zeitliche Verlauf und/oder die Orientierung der Bewegung und optional auch die Position und/oder Ausrichtung des beweglichen Teils beispielsweise wie folgt festgestellt. Die Kameras 13; 23 nehmen wiederholt, z.B. mit einer Taktfrequenz von 100 Hz, Bilder ihres Erfassungsbereichs auf. Jedes Bild erhält einen Zeitstempel, d.h. der Zeitpunkt der Aufnahme des jeweiligen Kamerabildes wird dem Kamerabild zugeordnet und z.B. in einem gemeinsamen Datensatz mit den Bilddaten abgespeichert.

Insbesondere aus zum gleichen Zeitpunkt aufgenommenen Kamerabildern mehrerer der Kameras 13; 23 wird die Geschwindigkeit, der zeitliche Verlauf und/oder die Orientierung der Bewegung und optional auch die Position und/oder Ausrichtung des beweglichen Teils innerhalb seines Bewegungsbereichs festgestellt. Jedes einzelne auszuwertende Kamerabild wird optional einer Vorbearbeitung unterzogen, in der derjenige Bildbereich des Kamerabildes ermittelt wird, in dem sich zumindest eine Erfassungsstruktur des beweglichen Teils (z.B. ein charakteristisches Merkmal oder ein Marker) befindet. In diesem Fall werden lediglich die Bilddaten des ermittelten Bereiches des Kamerabildes weiter zum Zweck der Feststellung der Geschwindigkeit, des zeitlichen Verlaufs und/oder der Orientierung der Bewegung und optional auch der Position und/oder Ausrichtung des beweglichen Teils ausgewertet. Diese Vorbearbeitung findet z.B. innerhalb der jeweiligen Kamera statt, die das Kamerabild aufgenommen hat, und wird z.B. von einer Recheneinrichtung der Kamera durchgeführt. Auch der nächste Verarbeitungsschritt, nämlich die Bestimmung der Geschwindigkeit, des zeitlichen Verlaufs und/oder der Orientierung der Bewegung und optional auch der Position und/oder Ausrichtung der zumindest einen Erfassungsstruktur, die in dem Kamerabild erfasst ist, in Bezug auf ein Koordinatensystem der Kamera (bei dem es sich insbesondere um ein zweidimensionales in der Bildebene des Kamerabildes liegendes Koordinatensystem handeln kann), kann dezentral ausgeführt werden, z.B. durch die erwähnte Recheneinrichtung der Kamera. Alternativ ist es jedoch auch möglich, die zum gleichen Zeitpunkt aufgenommenen Kamerabilder mehrerer Kameras und/oder die nicht zum gleichen Zeitpunkt aufgenommenen Kamerabilder mehrerer Kameras, die jedoch dieselbe oder annähernd dieselbe Position und/oder Ausrichtung des beweglichen Teils erfasst haben, gemeinsam von einer zentralen Auswertungseinrichtung auswerten zu lassen. Dies ist insbesondere dann sinnvoll, wenn Kamerabilder verschiedener Kameras dieselbe Erfassungsstruktur oder dieselben Erfassungsstrukturen erfassen. Bei der Recheneinrichtung kann es sich beispielsweise um ein oder mehrere Mikroprozessoren und/oder FPGA (Field Programmable Gate Array) handeln.

Bei der Feststellung der Geschwindigkeit, des zeitlichen Verlaufs und/oder der Orientierung der Bewegung und optional auch der Position und/oder Ausrichtung des beweglichen Teils aus dem oder den Kamerabildern wird insbesondere die Kenntnis der geometrischen Eigenschaften der Erfassungsstruktur genutzt. Z.B. kann es sich bei der Erfassungsstruktur um eine Erfassungsstruktur mit kreisförmigem oder rechteckförmigem Außenrand handeln, wobei die Fläche der Erfassungsstruktur innerhalb ihrer Umrandung nicht optisch homogen ist, d.h. über den Verlauf ihrer Fläche hat die Erfassungsstruktur eine optische Struktur. Es kann daher aus dem Bild der strukturierten Fläche auf die Geschwindigkeit, den zeitlichen Verlauf und/oder die Orientierung der Bewegung und optional auch auf die Position und/oder Ausrichtung der Erfassungsstruktur und somit auf die des damit verbundenen beweglichen Teils geschlossen werden.

Die Kenntnis über die zumindest eine erfasste Erfassungsstruktur erlaubt es, aufgrund von geometrischen Überlegungen aus dem zumindest einen Kamerabild festzustellen, wie die Erfassungsstruktur im Bewegungsbereich des beweglichen Teils positioniert und/oder ausgerichtet ist. Z.B. wird eine Erfassungsstruktur mit kreisförmig umlaufendem Rand im Kamerabild im Allgemeinen als eine Struktur abgebildet, die einen umlaufenden Rand einer Ellipse hat. Z.B. durch Feststellung der Lage und Länge der Hauptachsen der Ellipse in dem Kamerabild kann der Blickwinkel der Kamera bezüglich der Erfassungsstruktur und die Entfernung der Kamera zur Erfassungsstruktur festgestellt werden. Vorzugsweise enthält die zumindest eine in dem Kamerabild oder den Kamerabildern erfasste Erfassungsstruktur redundante Information, sodass die Position und/oder Ausrichtung der Erfassungsstruktur nicht lediglich anhand eines Strukturmerkmals, sondern anhand einer Mehrzahl von Strukturmerkmalen durchgeführt werden kann. Dadurch wird die Sicherheit bei der Bestimmung der Position und/oder Ausrichtung des beweglichen Teils erhöht. Dies gilt auch bezüglich der Auswertung mehrerer Kamerabilder, die in demselben Bewegungszustand des beweglichen Teils zumindest eine Erfassungsstruktur aus verschiedenen Blickrichtungen erfasst haben.

Die Feststellung der Abbildungsgeometrie von Kamera und beweglichem Teil, z.B. mit Berechnung des Blickwinkels und der Entfernung aus der Geometrie der abgebildeten Erfassungsstruktur, stellt jedoch nicht die einzige mögliche Vorgehensweise dar. Aus der Bildverarbeitung sind andere Verfahren bekannt. Z.B. kann durch Vergleichen der in dem Kamerabild abgebildeten Erfassungsstruktur mit simulierten und/oder vorher aufgenommenen Bildern die Position und/oder Ausrichtung der Erfassungsstruktur im Bewegungsbereich ermittelt werden. Z.B. kann jedem der simulierten oder vorher aufgenommenen Bilder die entsprechende Position und/oder Ausrichtung zugeordnet sein. Durch Ermittlung des korrekten Vergleichsbildes wird daher die Position und/oder Ausrichtung festgestellt.

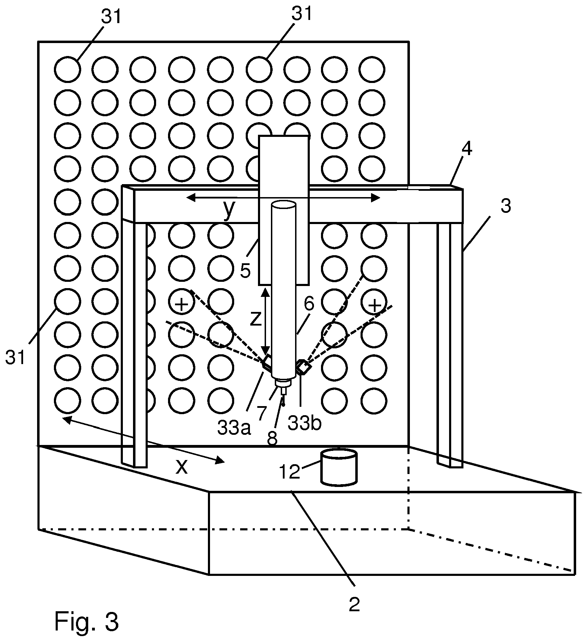

Fig. 3 zeigt ein Ausführungsbeispiel für die Umkehrung des anhand von Fig. 1, 2 und 4 erläuterten Prinzips, wonach die zumindest eine Kamera mit der Basis verbunden ist und die zumindest eine Erfassungsstruktur mit dem beweglichen Teil verbunden ist. Bei der Umkehrung des Prinzips ist zumindest eine Kamera mit dem beweglichen Teil verbunden und zumindest eine Erfassungsstruktur mit der Basis verbunden.

In Fig. 3 ist dieselbe Konstruktion eines KMG wie in Fig. 1 gezeigt. Alternativ kann es sich bei dem Gerät um eine Werkzeugmaschine handeln wie z.B. in Fig. 4. Auch die Umkehrung des Erfassungsprinzips kann auf andere Konstruktionen von KMG und Werkzeugmaschinen angewendet werden, z.B. auf KMG in Horizontalarmbauweise oder Gelenkarmbauweise und auf entsprechend konstruierte Werkzeugmaschinen.

Fig. 3 zeigt schematisch und vereinfacht, dass sich außerhalb des Bewegungsbereichs des beweglichen Teils (hier z.B. des unteren Endbereichs der Pinole 6) eine Anordnung mit einer Vielzahl von Markern 31 befinden kann. Aus Gründen der vereinfachten Darstellung sind in Fig. 3 lediglich hinter dem Bewegungsbereich Marker 31 angeordnet. In der Praxis können sich jedoch weitere Marker z.B. auch seitlich, im Vordergrund und über dem Bewegungsbereich befinden. In dem dargestellten Ausführungsbeispiel sind elf Reihen mit jeweils neun Markern 31 vorhanden, wobei aus Gründen der besseren Erkennbarkeit der Darstellung einige Marker 31 weggelassen sind, die sich hinter der Pinole und hinter dem Messkopf 7 und dem Taster 8 befinden. Insbesondere stellt jeder der Marker eine Erfassungsstruktur dar, wobei durch Auswertung des Kamerabildes des Markers die Geschwindigkeit, der zeitliche Verlauf und/oder die Orientierung der Bewegung ermittelbar ist.

Im unteren Endbereich der Pinole 6 sind zwei Kameras 33a, 33b dargestellt, die mit der Pinole 6 verbunden sind. Alternativ können mehr als zwei Kameras oder kann lediglich eine Kamera an der Pinole 6 befestigt sein. Die beiden in Fig. 3 dargestellten Kameras 33a, 33b sind in unterschiedliche Richtungen ausgerichtet. Randlinien ihres Erfassungsbereichs sind gestrichelt dargestellt. In dem in Fig. 3 gezeigten Zustand erfasst jede der beiden Kameras 33a, 33b zumindest einen der Marker 31 vollständig. Die vollständig erfassten Marker 31 sind in der Zeichnung mit einem Pluszeichen gekennzeichnet. Insbesondere wenn die Marker 31 jeweils eine individuelle Struktur haben oder auf andere Weise für die Kamera erkennbar individuell gestaltet sind, kann bereits aus der Identifizierung der in dem Kamerabild erfassten Erfassungsstruktur und aus der Kenntnis über die Ausrichtung des Erfassungsbereichs der Kamera Information über die ungefähre Position und/oder Ausrichtung des beweglichen Teils gewonnen werden. Bewegt sich z.B. die Pinole 6 aus dem in Fig. 3 dargestellten Zustand nach oben in Z-Richtung, würde nicht mehr der mit einem Pluszeichen in Fig. 3 dargestellte Marker erfasst, sondern ein darüber liegender Marker.

Die Erfassungsbereiche der Kameras 33a, 33b in Fig. 3 erstrecken sich über einen kleineren Raumwinkel als die Erfassungsbereiche der Anordnungen in Fig. 1, 2 und 4. Die jeweilige erfasste Erfassungsstruktur nimmt daher einen größeren Teil des aufgenommenen Kamerabildes ein und es kann daher prinzipiell eine feinere Auflösung und genauere Feststellung der Geschwindigkeit des beweglichen Teils bei gleichzeitiger Feststellung der Position und/oder Ausrichtung des beweglichen Teils anhand des identifizierten Markers erzielt werden und/oder die Anzahl der Pixel der Kamerabilder reduziert werden, sodass insbesondere mit höherer Wiederholfrequenz Kamerabilder aufgenommen werden können.

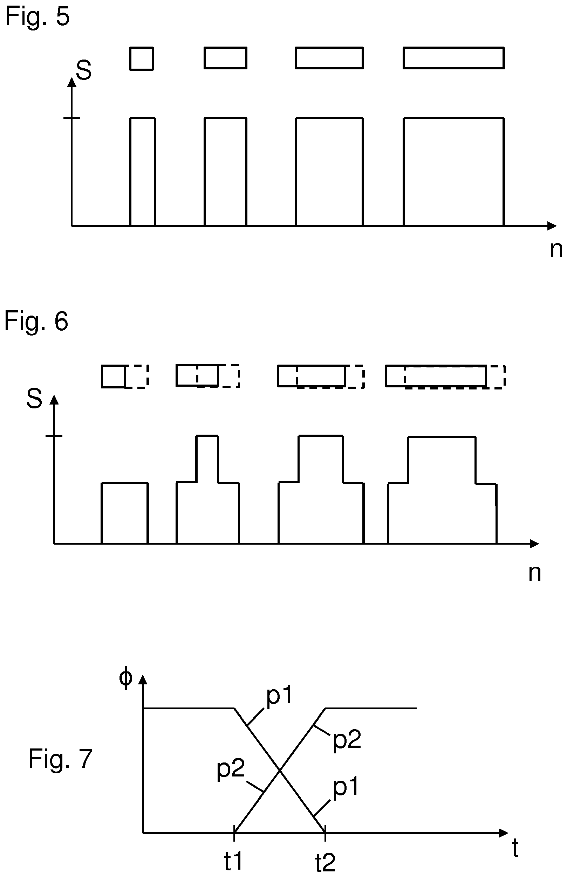

Anhand von Fig. 5 bis Fig. 7 wird an vereinfachten Beispielen erläutert, welche Auswirkungen eine Relativbewegung eines ersten Teils und eines zweiten Teils einer Maschine und allgemein auch Relativbewegungen beliebiger Teile haben, wenn eine Kamera mit einem der Teile gekoppelt ist und ein Kamerabild des anderen Teils aufnimmt. Gemäß Fig. 5 können Teilbereiche (oben in der Figur durch vier Rechtecke mit unterschiedlicher Breite dargestellt) einer Binärstruktur mit unterschiedlichen Ausdehnungen, das heißt Teilbereiche eines beweglichen Teils der Maschine und insbesondere der Erfassungsstruktur betrachtet werden. In dem vereinfachten Beispiel werden eindimensionale Teilbereiche der Binärstruktur betrachtet, deren Abmessungen in Breitenrichtung (von links nach rechts in der Figur) ein, zwei, drei und vier Bild-Pixel betragen. Für den Fall, dass es sich bei den Teilbereichen um Strahlung reflektierende oder emittierende Bereiche einer ansonsten nicht reflektierenden oder emittierenden Struktur handelt, beschreibt Fig. 5 darunter die den örtlichen Verlauf von Bildwerten von entsprechenden Pixeln n des Kamerabildes, die die Teilbereiche erfassen. Die Bildwerte entsprechen unter Berücksichtigung der optischen Eigenschaften der erfassten Teilbereiche und der Abbildung einer maximal möglichen Sättigung S (maximal möglicher Wert der Integration der auf das jeweilige Pixel einfallenden Strahlung über die Belichtungszeit), wenn die, wenn die Belichtungszeit (Integrationszeit) der Kamera entsprechend gewählt wird. Voraussetzung für das Auftreten des skizzierten Bildwerteverlaufes ist, dass das Objekt während der Bildaufnahme nicht bewegt wird.

Fig. 6 veranschaulicht die Verhältnisse, wenn sich das Objekt (hier die Binärstruktur) zum Zeitpunkt Null schlagartig in Bewegung setzt, sich während der Integrationszeit mit konstanter Geschwindigkeit um ein Pixel im Bildraum nach rechts verschiebt (die Position wird durch gestrichelte Rechtecke symbolisiert), und dann wiederum schlagartig zur Ruhe kommt. Unter den Teilbereichen sind wiederum die örtlichen Verläufe der Sättigung S bzw. die Bildwerteverläufe der entsprechenden Kamerapixel n dargestellt.

In Fig. 7 ist die Strahlungsflussdichte $\Phi$ für zwei der Kamerapixel p1 und p2 im Verlaufe der Zeit dargestellt. Das Belichtungszeitintervall beginnt dabei zum Zeitpunkt t1 und endet zum Zeitpunkt t2. Fig. 7 stellt den Fall lediglich des ein Pixel großen Teilbereichs links in Fig. 6 dar. Die Strahlungsflussdichte, die das Pixel p1 empfängt, befindet sich bis zum Beginn des Belichtungszeitintervalls zum Zeitpunkt t1 auf konstantem Niveau und nimmt während des Belichtungszeitintervalls linear auf den Wert 0 ab. Gleichzeitig nimmt die Strahlungsflussdichte $\Phi$ des zweiten Pixels p2 vom Zeitpunkt t1 linear ansteigend bis zum Zeitpunkt t2 auf dasselbe Niveau zu, das zuvor die Strahlungsflussdichte auf das Pixel p1 hatte.

Aus dem Verlauf der Strahlungsflussdichte $\Phi$ für die Pixel p1 und p2 kann die ausgeführte Bewegung ermittelt werden. Allerdings liefert der jeweilige Bildwert der Pixel p1 und p2 wie Fig. 6 zeigt denselben Wert, da über das Integrationszeitintervall integriert wird und der zeitliche Verlauf während dieses Zeitintervalls nicht bekannt ist. Anders ist dies jedoch für die örtlichen Bildwerteverläufe in Fig. 6 für die breiteren Teilbereiche. Da sich im mittleren örtlichen Bereich während des gesamten Belichtungszeitintervalls ein Strahlung reflektierender und/oder emittierender Teilbereich befindet, ist die Sättigung S dort maximal. An den Rändern der Bildwerteverläufe bzw. Sättigungskurven ist der Wert jedoch geringer. Es hat eine Verschmierung der Kanten stattgefunden, die sich in Bewegungsrichtung an den Enden der Teilbereiche befinden. Diese Information kann nun ausgewertet werden, um die Geschwindigkeit der Bewegung zu bestimmen. Bereits die Länge der Bereiche von Pixeln n, die Strahlung empfangen und während des Belichtungszeitintervalls integriert haben, ergibt den Betrag der konstanten Geschwindigkeit oder im Allgemeinen den mittleren Betrag der Geschwindigkeit während des Belichtungszeitintervalls. Im dargestellten Ausführungsbeispiel hat sich der Teilbereich um ein Pixel weiterbewegt und ist daher die Länge des Bereichs der belichteten Pixel bzw. der dargestellten nicht verschwindenden Abschnitte der Sättigungskurve größer als im Fall der Fig. 5, und zwar um genau ein Pixel. Die Geschwindigkeit ergibt sich daher durch Division der Längenvergrößerung zwischen den Fällen der Fig. 5 und der Fig. 6, dividiert durch das Belichtungszeitintervall. Die Information in Fig. 5 entspricht Kenntnissen über die mit dem Kamerabild erfasste Erfassungsstruktur. Insbesondere ist die Breite der vier oben in Fig. 5 dargestellten rechteckigen Teilbereiche vorab bekannt. Diese Teilbereiche können durch an sich bekannte Verfahren der Bildverarbeitung trotz der Verschmierungen von Kanten im Kamerabild identifiziert werden. Dabei kann bei wiederholter Aufnahme und Auswertung von Kamerabildern der Kamera, insbesondere von Frame zu Frame, eine Objektverfolgung stattfinden, sodass der Aufwand für die Identifizierung der bekannten Teilbereiche oder Strukturen gering ist.

Um auf die oben begonnene Betrachtung der Übertragungsfunktion der Abbildung zurückzukommen, ändert sich die Übertragungsfunktion mit der Bewegung. Daher enthält die Übertragungsfunktion die Information über die Bewegung. Insbesondere kann die Änderung der Übertragungsfunktion bei bewegtem und nicht bewegtem Objekt (Erfassungsstruktur) betrachtet werden oder unmittelbar aus der Übertragungsfunktion bei bewegtem Objekt die Bewegung ausgewertet werden. Dabei kann insbesondere auf eine Frequenzanalyse, insbesondere nach Transformation in den Frequenzraum (insbesondere Fouriertransformation) und/oder mathematische Faltung zurückgegriffen werden. Neben einer Auswertung von Bildkontrasten, z.B. an Strukturkanten (darauf wurde bereits eingegangen), kommt daher auch eine mathematische Faltung der Bildwerteverteilung des Kamerabildes zur Auswertung der Bewegung infrage und wird auch bevorzugt. Insbesondere abhängig von dem gewählten Verfahren der Auswertung und/oder abhängig von der zu erwartenden Geschwindigkeit der Bewegung kann die Erfassungsstruktur hergestellt werden, die von der Kamera erfasst wird. Beispiele für geeignete Erfassungsstrukturen wurden bereits genannt. Z.B. als Erfassungsstrukturen mit Kanten kommen Siemenssterne infrage.

Im Folgenden werden Ausführungsbeispiele für die Ermittlung der Geschwindigkeit aus einem Faltungskern beschrieben. Hierzu wird zunächst eine zugrundeliegende mathematische Beschreibung der Abbildung der Erfassungsstruktur auf das Kamerabild als Faltung der Intensitätsverteilung der Erfassungsstruktur mit einem Faltungskern beschrieben.

In den folgenden Formeln und Gleichungen kommt die Grauwertverteilung GW des unter Umständen durch die Kameraaufnahme verschmierten Bildes der Erfassungsstruktur vor. Dies ist jedoch lediglich ein Beispiel für die Verteilung der Bildwerte. Z.B. können alternativ oder zusätzlich die Farbverteilung, z.B. Farbwerte und Farbintensitäten, berücksichtigt werden. Im eindimensionalen Fall, in dem die Grauwertverteilung GW lediglich von einer Ortskoordinate x abhängt, kann die Grauwertverteilung GW (x) durch folgende Integralgleichung (1) beschrieben werden:

$$GW(x) = \frac{1}{T} \int_{-T}^{0} I(x + v_x t)\, dt$$

$$= \frac{1}{T} \int_{x - v_x T}^{0} I(s_x) \frac{1}{v_x}\, ds_x$$

$$= \int_{-\infty}^{\infty} k(x - s_x)\, I(s_x)\, ds_x = (k * I)(x) \qquad (1)$$

Gleichung (1) geht als Beispiel vereinfachend davon aus, dass die Relativgeschwindigkeit $v_x$ von Erfassungsstruktur und Kamera in Richtung der x-Achse während des Belichtungsintervalls konstant ist und insbesondere senkrecht zur optischen Achse der Abbildung verläuft. Die Geschwindigkeit $v_x$ hängt über die Beziehung $s_x = x + v_x t$ mit der Zeitvariable t und dem durch die Bewegung zurückgelegten Weg $s_x$ in Richtung der x-Achse zusammen:

$$t = \frac{s_x - x}{v_x} \qquad (2)$$

T ist die Länge des Belichtungszeitintervalls, d.h. des Zeitintervalls, über das hinweg die Abbildung der Erfassungsstruktur auf das Kamerabild stattgefunden hat. I ($s_x$) ist die Intensitätsverteilung der nicht verschmierten, abzubildenden Erfassungsstruktur. Die letzte Zeile der Gleichung (1) enthält die Ersetzung des Integrals durch eine vereinfachte Schreibweise der Faltung des Faltungskerns k mit der Intensitätsverteilung I. Die Faltung ist abhängig von der Ortsvariablen x. Für den Faltungskern k gilt Folgendes:

$$k(\ell) = \begin{cases} \dfrac{1}{v_x T} & \ell \in [0, v_x T] \\ 0 & \text{sonst} \end{cases} \qquad (3)$$

Dabei ist $\ell$ ist eine Ortsvariable in Richtung der x-Achse.

Im Folgenden wird der entsprechende zweidimensionale Fall beschrieben. Die Relativbewegung findet mit einer bezüglich Richtung und Betrag konstanten Geschwindigkeit in einer x-y-Ebene statt und verläuft senkrecht zur optischen Achse der Abbildung. Die Geschwindigkeit wird daher eindeutig durch ihre Komponenten $v_x$ in Richtung der x-Achse und $v_y$ in Richtung der senkrecht zur x-Achse verlaufenden y-Achse beschrieben. $s_y$ ist dementsprechend der von der Zeitvariable t abhängige, seit Beginn des Belichtungsintervalls zurückgelegte Weg in y-Richtung. Die Funktion $\delta$ ist die Dirac-Funktion auch Delta-Distribution genannt. Gleichung (4) lautet demnach:

$$GW(x, y) = \frac{1}{T} \int_{-T}^{0} I\big(x + v_x t, \quad y + v_y t\big)\, dt$$

$$= \frac{1}{T} \int_{x - v_x T}^{0} \int_{y - v_y T}^{0} I(s_x, s_y)\, \delta\left(\frac{s_x - x}{v_x} - \frac{s_y - y}{v_y}\right) \frac{1}{\sqrt{v_x^2 + v_y^2}}\, ds_y\, ds_x$$

$$= \int_{-\infty}^{\infty} \int_{-\infty}^{\infty} k(x - s_x, y - s_y)\, I(s_x, s_y)\, ds_y\, ds_x \qquad (4)$$

Da es sich um den zweidimensionalen Fall handelt, sind zwei Laufvariablen definiert, nämlich $\ell_x$ in x-Richtung und $\ell_y$ in y-Richtung. Der Faltungskern k ist dementsprechend durch folgende Gleichung (5) beschrieben:

$$k(\ell_x, \ell_y)$$

$$= \begin{cases} \dfrac{1}{T \sqrt{v_x^2 + v_y^2}} & \ell_x \in [0, v_x T], \ell_y \in [0, v_y T] \text{ und } \dfrac{\ell_x}{v_x} = \dfrac{\ell_y}{v_y} \\ 0 & \text{sonst} \end{cases} \qquad (5)$$

Wiederum lässt sich die Grauwertverteilung daher als Faltung eines Faltungskerns mit der Intensitätsverteilung der nicht verschmierten Erfassungsstruktur ausdrücken:

$$GW(x, y) = (k * I)(x, y) \qquad (6)$$

Wie die Gleichung (1), letzte Zeile, Gleichung (6) für vereinfachte Fälle konstanter Geschwindigkeit senkrecht zur optischen Achse ausdrücken, kann die Bildwerteverteilung des Bildes der von der Kamera erfassten Erfassungsstruktur durch die Faltung eines Faltungskerns k mit der Intensitätsverteilung ausgedrückt werden. Da die Intensitätsverteilung die Erfassungsstruktur in dem ursprünglichen, nicht aufgrund einer Bewegung verschmierten Zustand beschreibt und da sich der durch die Bewegung im Kamerabild verschmierte Zustand aus der Bildwerteverteilung ergibt, enthält der Faltungskern k die Information über die Geschwindigkeit der Relativbewegung, die zu dem verschmierten Kamerabild geführt hat.

Für den Faltungskern k kann nun eine Länge definiert werden, die über die Belichtungszeit bzw. Integrationszeit und die Abbildungsgeometrie mit der Geschwindigkeit zusammenhängt. Durch die Bestimmung der Länge kann daher die Geschwindigkeit ermittelt werden. Dies setzt selbstverständlich zunächst die Ermittlung des Faltungskerns voraus. Darauf wird noch näher eingegangen. Insbesondere kann die Erfassungsstruktur so gewählt werden, dass in dem zentralen örtlichen Bereich des Faltungskerns, der nicht den geometrischen Rand des Faltungskerns bildet, eine geometrische Teilstruktur des Faltungskerns enthalten ist und die Länge dieser Teilstruktur die genannte Länge ist, welche der Größe und/oder Richtung der Geschwindigkeit entspricht.

Im Folgenden werden Beispiele für Erfassungsstrukturen beschrieben, bei denen diese Teilstruktur lediglich der Größe eines einzigen Pixels des Kamerabildes entspricht, wenn die Geschwindigkeit null ist (und wenn ansonsten keine Abbildungsfehler oder andere Einflüsse existieren, die zu einer Verschmierung der Erfassungsstruktur im Kamerabild führen). Wenn dagegen der Betrag der Geschwindigkeit nicht null ist, vergrößert sich die Teilstruktur, sodass deren Größe durch die genannte Länge beschrieben werden kann, die dem Betrag und/oder der Richtung der Geschwindigkeit entspricht. Z.B. kann die Teilstruktur der Größe von zwei einander benachbarten Pixeln des Kamerabildes entsprechen. Dies bedeutet, dass vom Beginn des Belichtungsintervalls bis zum Ende des Belichtungsintervalls eine Bewegung stattgefunden hat, die zum Versatz der Erfassungsstruktur aus Sicht der Kamera um ein Kamerapixel geführt hat. Dies gilt insbesondere für den Fall konstanter Geschwindigkeit. Die Teilstruktur ergibt sich in dem zentralen Bereich aus dem Unterschied der Bildwerte (z.B. Grauwerte oder Farbwerte) zu der Umgebung der Teilstruktur im zentralen Bereich. Z.B. wird die Teilstruktur durch konstante Bildwerte in einem zusammenhängenden örtlichen Teilbereich des zentralen Bereichs des Faltungskerns definiert, während außerhalb der Teilstruktur im zentralen Bereich konstante Bildwerte auf einem anderen Bildwerteniveau als für die Teilstruktur liegen. Insbesondere kann durch geeignete Normierung der Faltung erreicht werden, dass die Bildwerte der Teilstruktur den Wert "1" in einem möglichen Bildwerteintervall von [0, 1] haben, während der zentrale Bereich außerhalb der Teilstruktur durch konstante, niedrigere Bildwerte beschrieben wird, z.B. durch die Bildwerte "0". Da der Faltungskern aber insbesondere als Ortsfunktion interpretiert werden kann, deren Skalierung der Matrix des Kamerabildes entspricht, ist der zentrale Bereich des Faltungskerns insbesondere entsprechend der Unterteilung des Kamerabildes in Pixel digital strukturiert. An den Rändern der Teilstruktur des Faltungskerns kann es daher Unschärfen geben, d.h. Bildwerte zwischen dem an sich konstanten Niveau der Bildwerte der Teilstruktur und dem an sich konstanten Niveau der Bildwerte außerhalb der Teilstruktur. In diesem Fall kann dennoch die Größe der Teilstruktur und damit insbesondere die genannte Länge ermittelt werden. Verfahren zur Bestimmung der Größe der Teilstruktur sind aus der Bildverarbeitung für die Identifizierung von Objekten, die im Kamerabild unscharfe Ränder haben, bereits bekannt. In dieser Beschreibung wird daher nicht näher darauf eingegangen.

Wie bereits erwähnt, kann nicht nur der Betrag der Geschwindigkeit, sondern auch deren Richtungsverlauf und/oder zeitliche Änderung aus der Geometrie der Teilstruktur im zentralen Bereich des Faltungskerns ermittelt werden. Insbesondere führt eine Relativbewegung mit nicht konstantem Betrag der Geschwindigkeit zu Bildwerten in der Teilstruktur des Faltungskerns, die nicht konstant sind. Die Bildwerte der den Pixeln im Kamerabild entsprechenden örtlichen Bereiche (im Folgenden der Einfachheit wegen ebenfalls Pixel genannt) können daher z.B. lediglich in einem zentralen Bereich der Teilstruktur konstant hohe oder konstant niedrige Werte haben. Es ist aber auch möglich, dass aufgrund der Art der Zunahme oder Abnahme des Geschwindigkeitsbetrages auch in einem zentralen Bereich der Teilstruktur keine konstanten Werte von Pixeln zu finden sind, d.h. es gibt keine zwei benachbarten Pixel, deren Bildwerte gleich groß sind. Dennoch ist die Bestimmung der Größe der Teilstruktur z.B. mit den erwähnten bereits bekannten Verfahren möglich. Aus dem Verlauf der Bildwerte entlang der Erstreckung der Teilstruktur kann außerdem Information über den zeitlichen Verlauf der Geschwindigkeit während des Belichtungszeitintervalls gewonnen werden. Dem liegt die Erkenntnis zugrunde, dass sich die Pixel der Teilstruktur des Faltungskerns wie die Pixel des Kamerabildes verhalten: Bei einer langsameren Bewegung erhält das jeweilige Pixel des Kamerabildes mehr Strahlungsintensität als bei langsamerer Bewegung, wenn ein entsprechender Ortsbereich mit hoher Strahlungsemission und/oder hoher Strahlungsreflektivität auf dieses Pixel abgebildet wird und ein entsprechend der Bewegung nachfolgender örtlicher Bereich der Erfassungsstruktur eine geringere Strahlungsemission und/oder Strahlungsreflektivität hat. In dem vereinfachten Beispiel der obigen Gleichungen (1) und (5) entspricht der Erstreckung der Teilstruktur in Bewegungsrichtung die Laufvariable $\ell$, auch wenn die Beispiele für den vereinfachten Fall der konstanten Geschwindigkeit beschrieben wurden. Es lässt sich aber auch für einen entsprechenden Faltungskern bei nicht konstanter Geschwindigkeit eine entsprechende Laufvariable definieren, die lediglich in dem Bereich der Erstreckung der Teilstruktur nicht verschwindende Werte hat. Insbesondere für den Fall, dass sich auch die Richtung der Bewegung während des Belichtungszeitintervalls ändert, soll hiermit nochmals klargestellt werden, dass die Länge der Teilstruktur des Faltungskerns im Allgemeinen nicht eine in gerader Richtung zu bestimmende Länge ist, sondern eine dem durch die Bewegung zurückgelegten Weg entsprechende Länge ist. Auf ein Beispiel wird noch anhand von Fig. 9 eingegangen.

Bestimmte Klassen von Erfassungsstrukturen können auf einfache Weise hergestellt werden und ermöglichen eine besonders einfache und Rechenzeit sparende Bestimmung des Faltungskerns. Auch können die sich daraus ergebenden Teilstrukturen der Faltungskerne besonders einfach insbesondere in der oben beschriebenen Weise ausgewertet werden. Eine solche Klasse von Erfassungsstrukturen sind die sogenannten MURA (Modified Uniformly Redundant Arrays), die die Eigenschaft haben, dass sie gefaltet mit ihrer inversen Struktur einen einzigen Intensitätspeak ergeben. Dem entspricht eine mathematische Delta-Funktion. Insbesondere wird die Größe der Strukturen des verwendeten insbesondere binären MURA so auf die Geometrie der Abbildung und Auflösung des Kamerabildes abgestimmt, dass der Intensitätspeak einem einzigen Pixel des Kamerabildes entspricht. Der entsprechende örtliche Bereich der genannten Teilstruktur im zentralen Bereich des Faltungskerns hat daher die Abmessungen eines einzigen Pixels, wenn keine Verschmierung und keine Abbildungsfehler auftreten. Nicht nur für MURA wird diese Abstimmung der Geometrie der Abbildung und der Bildauflösung der Kamera bevorzugt.

Allerdings lässt sich diese Bedingung abhängig von der Art der Bewegungsverfolgung beim Betrieb der Maschine nicht immer aufrechterhalten. Z.B. ändert sich die Geometrie der Abbildung mit der Entfernung der Erfassungsstruktur von der Kamera. In diesem Fall können entsprechende Korrekturen der Entfernung vorgenommen werden und/oder kann die Auswertung der Teilstruktur des Faltungskerns unter Berücksichtigung der veränderten Geometrie der Abbildung vorgenommen werden. Vorzugsweise werden daher die Geometrie der Abbildung und insbesondere die Entfernung der Erfassungsstruktur von der Kamera ermittelt und mit berücksichtigt.

Alternativ kommt auch die Klasse der URA (Uniformly Redundant Arrays) für eine einfache Bestimmung und Auswertung des Faltungskerns infrage. URA ergeben mit sich selbst gefaltet einen Delta-Funktions-Peak als Ergebnis.

Sowohl MURA als auch URA sind insbesondere binäre Strukturen. Z.B. werden sie für die Bestimmung des Faltungskerns so gewählt, dass lediglich die auf das Intervall [0, 1] normierten Bildwerte vorkommen. Ein Beispiel für ein MURA 41 ist in Fig. 8 dargestellt. Man erkennt die zum Mittelpunkt der dargestellten Fläche des MURA punktsymmetrische Struktur.

Im Fall einer Erfassungsstruktur, die mit Barker-Code erstellte Teilstrukturen aufweist, hat der Faltungskern bei der Relativgeschwindigkeit 0 folgende Eigenschaften:

In Verallgemeinerung der obigen Gleichungen (1) und (6) kann der Faltungskern dadurch ermittelt werden, dass auf die (rechts der genannten Gleichungen stehende) Faltung diejenige Operation angewendet wird, die die Intensitätsverteilung der Erfassungsstruktur eliminiert. Die Art der Operation ist daher insbesondere von der Art oder Klasse der Erfassungsstruktur abhängig. Z.B. bei MURA wird der Ausdruck, der die Faltung des Faltungskerns mit der Intensitätsverteilung der Erfassungsstruktur beschreibt, mit der inversen Erfassungsstruktur gefaltet. Es muss daher lediglich auf die erhaltene Grauwertverteilung die entsprechende Operation angewendet werden und es ergibt sich der Faltungskern k. Im Fall der URA ist dies die Faltung der Bildwerteverteilung mit der Intensitätsverteilung der Erfassungsstruktur. Es ist daher lediglich eine einzige Faltungsoperation erforderlich, um den Faltungskern zu bestimmen. Insbesondere kann, wie bereits erwähnt, auch bei der Auswertung des Faltungskerns ein Abbildungsfehler der Abbildung mitberücksichtigt werden. Insbesondere kann in einer vorab ausgeführten Kalibrierung des Bewegungsmesssystems für zumindest eine Relativposition und vorzugsweise für verschiedene Relativpositionen von Erfassungsstruktur und Kamera jeweils ein Faltungskern bestimmt werden, wenn keine Relativbewegung stattfindet. Durch Auswertung des Faltungskerns kann das Ergebnis des Abbildungsfehlers ermittelt werden und beim späteren eigentlichen Betrieb des Bewegungsmesssystems berücksichtigt werden.

Vorzugsweise setzt sich eine Erfassungsstruktur aus mehreren aneinander grenzenden Teilbereichen zusammen, die in der Art von Kacheln eine Gesamtfläche ohne Lücken ergeben. Ein Beispiel ist die aus drei Zeilen mit je drei Teilbereichen zusammengesetzte Gesamtfläche aus neun Kacheln, die in Fig. 9 dargestellt ist. Drei der Kacheln, nämlich die Kacheln in der ersten Zeile, sind mit dem Bezugszeichen 51 bezeichnet. Der Teilbereich bzw. die Kachel im Zentrum der Anordnung ist mit dem Bezugszeichen 51e bezeichnet. Jeder der Teilbereiche wird vorzugsweise durch dasselbe Muster gebildet, sodass die Muster sich aufgrund der Kachelung periodisch wiederholen. Es ist auch möglich, durch Muster und in benachbarten Teilbereichen invertierte Muster solch periodische Strukturen als Erfassungsstruktur zu erzeugen. Die periodischen Strukturen haben den Vorteil, dass Randeffekte aufgrund der endlichen Abmessungen der Erfassungsstruktur bei der Bestimmung des Faltungskerns im zentralen Bereich keine oder lediglich geringe Auswirkungen haben. Abhängig von der Anzahl der zentralen, nicht den Rand der gesamten Erfassungsstruktur ergebenden Muster gibt es ein oder mehrere zentrale Bereiche, in denen jeweils die oben genannte Teilstruktur des Faltungskerns vorhanden ist, welche zur Ermittlung der Relativgeschwindigkeit ausgewertet werden kann. Mehrere solcher zentralen Bereiche können optional gleichzeitig oder nacheinander ausgewertet werden. Dies ermöglicht es insbesondere, die Genauigkeit bei der Ermittlung der Geschwindigkeit zu steigern, wenn noch Randeffekte auch im zentralen Bereich festzustellen sind und/oder wenn sonstige Effekte, wie z.B. statistische Schwankungen der Bildsignale der Kamerasensoren (Rauschen) vorkommen.

Die Darstellung in Fig. 9 kann als schematische Darstellung eines Faltungskerns verstanden werden, der sich durch Faltung der Bildwerteverteilung aus einem Kamerabild ergibt. Im zentralen Bereich 51e sind zwei Teilstrukturen 53, 54 dargestellt, die nicht gleichzeitig in demselben Faltungskern zu beobachten sind, sondern die mögliche Varianten der Teilstruktur darstellen. Die Teilstruktur 53 ist z.B. eine geradlinige Struktur, die sich aus von rechts nach links in der Figur hintereinander gereihten Pixeln ergibt. Die Länge $\ell$ entspricht dem Betrag der Relativgeschwindigkeit unter Berücksichtigung der Geometrie der Erfassungsstruktur und der Geometrie der Abbildung. Auch die Richtung der Bewegung mit der konstanten Geschwindigkeit kann aus der Teilstruktur 53 entnommen werden, falls dies von Interesse ist und nicht bereits durch die Eigenschaften der Maschine bekannt ist.

Die Teilstruktur 54 weist einen gebogenen Verlauf auf, da die Geschwindigkeit während des Belichtungszeitintervalls ihre Richtung geändert hat. Der gebogene Verlauf entspricht dem gebogenen Weg der Bewegung. Obwohl nicht dargestellt, kann die Länge der Teilstruktur 54 als Länge des gebogenen Verlaufs ermittelt werden. Dadurch wird der Betrag der Geschwindigkeit bzw. der Mittelwert des Betrages der Geschwindigkeit ermittelt. Der gebogene Verlauf enthält die Information über die Bewegungsrichtung.

Wenn sich die Erfassungsstruktur in einer Ebene erstreckt, die nicht senkrecht zur Abbildung der optischen Achse verläuft, werden die Abbildungen der einzelnen Kacheln, die an sich gleiche Muster aufweisen, als unterschiedliche Muster im Kamerabild abgebildet. Dies kann jedoch insbesondere unter Verwendung von Informationen über die Neigung der Ebene relativ zur optischen Achse vor, während und/oder nach der Auswertung des Kamerabildes berücksichtigt werden.

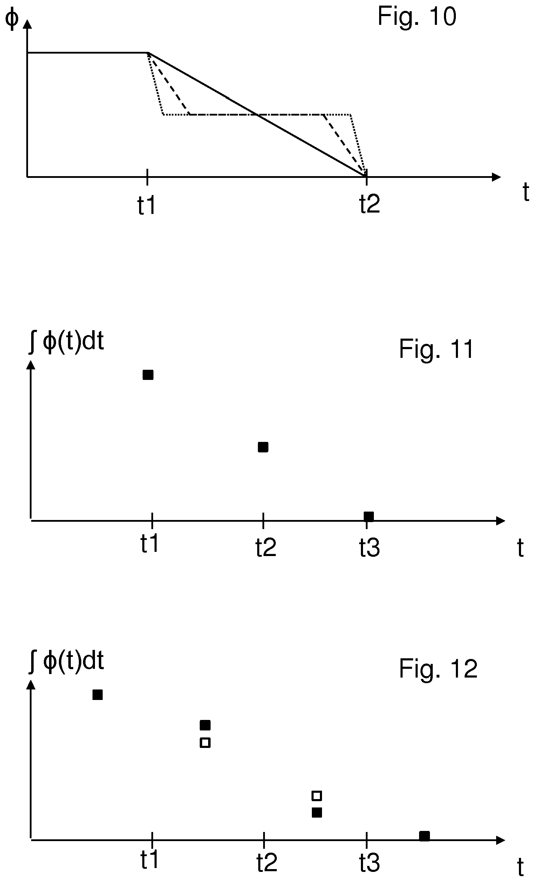

Fig. 10 zeigt zeitliche Verläufe der Strahlungsflussdichte $\Phi$ auf ein Sensorelement der Kamera, welches ein Kamerabild-Pixel erzeugt, wobei die Verläufe für drei unterschiedliche Bewegungen dargestellt sind. Das Kamerapixel enthält die integrierte Information über die durch das Sensorelement empfangene Strahlung über das Belichtungszeitintervall, welches zum Zeitpunkt t1 beginnt und zum Zeitpunkt t2 endet. In allen drei dargestellten Fällen beginnt die Bewegung zum Zeitpunkt t1 und endet zum Zeitpunkt t2. Bis zum Zeitpunkt t1, also bis zum Beginn des Belichtungszeitraums, empfängt das Sensorelement Strahlung bei einer maximalen Strahlungsflussdichte. Durch die Bewegung nimmt die Strahlungsflussdichte jedoch bis zum Ende des Belichtungszeitintervalls zum Zeitpunkt t2 auf 0 ab. Eine erste Bewegung findet mit konstanter Geschwindigkeit während des Belichtungszeitintervalls statt. (durchgezogene Linie des Strahlungsflussdichteverlaufs). Eine zweite Bewegung verläuft im ersten Teil des Belichtungszeitintervalls mit konstanter Geschwindigkeit, stoppt dann und wird gegen Ende des Belichtungszeitintervalls wieder mit konstanter Geschwindigkeit in die gleiche Richtung wie zuvor fortgesetzt (gestrichelte Linie des Strahlungsflussdichteverlaufs). Ferner ist der Strahlungsflussdichteverlauf für eine dritte Bewegung ähnlich der zweiten Bewegung dargestellt, wobei jedoch der Zeitraum der Unterbrechung der Bewegung in der Mitte des Belichtungszeitintervalls größer ist und daher auch der Betrag der Geschwindigkeit zu Beginn und am Ende des Belichtungszeitintervalls größer ist. Dieser dritte Verlauf ist durch eine gepunktete Linie dargestellt.

In allen drei Fällen empfängt das Sensorelement die gleiche Strahlungsmenge. Dies folgt aus der Darstellung in Fig. 10 durch Integration der Strahlungsflussdichteverläufe über das Zeitintervall von t1 bis t2. Alle drei Flächen unter den Strahlungsflussdichteverläufen sind gleich groß. Daher kann das Sensorelement und die von ihm gelieferte Information nicht dazu genutzt werden, den Bewegungsverlauf während des Belichtungszeitintervalls zu identifizieren. Dies bezieht sich allerdings lediglich auf den dargestellten idealen Verlauf der Bewegungen, die genau zum Zeitpunkt t1 beginnen und genau zum Zeitpunkt t2 enden. Dies bezieht sich auch auf die Betrachtung lediglich eines einzigen Pixels. Wie bereits ausgeführt wurde, kann anhand der Betrachtung mehrerer Pixel Information über den zeitlichen Verlauf während des Integrationszeitintervalls gewonnen werden. Im Folgenden wird jedoch beschrieben, dass auch bereits die Betrachtung eines einzigen Kamerapixels zu einer Möglichkeit führt, den Informationsgehalt über den Verlauf der Bewegung im Kamerabild insgesamt zu erhöhen.

Fig. 11 zeigt die über ein Belichtungszeitintervall eines Sensorelements integrierte Strahlungsflussdichte $\int\phi(t)dt$. Jeweils zum Ende eines Integrationszeitintervalls zu den Zeitpunkten t1, t2 und t3 ist durch ein kleines dunkles Rechteck der Integrationswert dargestellt, den das Sensorelement liefert. Dabei findet eine Bewegung statt, die dem mit einer durchgezogenen Linie in Fig. 10 dargestellten Strahlungsflussdichteverlauf entspricht, d.h. die Geschwindigkeit ist während des Integrationszeitintervalls zwischen den Zeitpunkten t1 und t2 konstant und davor sowie danach null. Daher liegt der Integrationswert zum Zeitpunkt t1 bei dem maximal möglichen Wert. Zum Zeitpunkt t2 liegt der Integrationswert bei 50 % des maximalen Wertes und zum Zeitpunkt t3 (also ein vollständiges Integrationszeitintervall nach dem Ende der Bewegung) liegt der Integrationswert bei null.

Fig. 12 zeigt die Integrationswerte bei einer gegenüber Fig. 11 modifizierten Situation. Die Modifikation besteht darin, dass zwar nicht die Dauer der Integrationszeitintervalle geändert wurde, jedoch die Zeitpunkte des Beginns und des Endes des jeweiligen Integrationszeitintervalls. Dieselben Resultate würde man erhalten, wenn sich Beginn und Ende des Zeitintervalls der Bewegung mit konstanter Geschwindigkeit verschoben hätten.

Im Folgenden wird auf die Situation eingegangen, dass wie bei Fig. 11 der zeitliche Verlauf der Strahlungsflussdichte, die auf das Sensorelement einfällt, durch die durchgezogene Linie in Fig. 10 dargestellt ist. Das Belichtungszeitintervall beginnt jedoch immer um ein halbes Zeitintervall versetzt gegenüber der anhand von Fig. 11 beschriebenen Situation. Daher liegt der Integrationswert bei der Darstellung in Fig. 12 zum Zeitpunkt eines halben Integrationszeitintervalls vor dem Zeitpunkt t1 noch auf dem Maximalwert. Am Ende des nächsten Integrationszeitintervalls, genau in der Mitte zwischen den Zeitpunkten t1 und t2, liegt der Integrationswert aber lediglich um ein Viertel unter dem Maximalwert am Ende des nächsten Integrationszeitintervalls. In der Mitte der Zeitpunkte t2 und t3 liegt der Integrationswert bei einem Viertel des Maximalwertes. Erst am Ende des folgenden Integrationszeitintervalls nach dem Zeitpunkt t3 liegt der Integrationswert bei null, da die Bewegung erst zum Zeitpunkt t2 endet und erst das nach dem Zeitpunkt t3 beendete Integrationszeitintervall ein vollständiges Integrationszeitintervall ist, in dem keine Strahlung empfangen wurde.

Wenn dagegen die Bewegung stattfindet, die in Fig. 10 dem Verlauf der Strahlungsflussdichte entspricht, der mit einer gestrichelten Linie dargestellt ist, werden zwischen den Zeitpunkten t1 und t3 zwei andere Integrationswerte erhalten, die durch nicht dunkel ausgefüllte Rechtecke in Fig. 12 dargestellt sind. Dies liegt daran, dass in dem Integrationszeitintervall, das zwischen den Zeitpunkten t1 und t2 endet, die Strahlungsflussdichte schneller abgefallen ist, jedoch in dem Integrationsintervall, das zwischen den Zeitpunkten t2 und t3 endet, die Strahlungsflussdichte noch nicht so schnell abgefallen ist wie in dem anderen dargestellten Fall mit der durchgezogenen Linie in Fig. 10.

Daraus kann die Schlussfolgerung gezogen werden, dass die Lage des Integrationszeitintervalls einen Einfluss darauf hat, welche Integrationswerte und damit Bildwerte die einzelnen Sensorelemente der Kameramatrix liefern.

Diese Erkenntnis kann in unterschiedlicher Weise genutzt werden, um den Informationsgehalt über den zeitlichen Verlauf der Bewegung zu erhöhen und durch Auswertung des Kamerabildes oder einer Mehrzahl von Kamerabildern Information über den zeitlichen Verlauf der Bewegung zu ermitteln. Dies ermöglicht insbesondere die einfache Bestimmung von Betrag und Richtung der Geschwindigkeit, das heißt des Geschwindigkeitsvektors. In allen Fällen wird Information durch zumindest eine Kamera erfasst, die über unterschiedliche Integrationszeiträume integrierte Strahlungsmengen enthält. Eine einzige Kamera kann bereits ein Kamerabild liefern, dessen Pixel Integrationswerte von zeitversetzten, aber z.B. gleich langen Integrationszeiträumen sind. Solche Kameras werden auch als sogenannte Kameras mit rollendem Verschluss bezeichnet (englisch: rolling shutter cameras). Bei Verwendung einer einzigen Kamera mit zeitlich versetzten Integrationszeiträumen wird bevorzugt, dass die insgesamt von dem Kamerabild erfasste Erfassungsstruktur in verschiedenen Teilbereichen redundante Information enthält. Z.B. erfasst die Kamera eine erste Hälfte der Erfassungsstruktur mit der oberen Hälfte des Kamerabildes und die zweite Hälfte der Erfassungsstruktur mit der unteren Hälfte des Kamerabildes. Wenn sich die Integrationszeiträume der oberen Hälfte und der unteren Hälfte des Kamerabildes unterscheiden und sich in der ersten Hälfte und der zweiten Hälfte der Erfassungsstruktur redundante Strukturinformation befindet, wird der Informationsgehalt in dem Kamerabild erhöht. Alternativ oder zusätzlich ist es möglich, eine Mehrzahl von Kameras zu verwenden, deren Integrationszeiträume sich unterscheiden.

In allen Fällen können sich die Integrationszeiträume nicht oder nicht lediglich dadurch unterscheiden, dass sie zeitlich gegeneinander versetzt sind. Vielmehr kann sich (auch) die Dauer bzw. Länge der Integrationszeiträume unterscheiden.

Eine weitere Überlegung verdeutlicht, dass aus einem oder mehreren Kamerabildern mit Bildinformation, die aus unterschiedlichen Integrationszeiträumen der Integration von Strahlung stammt, die Geschwindigkeit der Bewegung und/oder der zeitliche Verlauf der Bewegung ermittelt werden kann. Allgemein formuliert kann daher das Kamerabild Pixel aufweisen, deren Bildwerte jeweils einer über ein Belichtungszeitintervall integrierten Strahlungsmenge entsprechen, wobei sich die Belichtungszeitintervalle verschiedener Pixel des Kamerabildes voneinander unterscheiden und wobei unter Berücksichtigung von Informationen über die unterschiedlichen Belichtungszeitintervalle die Geschwindigkeit der Relativbewegung und/oder Informationen über einen zeitlichen Verlauf der Bewegung ermittelt wird/werden. Bereits aus einem einzigen Kamerabild mit Bildinformation, die aus unterschiedlichen Integrationszeiträumen stammt, kann/können die Orientierung und/oder der zeitliche Verlauf der Bewegung ermittelt werden.

Wird zum Beispiel eine linienförmige Struktur, die sich quer zur Längserstreckung der Linie bewegt, mit Pixeln aus gegeneinander versetzten Integrationszeiträumen erfasst, ergibt sich ein Versatz der Linie. Nimmt beispielsweise ein erstes Pixel den einen Endabschnitt der Linie über ein erstes Zeitintervall auf, nimmt ein zweites Pixel den mittleren Abschnitt der Linie über ein zweites, gegen das erste Zeitintervall um ein Drittel versetztes Zeitintervall auf und nimmt ein drittes Pixel den anderen Endabschnitt der Linie zu einem dritten, um zwei Drittel gegen das erste Zeitintervall versetztes Zeitintervall auf, ergeben sich in dem gesamten Kamerabild drei Linien, die jeweils einem Drittel den drei Abschnitten der ursprünglichen Linie entsprechen. Unter Berücksichtigung des Zeitversatzes der Zeitintervalle kann die Geschwindigkeit berechnet werden und/oder der zeitliche Verlauf der Geschwindigkeit und/oder die Orientierung der Bewegung ermittelt werden. Je nach Orientierung, unterscheidet sich die Anordnung der drei Linien im Kamerabild.

Daher wird vorzugsweise die Erfassungsstruktur so ausgelegt, dass sie Information (zum Beispiel Kantenverläufe oder eine bekannte Binärstruktur) enthält, die bei unterschiedlichen Zeitintervallen der Strahlungsintegration zur Ermittlung der Geschwindigkeit genutzt werden kann. Z. B. kann durch entsprechende Wahl der Objektinhalte der Erfassungsstruktur erreicht werden, dass die Verschmierung im Kamerabild errechnet werden kann, um anschließend aus dem Versatz in den Teilbereichen (z. B. Zeilen) des Bildes die Geschwindigkeit im zu errechnen.

Insbesondere ist eine an sich bekannte Digitalkamera verwendbar, die eine Sensormatrix mit zumindest einer Zeile von Sensorelementen hat, deren Integrationswerte nacheinander in der Reihenfolge der Sensorelemente entlang der Zeile aus gelesen werden und als Bildwerten der Pixel des Kamerabildes genutzt werden. Aus der Dauer für das Auslesen der Bildwerte einer Zeile ergibt sich die Zeilengeschwindigkeit. Im Fall einer zweidimensionalen Sensormatrix mit in Zeilen und Spalten angeordneten Sensorelementen können die einzelnen Zeilen (oder alternativ die einzelnen Spalten) nacheinander mit der Zeilengeschwindigkeit ausgelesen werden. Insbesondere kann daher aus dem örtlichen Versatz (d.h. einer Positionsverschiebung) der durch verschiedene Zeilen oder verschiedene Spalten eines zweidimensionalen Kamerabildes erfassten Kamerabildes der Erfassungsstruktur die Geschwindigkeit ermittelt werden.

Ein Bild einer Erfassungsstruktur, das von einer einzelnen Zeile von Sensorelementen, aufgenommen wird, kann zunächst nicht von der Geschwindigkeit Null unterschieden werden, wenn sich die Erfassungsstruktur mit der Zeilengeschwindigkeit der Kamera bewegt. Allerdings führt die Bewegung des Objektes (der Erfassungsstruktur) anders als bei einem nicht bewegten Objekt zu einer Verschmierung, abhängig von Geschwindigkeit und Belichtungszeit der einzelnen Sensorelemente. Wie andernorts in dieser Beschreibung beschrieben kann daher die Geschwindigkeit anhand der Verschmierung bzw. Veränderung des Bildes der Erfassungsstruktur gegenüber der nicht bewegten Erfassungsstruktur ermittelt werden.

Allgemeiner formuliert wird es daher bevorzugt, die Kenntnis über die unterschiedlichen Integrationszeitintervalle mit der Geschwindigkeitsmessung unter Berücksichtigung der Informationen über die tatsächliche Erscheinung der Erfassungsstruktur zu kombinieren. Insbesondere wird die Erfassungsstruktur daher so konzipiert und hergestellt, dass sie sowohl anhand von Verschmierungen als auch durch Effekte der unterschiedlichen Integrationszeitintervalle eine Ermittlung der Relativbewegung von Kamera und Erfassungsstruktur ermöglichen.

Vorteilhaft kann eine Mehrzahl von Kameras, zumindest zwei Kameras, mit insbesondere gleichgroßer Anzahl von Zeilen und Spalten der Sensorelemente und gleicher Zeilengeschwindigkeit verwendet werden. Dabei unterscheidet sich aber bei den verschiedenen Kameras die Reihenfolge, in der die von den Sensorelementen über die individuellen Integrationszeitintervalle aufintegrierten Strahlungsmengen als Bildwerte ausgelesen werden. Zum Beispiel bei einem Auslesen der Bildwerte zweier Kameras kann das Auslesen bei der ersten Kamera mit dem Sensorelement in der ersten Zeile und der ersten Spalte beginnen (oder bei Zeilenkameras mit dem ersten Sensorelement) und kann das Auslesen bei der zweiten Kamera mit dem Sensorelement in der letzten Zeile und der letzten Spalte beginnen (oder bei Zeilenkameras mit dem letzten Sensorelement der Zeile). Handelsübliche Kameras lesen die Bildwerte zeilenweise gleichzeitig aus. In diesem Fall kann das Auslesen bei der ersten Kamera zum Beispiel mit der ersten Zeile und bei der zweiten Kamera mit der letzten Zeile beginnen. Bei einer anderen Ausgestaltung kann das Auslesen im zentralen Bereich der Matrix (z. B. bezüglich der Zeilen und/oder der zweidimensionalen Matrix) gleichzeitig bei beiden oder allen Kameras beginnen, wobei jedoch die Sensorelemente in umgekehrter Reihenfolge ausgelesen werden. Bei zeilenweise gleichzeitigem Auslesen beginnt das Auslesen bei der ersten Kamera zum Beispiel mit der letzten Zeile der ersten Hälfte der Zeilen und bei der zweiten Kamera mit der ersten Zeile der zweiten Hälfte der Zeilen. Das Auslesen findet insbesondere mit gleicher Zeilengeschwindigkeit und bei zweidimensionalen Matrizen Zeile für Zeile nacheinander statt. Dies kann allgemein als gekreuztes Auslesen bezeichnet werden. Dabei sind die Matrizen der Sensorelemente der verschiedenen Kameras insbesondere in gleicher Weise auf die Erfassungsstruktur ausgerichtet, d.h. derselbe oder ungefähr derselbe Bereich der Erfassungsstruktur wird durch das erste Sensorelement der jeweiligen Kamera erfasst. Das gekreuzigte auslesen kann zum Beispiel dadurch auf einfache Weise erreicht werden, dass zwei gleichartige Kameras mit rollierendem Auslesen relativ zueinander mit ihren optischen Achsen um 180° gedreht auf die Erfassungsstruktur ausgerichtet werden. Zum Beispiel können die Kameras zunächst in gleicher Weise auf die Erfassungsstruktur ausgerichtet werden und dann eine der Kameras um 180° um Ihre optische Achse gedreht werden.

Dieses spezielle Beispiel verdeutlicht, dass allein durch Berücksichtigung des örtlichen Versatzes der gleichzeitig aufgenommenen Kamerabilder der beiden Kameras Information über die Relativbewegung aufgenommen wird, die vorzugsweise zur Bestimmung der Geschwindigkeit und/oder zumindest einer anderen klimatischen Größe der Bewegung genutzt wird.

Insbesondere bei Verwendung von mehr als zwei Kameras wird bevorzugt, dass die Reihenfolge des Auslesens der Sensorelemente sich bei allen Kameras unterscheidet und/oder dass einander entsprechende, denselben Bereich der Erfassungsstruktur erfassende Sensorelemente bei den verschiedenen Kameras zeitversetzt aus gelesen werden.

Durch die unterschiedliche Reihenfolge des Auslesens wird insbesondere bei mehr als zwei Kameras eine Homogenisierung des Auflösungsvermögens des Kameraensembles bei der Erfassung der Bewegung in unterschiedlichen Raumrichtungen erreicht, so dass in die Objektgeschwindigkeiten in den unterschiedlichen Raumrichtungen mit annähernd gleicher Genauigkeit gemessen werden können.

Vorteilhaft ist es, die Erfassungsstruktur derart herzustellen, dass sie keine periodischen Strukturelemente enthält, welche im geplanten Objektgeschwindigkeitsspektrum zu nicht eindeutigen Bildern führen, wie dies z.B. bei einem scheinbaren Rückwärtsdrehen eines vorwärts drehenden Speichenrades mit einer Filmkamera bei entsprechenden wiederholt Frequenzen der Bildaufnahme der Fall ist.

Der zeitversetzte Betrieb mehrerer Kameras ist auch eine Möglichkeit, die Auflösung der Geschwindigkeitsmessung zu steigern. Alternativ oder zusätzlich ermöglicht dieser zeitversetzte Betrieb eine Bewegungsmessung mit Ermittlung von Tiefeninformation. E

Eine weitere vorteilhafte Möglichkeit zur Vermeidung des Problems, dass es bei bestimmten Kombinationen aus Geschwindigkeiten und Objektinhalten zu nicht umkehrbaren oder uneindeutigen Ergebnissen kommen kann, besteht in der Verwendung von Rolling-Shutter-Ausleseverfahren bei mehr als einer Kamera, in denen nicht nur eine Ausleserichtung vorkommt. Beispiele dazu wurden bereits genannt. Insbesondere kann auch die Auslesereihenfolge beim Auslesen der Bildwerte jeweils derselben Kamera insbesondere nach dem auslesen eines vollständigen Kamerabildes geändert werden. Alternativ oder zusätzlich können auch Ausleseverfahren angewendet werden, die rollierendes Auslesen zur Bildung eines Kamerabildes bei zumindest einer Kamera mit gleichzeitigem Auslesen aller Sensorelemente zur Bildung eines Kamerabildes bei zumindest einer anderen Kamera kombinieren, bei denen sich die Auslesefrequenzen bei den verschiedenen Kameras des Ensembles unterscheiden. Dadurch kann gewährleistet werden, dass eindeutige Bildinformationen aufgenommen werden.

Alternativ oder zusätzlich kann die Erfassungsstruktur im Laufe der Zeit verändert werden, zum Beispiel unter Verwendung zumindest eines Displays, und/oder verschiedene Strukturelemente durch unterschiedliche Farben (durch Reflexion und/oder Emission von Strahlung) zu realisieren. In dem letztgenannten Fall werden farbempfindliche Kameras verwendet. Dies beruht jedoch auf demselben Grundansatz wie bei der Verwendung von Kameras oder Kamerabereichen mit unterschiedlichen Integrationszeitintervallen. Zeitliche Variabilität der Erfassungsstruktur kann beispielsweise dadurch erreicht werden, dass die Erfassungsstruktur zumindest ein Display aufweist, welches eine durch das Display dargestellte Grauwertverteilung im Laufe der Zeit verändert. Dabei kann der Zustand der Grauwertverteilung abhängig von zumindest einem Parameter der Maschine gewählt werden. Auf diese Weise kann (im Frequenzraum) der Zustand der Erfassungsstruktur (insbesondere der Frequenzinhalt der Erfassungsstruktur) an die momentane (zum Beispiel von der Antriebssteuerung beabsichtigte) zu messende Geschwindigkeit angepasst werden.

In einer Ausführungsform kann die kontinuierliche Grauwertverteilung betriebsparameterabhängig auf zumindest einem selbstleuchtenden Display dargestellt werden, wobei das Pixelrastern des Displays insbesondere klein im Vergleich zur Auflösung der Abbildung auf das Kamerabild ist. Insbesondere kann die Information über die gemessene Geschwindigkeit des beweglichen Teils der Maschine und optional auch des aus dem Kamerabild ermittelten Ortes verwendet werden, um unter Berücksichtigung der geplanten Trajektorie der Bewegung mit einem optionalen Sicherheitszuschlag für zu erwartende Bahnabweichungen vor ab den auszuwertenden Teilbereich des Kamerabildes festzulegen. Auf diese Weise kann aus Einzelbildern die Regelgröße Istgeschwindigkeit und optional auch Istposition für die Regelung der Bewegung des beweglichen Teils erzeugt werden.

Die aus der Geschwindigkeitsmessung gewonnene Information kann insbesondere auch dazu verwendet werden, die Verschmierungen der Erfassungsstruktur im Kamerabild an zu korrigieren. Damit kann die Auflösung und/oder die Genauigkeit für eine Bestimmung der Position des beweglichen Teils durch Auswertung des Kamerabildes gesteigert werden.

Zur Stabilisierung von Messungen von Orts- und Geschwindigkeitskomponenten in Richtung der optischen Ache oder ungefähr in Richtung der optischen Achse der Abbildung können stereoskopische Bilder verwendet werden. Dies schließt nicht aus, dass mehr als zwei Kameras, sondern zum Beispiel drei oder vier Kameras verwendet werden, und deren Bilder zum Beispiel unter Berücksichtigung der Position und Ausrichtung der Kamera gemeinsam ausgewertet werden. Auf diese Weise kann Tiefeninformationen erhalten werden, das heißt ein 3D-Bild des beweglichen Teils erstellt und ausgewertet werden. Dabei können zum Beispiel bekannte Verfahren der Trennung polarisierter Strahlung durch Polarisationsfilter oder Trennung von Strahlung unterschiedlicher Wellenlänge (Farbe) angewendet werden. Auch bei stereoskopischen Verfahren ist es zusätzlich möglich, verschiedene Kamerabilder und/oder Teilbereiche von Kamerabildern unter Berücksichtigung unterschiedlicher Belichtungszeitintervalle auszuwerten, wie bereits beschrieben wurde.

Lediglich als Beispiel für eine bestimmte Art von Maschinen wurden zuvor Maschinen in Portalbauweise beschrieben. Die drei Linear-Bewegungsachsen können als gestapelte oder kaskadierte Bewegungsachsen bezeichnet werden, da eine Bewegung der jeweils logisch übergeordneten Bewegungsachse im Stapel bzw. der Kaskade zu einer Bewegung aller nachgeordneten Achsen im Stapel bzw. der Kaskade führt. In der Praxis kommen jedoch nicht nur gestapelte Bewegungsachsen mit Linearbewegungen vor. Vielmehr kann zumindest eine Achse eine Drehachse sein, d.h. es findet eine Drehbewegung statt, wenn die Bewegung ausgeführt wird. Es ist auch möglich, ausschließlich Drehbewegungsachsen zu stapeln bzw. zu kaskadieren.

Bisher, bei konventionellen Ausgestaltungen der Steuerung und/oder Regelung der Bewegung zumindest bezüglich einer Bewegungsachse einer Maschine wurde für die Messung der Bewegung ein Koordinatensystem zugrunde gelegt, das auf die jeweilige Achse bezogen ist. Findet z.B. in einer Achsstapelfolge eine Bewegungsmessung bezüglich einer Achse statt, die nicht die erste Achse in der Stapelfolge ist, bewegt sich das Koordinatensystem relativ zum ortsfesten Maschinenkoordinatensystem (das auch als Laborsystem oder Weltkoordinatensystem bezeichnet werden kann), wenn eine Bewegung zumindest einer übergeordneten Achse stattfindet. Die erfindungsgemäße Messung einer Bewegung ermöglicht es nun auf einfache Weise, die Bewegung des beweglichen Teils einer Maschine bezüglich des Laborkoordinatensystems zu messen. Hierzu kann die zumindest eine Kamera (wie oben an Beispielen bereits beschrieben) entweder an der Basis der Maschine und damit fest im Laborkoordinatensystem angeordnet sein oder die Erfassungsstruktur fest an der Basis angeordnet sein und die Kamera mit dem beweglichen Teil mitbewegt werden. Die Anzahl der verwendeten Kameras hängt insbesondere von der Art der Bewegungsmessung und/oder von der Bauweise der Maschine sowie von dem zu erfassenden Bewegungsbereich ab.

Insbesondere kann daher zur Erzeugung der jeweiligen kinematischen Größe (wie Position, Geschwindigkeit und/oder Beschleunigung) der Bewegung wiederholt ein Kamerabild aufgenommen werden und die kinematische Größe für jedes der Kamerabilder bestimmt werden. Dadurch kann jeweils aktuell für das zuletzt aufgenommene Kamerabild der Wert der kinematischen Größe ermittelt werden. Optional kann auch die Orientierung und/oder der zeitliche Verlauf der Bewegung wiederholt jeweils aus einem der Kamerabilder ermittelt werden. Insbesondere können daher lokale Messsysteme an bewegten Teilen (z.B. mit Maßstabsteilungen und optischen Leseköpfen an bewegten Teilen, die lediglich Pulssignale bei Erfassung einer Teilungsmarkierung liefern) durch die erfindungsgemäße Kamerabildauswertung ersetzt werden. Auch Tachometer von Antrieben können hierdurch ersetzt werden.

Bei der wiederholten Erfassung der Erfassungsstruktur kann die Erfassungsstruktur oder können Teilbereiche der Erfassungsstruktur hinsichtlich ihrer Relativbewegung verfolgt werden, insbesondere aus den verschiedenen, nacheinander aufgenommenen Kamerabildern jeweils identifiziert werden. Z.B. wird dabei eine Mehrzahl von Kameras verwendet, mit der die Bewegung desselben beweglichen Teils verfolgt wird. Dies schließt auch den bereits genannten Fall mit ein, dass die Mehrzahl von Kameras an dem beweglichen Teil mitbewegt wird und zumindest eine ortsfeste Erfassungsstruktur erfasst.

Insgesamt ist es daher insbesondere möglich, die Steuerung und/oder Regelung der Bewegung eines beweglichen Teils über zumindest einen entsprechenden Antrieb (z.B. Elektromotor) auf Basis zumindest einer kinematischen Größe auszuführen, die in dem Laborkoordinatensystem definiert ist und unmittelbar in diesem Koordinatensystem gemessen wird. Eine Umrechnung aus einem mitbewegten Koordinatensystem in das Laborkoordinatensystem kann daher entfallen. Auch entfällt eine entsprechende Kalibrierung durch Veränderungen der Lage des mitbewegten Koordinatensystems z.B. abhängig von dem jeweiligen Betriebszustand (etwa bei unterschiedlicher Belastung eines beweglichen Teils der Maschine oder bei unterschiedlichen Temperaturniveaus oder Temperaturverteilungen).

Insbesondere kann die Steuerung und/oder Regelung der Bewegung des beweglichen Teils unter Verwendung wiederholt aus den Kamerabildern ermittelter kinematischer Größen der Bewegung ausgeführt werden. Insbesondere wird aus jedem Kamerabild sowohl die Position des beweglichen Teils als auch dessen Geschwindigkeit und/oder Beschleunigung ermittelt. Da für die Geschwindigkeitsermittlung lediglich ein einziges, aktuelles Kamerabild benötigt wird, liegt für die Steuerung und/oder Regelung der Bewegung bereits mit geringer Verzögerung nach der Aufnahme eines einzigen Kamerabildes der Geschwindigkeitsmesswert vor. Die Reaktionszeit der Steuerung und/oder Regelung ist daher geringer als bei Auswertung mehrerer nacheinander aufgenommener Kamerabilder. Bei bekannten Steuerungen und/oder Regelungen auftretende Nachteile wie ein Oszillieren der Ausgangsgröße der Steuerung und/oder Regelung aufgrund verzögerter Bestimmung der Messgröße können daher vermieden oder zumindest reduziert werden.

Für einen einfachen Positionsregler reicht es aus, die aktuelle Istposition (Regelgröße) zu erfassen und dementsprechend die Stellgröße, z.B. die Soll-Fahrgeschwindigkeit bezüglich der Bewegungsachse, auf Grund der Regelabweichung (also Differenz aus Sollposition und Istposition) zu bestimmen und an den Antriebsstrang (Regelstrecke) weiterzugeben.

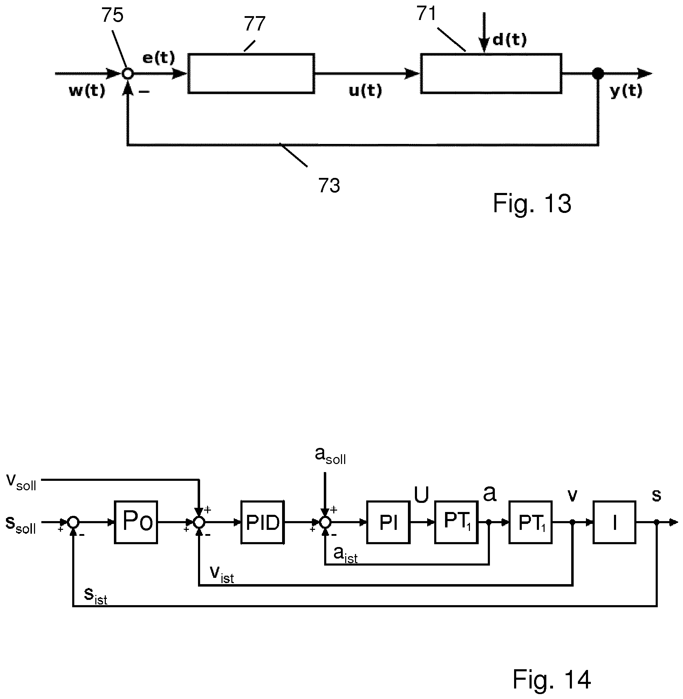

Fig. 13 zeigt ein Ausführungsbeispiel eines einfachen Positionsreglers. y(t) steht für die Regelgröße am Ausgang der Regelstrecke 71, auf die z.B. eine Störgröße d(t) einwirken kann. Über eine Rückführung 73 wird die Regelgröße y(t) einer Vergleichseinrichtung 75 zugeführt, die somit die Ist-Position mit dem Wert einer Führungsgröße w(t) vergleicht und das Vergleichsergebnis e(t) dem Regler 77 zuführt. Am Ausgang des Reglers 77 wird die Stellgröße u(t) an die Regelstrecke 71 ausgegeben.

Ein auf die Regelstrecke angepasster Regler ist auch bei konventioneller Erfassung der Regelgröße am Ausgang der Regelstrecke in der Lage, die Regelabweichung e(t) auf ein Minimum zu reduzieren und somit die zu regelnde Position auf die angeforderte Sollposition w(t) einzustellen und mit einer Toleranz beizubehalten. Wie aus Fig. 13 ersichtlich ist, berücksichtigt der Regler 77 unmittelbar lediglich die Positionsabweichung e(t), nicht aber die Geschwindigkeit zum aktuellen Zeitpunkt der Ausführung des Regelungsvorganges und somit auch nicht die Abweichung zur Sollgeschwindigkeit. Die aktuelle Istgeschwindigkeit kann zwar innerhalb des Reglers 77 (z.B. dessen Übertragungsfunktion) berechnet werden, indem die Differenz zu einer früheren Position berechnet wird. Dabei wird aber veraltete Information mitberücksichtigt, nämlich die frühere Position aus einem früheren Zyklus der Ausführung der Regelung.

Dies hat zur Folge, dass die Regelabweichung e(t) zwar annähernd null ist, die Geschwindigkeit des beweglichen Teils am Ort der Sollposition aber nicht null ist. Dies ist vor allem dann der Fall, wenn das geregelte System eine meist hochfrequente mechanische Schwingung ausführt. Bisherige Regler kompensieren dies zwar für vorgegebene Frequenzbereiche bzw. geeignete Kombinationen aus Resonanzfrequenzen des Reglers und der Regelstrecke. Sie können die Auswirkung von Schwingungen aber in vielen Fällen nicht vollständig eliminieren.

Es wird nun vorgeschlagen, eine Regelung zum Regeln der Bewegung eines beweglichen Teils einer Maschine zu verwenden, von der außer der Information über die Istposition (gegebenenfalls in Form einer Abweichung gegenüber der Sollposition) auch ein Geschwindigkeitsmesswert (gegebenenfalls als Differenz zwischen einer Sollgeschwindigkeit und einer Istgeschwindigkeit) verwendet wird. Insbesondere kann eine solche Regelung eine Kaskadenregelung sein, d.h. ein erster Regler (z.B. der Positionsregler) und ein zweiter Regler (z.B. der Geschwindigkeitsregler) sind in Reihe geschaltet, d.h. kaskadiert. Optional kann außerdem noch die Beschleunigung insbesondere in einer weiteren kaskadierten Stufe der Regelung als gemessene Ist-Größe (gegebenenfalls als Differenz zwischen einer Sollbeschleunigung und einer Istbeschleunigung) von der Regelung als Eingangsgröße genutzt werden.

Ein Ausführungsbeispiel einer solchen kaskadierten Regelung zeigt Fig. 14. Darin sind mit s die Position des beweglichen Teils, mit v die Geschwindigkeit des beweglichen Teils und mit a die Beschleunigung des beweglichen Teils bezeichnet. Diese drei, die Bewegung des beweglichen Teils beschreibenden kinematischen Größen, welche zur Messung jeweils am Ausgang eines entsprechenden Teils der Regelstrecke zur Verfügung stehen, werden zur Bildung der Regelabweichung auch mit dem Index "ist" für den Istwert und mit dem Index "soll" für den Sollwert unterschieden.

Während die Position s über konventionelle Positionsmesssysteme von Maschinen, wie z.B. mit Maßstabsteilung und optischem Lesekopf, gemessen werden kann und/oder aus einem einzigen Kamerabild des erfindungsgemäßen Bewegungsmesssystems ermittelt wird, wird die Geschwindigkeit bevorzugt unmittelbar aus einem Kamerabild ermittelt. Bei konventionellen Systemen dagegen wird die Geschwindigkeit z.B. durch eine an einem Gleichstrom-Motor angelegte elektrische Spannung und/oder durch Messung der Drehzahl z.B. mittels eines Tachometers bestimmt. Konventionell kann die Beschleunigung a durch den dem Gleichstrommotor zugeführten Strom bestimmt werden. Alternativ kann zumindest ein Beschleunigungssensor an dem beweglichen Teil angeordnet sein. Während diese konventionelle Bestimmung der Beschleunigung auch möglich ist, wird bevorzugt, dass die Beschleunigung entweder unmittelbar aus dem Verlauf der Bewegung während des Integrationszeitintervalls des Kamerabildes ermittelt wird und/oder aus dem zeitlichen Verlauf der Geschwindigkeit, die aus einer Folge von mehreren Kamerabildern ermittelt wird.

Die in Fig. 14 dargestellte Regelung ist lediglich ein spezielles Ausführungsbeispiel für eine Regelung, durch die die unmittelbar aus einem Kamerabild ermittelte Geschwindigkeit verwendet wird. Alternative Ausgestaltungen einer derartigen Regelung sind möglich. Z.B. kann die Beschleunigung keine Messgröße sein und z.B. stattdessen durch eine Berechnung aus der Geschwindigkeit ermittelt werden oder unberücksichtigt bleiben. Das konkret in Fig. 14 dargestellte Ausführungsbeispiel weist an seinem links dargestellten Eingang eine Vergleichseinrichtung auf, die die Sollposition $s_{soll}$ mit der Istposition $s_{ist}$ vergleicht und einem ersten Regler, dem Positionsregler Po, zuführt. Bei diesem Regler kann es sich z.B. um einen Proportionalregler handeln. Am Ausgang des Positionsreglers Po wird die ausgegebene Stellgröße, z.B. eine Geschwindigkeit, einer weiteren Vergleichseinrichtung zugeführt, die diese Stellgröße insbesondere mit der gemessenen Istgeschwindigkeit $v_{ist}$ und der Sollgeschwindigkeit $v_{soll}$ vergleicht und die entsprechende Regelabweichung einem Geschwindigkeitsregler PID zuführt, welcher z.B. ein Regler mit Proportional-, Integral- und Differenzialanteil ist. An dessen Ausgang wird die entsprechende Stellgröße einer weiteren Vergleichseinrichtung zugeführt, die z.B. eine Beschleunigung mit der Istbeschleunigung $a_{ist}$ und der Sollbeschleunigung $a_{soll}$ vergleicht. Die entsprechende Regelabweichung wird einem Beschleunigungsregler PI zugeführt, bei dem es sich z.B. um einen Proportional- und Integralregler handeln kann. Am Ausgang dieses Beschleunigungsreglers PI liegt die Stellgröße U für die Regelstrecke an.

In Fig. 14 ist die Regelstrecke symbolisiert durch ein erstes $PT_1$-Glied zur Modellation einer zeitlichen Verzögerung, an deren Ausgang die Beschleunigung a messbar ist. Ein nachgeschaltetes weiteres $PT_1$-Glied modelliert eine weitere Verzögerung, an deren Ausgang die Geschwindigkeit v messbar ist. Noch ein weiteres Glied I modelliert eine integrierende Wirkung der Regelstrecke, an deren Ausgang die Position s messbar ist.

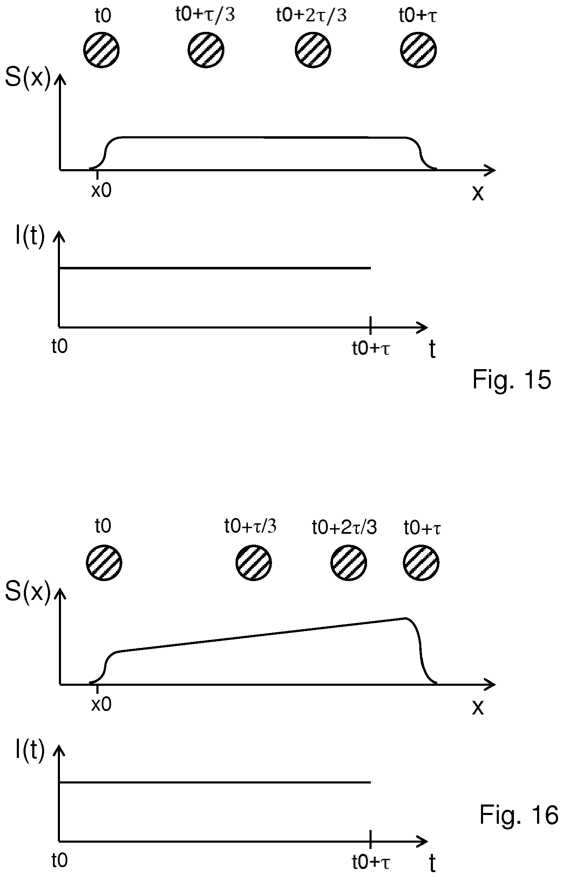

Die Fig. 15 bis Fig. 18 zeigen jeweils den Ort eines kreisförmigen Markers, der Teil einer von einem Aufzeichnungsbild erfassten Erfassungsstruktur ist, zu vier verschiedenen Zeitpunkten während eines einzigen Belichtungszeitintervalls. In jedem der Ausführungsbeispiele der Fig. 15 bis Fig. 18 bewegt sich der Marker relativ zu der Kamera in geradliniger Richtung. Die Ortsvariable der geradlinigen Richtung ist mit x bezeichnet. Oberhalb der durch Schraffuren ausgefüllten Kreise, die den Marker an dem jeweiligen Ort darstellen, befindet sich jeweils eine Zeitangabe, die den Zeitpunkt bezeichnet, zu dem sich der Marker an dem jeweiligen Ort befindet. Es werden jeweils die Zeitpunkte t0 (zu Beginn des Belichtungszeitintervalls), der Zeitpunkt t0+T/3 (wenn ein Drittel des Belichtungszeitintervalls abgelaufen ist), der Zeitpunkt t0+2T/3 (wenn zwei Drittel des Belichtungszeitintervalls abgelaufen sind) und der Zeitpunkt t0+T am Ende des Belichtungszeitintervalls in den Fig. 15 bis 18 angegeben.

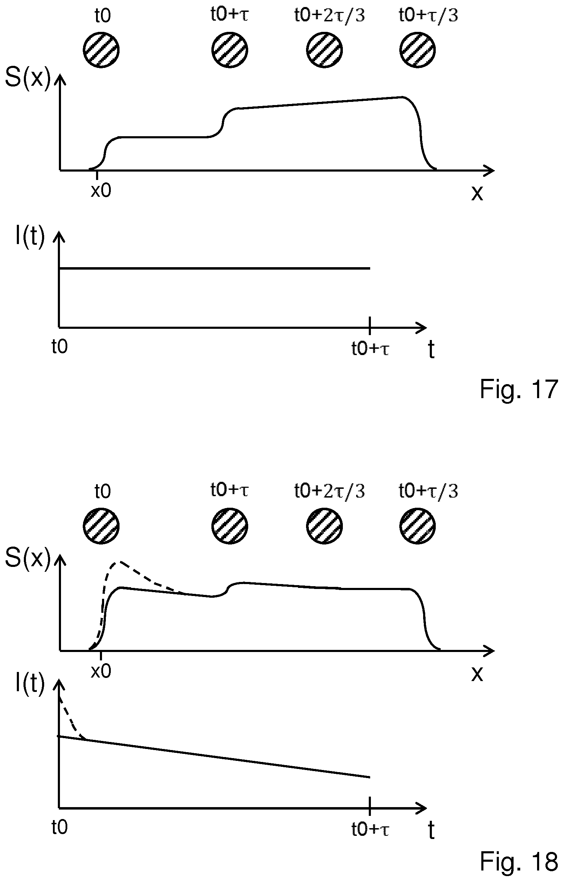

Darunter befindet sich in jeder der Fig. 15 bis 18 ein Diagramm, in dem die über das gesamte Belichtungszeitintervall hinweg von dem Marker ausgehende und von den Sensorelementen der Kamera empfangene Strahlungsmenge S(x) als Funktion des Ortes x aufgetragen ist. Dem entspricht die Signalstärke des Sensors am entsprechenden Ort im Aufzeichnungsbild. Zum Zeitpunkt t0 befindet sich der Marker jeweils am Ort x0. Der Marker befindet sich jedoch nicht in allen der Fig. 15 bis 18 zum Zeitpunkt des Endes des Belichtungszeitintervalls an dem Ort, der am weitesten von dem Ort x0 entfernt ist. Dies ist lediglich in den Fällen der Fig. 15 und 16 der Fall. Dagegen kehrt sich die Bewegung in den Fällen der Fig. 17 und 18 zum Zeitpunkt t0+T/3 um.

Unterhalb des Diagramms, das die empfangene Strahlungsmenge als Funktion des Ortes darstellt, befindet sich in jeder Fig. 15 bis 18 ein weiteres Diagramm, das den zeitlichen Intensitätsverlauf I(t) der von dem Marker während des Belichtungszeitintervalls ausgehenden Strahlung darstellt, d.h. die Intensität I ist eine Funktion der Zeit t. Im Fall der Fig. 15 bis 17 ist der Verlauf konstant, d.h. von dem Marker geht während des Belichtungszeitintervalls Strahlung mit konstant bleibender Strahlungsintensität aus. Im Fall der Fig. 18 dagegen fällt die Intensität I(t) linear mit konstantem Gefälle ab. Außerdem ist eine Variante des zeitlichen Intensitätsverlaufs in Fig. 18 durch eine gestrichelte Linie angedeutet. Gemäß der Variante ist die Intensität am Anfang des Belichtungszeitintervalls wesentlich größer und fällt zunächst steil ab, um dann in den mit konstantem Gefälle abfallenden Verlauf einzuschwenken. Dem entspricht in der Darstellung der empfangenen Strahlungsmenge S(x) eine gestrichelte Linie im Bereich des Ortes x0.

Im Fall der Fig. 15 bewegt sich der Marker mit konstanter Geschwindigkeit in x-Richtung. Wie erwähnt ist außerdem der zeitliche Verlauf der Strahlungsintensität konstant. Die im Belichtungszeitintervall von der Kamera empfangene Strahlungsmenge S(x) hat eine symmetrische Form zum Mittelpunkt des Ortsbereiches, in dem sich der Marker während des Belichtungszeitintervalls bewegt. Daher kann die Bewegung des Markers hinsichtlich ihrer Orientierung nicht von der umgekehrten Bewegung des Markers unterschieden werden.

Dies gilt auch für den Fall der Fig. 16, in dem der Marker eine sich im Laufe des Belichtungszeitintervalls verlangsamende geradlinige Bewegung in x-Richtung ausführt. Wenn der Marker stattdessen eine sich beschleunigende Bewegung in umgekehrte Richtung ausführt, kann dieselbe Strahlungsmenge S(x) als Funktion des Ortes wie in Fig. 16 dargestellt entstehen.

Die aus den Fällen der Fig. 15 und Fig. 16 gezogene Schlussfolgerung kann wie im Folgenden dargestellt mathematisch begründet werden. Dabei wird auf die oben stehende Darstellung der Grauwertverteilung GW Bezug genommen. Die in Gleichung (1) dargestellte Faltung wird jedoch zur Veranschaulichung des Sachverhalts der Fälle in Fig. 15 und Fig. 16 in veränderter Weise dargestellt. In der folgenden Gleichung (7) bedeuten die Größen I(t) die Beleuchtungsintensität als Funktion der Zeit t und σ die ortsabhängige Bild-Funktion der vom Kamerabild aufgenommenen Erfassungsstruktur. Da es sich um eine Relativbewegung zwischen der Erfassungsstruktur und der Kamera handelt, ändert sich der Ort x im Laufe der Zeit um den Weg s(t), d.h. der Weg s ist ebenfalls eine Funktion der Zeit:

$$GW(x) = \int_0^T I(t)\, \sigma(x + s(t))\, dt \qquad\qquad (7)$$

Wenn der Weg s(t) als Variable u bezeichnet wird, ergibt sich:

$$t = s^{-1}(u) \qquad => \qquad du = v(t)\, dt \qquad\qquad (8)$$

D.h. die Zeit t ist gleich der Umkehrfunktion des Weges s als Funktion der Variablen u und daraus folgt der rechts in den Gleichungen (8) stehende Ausdruck, der den Infinitesimalwert du der Variablen u mit der ersten zeitlichen Ableitung v des Weges s multipliziert mit dem Infinitesimalwert dt der Zeit t gleichsetzt. Hieraus folgt wiederum der folgende umgeformte Ausdruck:

$$\frac{1}{v(s^{-1}(u))} = dt \qquad\qquad (9)$$

Die Ausdrücke in den Gleichungen (8) und (9) können nun in Gleichung (7) eingesetzt werden, um die Zeit t zu substituieren. Dabei sind ein Ruhen der Bewegung und daher auch ein Wechsel der Bewegungsrichtung nicht zugelassen. Die erste zeitliche Ableitung v des Weges, d.h. die Geschwindigkeit, wird daher nicht Null:

$$GW(x) = \int_{s(0)}^{s(T)} I\big(s^{-1}(u)\big)\ \sigma(x+u)\ \frac{1}{v(s^{-1}(u))}\ du \qquad (10)$$

$$= \int_{s(0)}^{s(T)} \frac{I\big(s^{-1}(u)\big)}{v(s^{-1}(u))}\ \sigma(x+u)\ du$$

$$= \int_{s(0)}^{s(T)} k(u)\ \sigma(x+u)\ du$$

mit:

$$k(u) = \frac{I\big(s^{-1}(u)\big)}{v(s^{-1}(u))}$$

Dabei kann der erste Ausdruck k(u), d.h. der Bruch, im Integral in Gleichung (10) als Faltungskern und Operator verstanden werden, der die Verschmierung der Erfassungsstruktur im aufgenommenen Aufzeichnungsbild bewirkt. Dieser Ausdruck wird im Folgenden als Verschmierungsoperator bezeichnet. Im Fall konstanter Strahlungsintensität I(t) = 1 vereinfacht sich die Gleichung (10) wie folgt:

$$GW(x) = \int_{s(0)}^{s(T)} \frac{1}{v(s^{-1}(u))}\ \sigma(x+u)\ du \qquad (11)$$

Aus der folgenden Gleichung (12), die aus der Gleichung (11) durch Substitution der Variablen u durch ihre negative Variable -w erhalten wird (d.h. u = -w und du = - dw), ist erkennbar, dass die Orientierung der Bewegung im Fall konstanter Strahlungsintensität nicht ermittelbar ist. Dies folgt aus der Gleichheit der Ausdrücke auf den rechten Seiten der Gleichungen (11) und (12), wobei wegen der Substitution die Integrationsgrenzen und die Vorzeichen vor den Variablen u bzw. w umgekehrt sind:

$$GW(x) = \int_{s(T)}^{s(0)} \frac{1}{v(s^{-1}(-w))}\ \sigma(x-w)\ dw \qquad (12)$$

Somit ist der empirisch durch die Fälle der Fig. 15 und Fig. 16 dargestellte Sachverhalt mathematisch belegt. Wenn sich jedoch die Strahlungsintensität I(t) im Laufe der Zeit verändert, kann die Grauwertverteilung GW(x) wie in der zweiten Zeile der Gleichung (10) geschrieben werden und die im Zähler des Bruchs (d.h. des Verschmierungsoperators) stehende Strahlungsintensität I(t) ist nicht konstant. Vielmehr hängt der Verschmierungsoperator dann vom zeitlichen Verlauf der Strahlungsintensität ab sowie von der Geschwindigkeit der Bewegung als Funktion der Zeit, das heißt vom zeitlichen Verlauf der Bewegung. Der Verschmierungsoperator kann aus einem oder mehreren Aufzeichnungsbildern ermittelt werden.

Wenn der Verschmierungsoperator ermittelt ist, kann aus diesem der zeitliche Verlauf der Bewegung, z.B. die von der Zeit abhängige Geschwindigkeitsänderung ermittelt werden. Bereits an dem Ausdruck des Verschmierungsoperators in der zweiten Zeile der Gleichung (10) ist erkennbar, dass bei unbekanntem zeitlichem Verlauf der Strahlungsintensität und unbekannter Geschwindigkeitsänderung eine Uneindeutigkeit zwischen der Strahlungsintensität und dem Geschwindigkeitsverlauf besteht. Dieser Ausdruck kann wie folgt umgeformt werden:

$$v(t) = \frac{I(t)}{k(u)}$$

Der Ausdruck enthält sowohl die Strahlungsintensität I als auch die Geschwindigkeit v als Funktion der Zeit t, das heißt deren zeitliche Verläufe. Ist der zeitliche Verlauf der Strahlungsintensität allerdings bekannt, wie dies hier der Fall ist, bleibt lediglich noch die Frage offen, mit welcher Orientierung die Relativbewegung stattfindet. Diese Uneindeutigkeit drückt sich in dem umgeformten Ausdruck dadurch aus, dass der Ausdruck nicht nur der Faltungskern des Integrals gemäß Gleichung (10), sondern auch des entsprechenden Integrals mit umgekehrter Integrationsrichtung und umgekehrte Richtung der Bewegung ist. Diese beiden Integrale verhalten sich mit Ausnahme einer in ihnen vorkommenden zeitlich nicht konstanten Strahlungsintensität I(t) genauso wie die Integrale in den Gleichungen (11) und (12) zueinander.

Die Uneindeutigkeit bezüglich der Orientierung lässt sich jedoch bereits bei Auswertung eines einzigen Aufzeichnungsbildes eliminieren, wenn der zeitliche Verlauf der Strahlungsintensität so gewählt wird, dass bei theoretisch denkbarer umgekehrter Bewegungsrichtung ein nicht realistischer Geschwindigkeitsverlauf der Bewegung die Folge ist. Z.B. ist es möglich, wurde bereits oben erwähnt und wird anhand der Variante von Fig. 18 noch erläutert, dass die Strahlungsintensität innerhalb eines kurzen Teilzeitraums zu Beginn des Belichtungszeitintervalls sehr viel größer gewählt wird als während des verbleibenden Rests des Belichtungszeitintervalls. Anschaulich kann man diesen Vorgang als "Einbrennen" der Objektszene in das Aufzeichnungsbild bezeichnen.

Zusätzliche Uneindeutigkeiten bezüglich der Ermittlung der Orientierung und/oder des zeitlichen Verlaufs der Bewegung können sich jedoch bei Auswertung lediglich eines einzigen Aufzeichnungsbildes ergeben, wenn während des Belichtungszeitintervalls eine Umkehrung der Bewegung stattfindet. Dieses Problem lässt sich lösen, indem die Dauer des Belichtungszeitintervalls kurz genug gewählt wird und/oder durch jeweils separate Auswertung mehrerer nacheinander aufgenommener Aufzeichnungsbilder eine bereits ermittelte Orientierung der Bewegung bestätigt wird und/oder ein bereits ermittelter zeitlicher Verlauf der Bewegung in plausibler Weise fortgesetzt wird. Hinzu kommt, dass abhängig von den Massen der bewegten Teile der Maschine Informationen über die Trägheit der Maschine getroffen werden können. Ferner kann unter Berücksichtigung von Informationen über die möglichen Antriebskräfte ermittelt werden, welche Dynamik die Bewegung haben kann. Auf diese Weise lassen sich von mehreren denkbaren Bewegungsverläufen, die während eines Belichtungszeitintervalls stattgefunden haben könnten, unrealistische Bewegungsverläufe ausschließen.

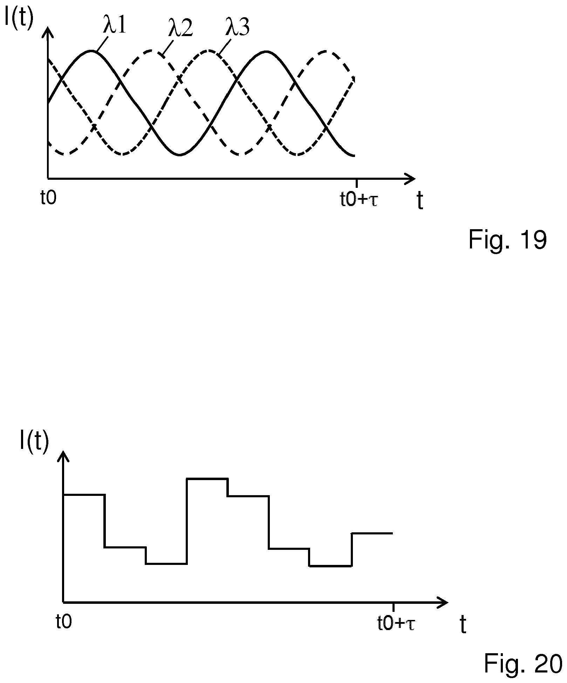

Wie ebenfalls bereits oben erwähnt wurde und wie noch anhand von Fig. 19 kurz erläutert wird, kann außerdem zusätzliche Information durch ein einziges Aufzeichnungsbild gewonnen werden, wenn z.B. der zeitliche Verlauf der Strahlungsintensität in verschiedenen Spektralbereichen in unterschiedlicher Weise variiert wird und/oder Sensorelemente von zumindest einer Kamera mit zumindest zwei Auslesefolgen wie oben bereits beschrieben ausgelesen werden.

Ein konkreter Fall für die unterschiedliche zeitliche Variation der Strahlungsintensität in verschiedenen Spektralbereichen wird anhand der folgenden Gleichungen mathematisch dargestellt. Dabei wird davon ausgegangen, dass während der ersten Hälfte des Belichtungszeitintervalls lediglich die Strahlungsintensität der ersten Spektralkomponente der Strahlung ungleich Null ist und in der zweiten Hälfte des Belichtungszeitintervalls lediglich die Strahlungsintensität der anderen, zweiten Spektralkomponente ungleich Null ist. Dies führt dazu, dass die Verschmierung der ersten Spektralkomponente eindeutig versetzt gegenüber der Verschmierung durch die andere Spektralkomponente ist. Während die folgende Gleichung (13) im Zähler des Verschmierungsoperators und dementsprechend links des Gleichheitszeichens in der Grauwertverteilung bzw. Strahlungsverteilung GW lediglich den allgemeinen Index i enthält und damit für eine beliebige ganze Zahl von Spektralkomponenten steht,

$$GW_i(x) = \int_{s(0)}^{s(T)} \frac{I_i(s^{-1}(u))}{v(s^{-1}(u))} \, \sigma(x+u) \, du \qquad (13)$$

wird in dem konkreten Beispiel wie bereits beschrieben von lediglich zwei Spektralkomponenten mit den Strahlungsintensitätsverläufen I1(t) und I2(t) ausgegangen:

$$I1(t) = \begin{cases} 1 & t \in [0, T/2] \\ 0 & \text{sonst} \end{cases}$$

$$(14)$$

$$I2(t) = \begin{cases} 0 & t \in [0, T/2] \\ 1 & \text{sonst} \end{cases}$$

Daraus folgen die Gleichungen (15.1) und (15.2) für die Intensitätsverteilung der beiden Spektralkomponenten:

$$GW_1(x) = \int_{s(0)}^{s\left(\frac{T}{2}\right)} \frac{1}{v(s^{-1}(u))} \, \sigma(x + u) \, du \qquad (15.1)$$

$$GW_2(x) = \int_{s\left(\frac{T}{2}\right)}^{s(T)} \frac{1}{v(s^{-1}(u))} \, \sigma(x + u) \, du \qquad (15.2)$$

Gemäß Gleichungen (15) liefert die erste Spektralkomponente lediglich in der ersten Hälfte des Belichtungszeitintervalls, d.h. bis zum Zeitpunkt T/2, einen Beitrag zur örtlichen Strahlungsverteilung und liefert die zweite Spektralkomponente lediglich in der zweiten Hälfte des Belichtungszeitintervalls, beginnend mit dem Zeitpunkt T/2, einen Beitrag zur Strahlungsverteilung. Es ist somit eindeutig ermittelbar, mit welcher Orientierung die Bewegung stattfindet. Die Sensorelemente der zumindest einen Kamera, die Strahlung der ersten Spektralkomponente aufgenommen haben, haben die Erfassungsstruktur in der ersten Hälfte des Belichtungszeitintervalls erfasst. Die Sensorelemente, die Strahlung der zweiten Spektralkomponente empfangen haben, haben die Erfassungsstruktur dagegen in der zweiten Hälfte des Belichtungszeitintervalls erfasst. Aus der Anordnung der Sensorelemente kann daher die Orientierung der Bewegung zweifelsfrei ermittelt werden.

Es gibt auch andere Möglichkeiten, das Prinzip der Gewinnung zusätzlicher Information durch unterschiedliche zeitliche Variation der Spektralanteile der Strahlung umzusetzen. Bei der oben bereits beschriebenen und anhand von Fig. 19 erläuterten Variation von zumindest drei Spektralkomponenten λ1, λ2, λ3, haben die spektralen Intensitäten z.B. jeweils einen sinusförmigen zeitlichen Verlauf, jedoch mit Phasenversatz zueinander. In dem konkreten Ausführungsbeispiel ist die Frequenz der Intensitätsveränderung bei allen drei Spektralkomponenten gleich. Dargestellt ist in Fig. 19 der Intensitätsverlauf für die drei Spektralkomponenten in einem einzigen Belichtungszeitintervall. Durch an sich bekannte mathematische Verfahren, die unter der Bezeichnung "phase shift" aus dem Gebiet der Erfassung dreidimensionaler Oberflächenstrukturen bekannt sind, kann aus einem einzigen Aufzeichnungsbild eindeutig die Orientierung und/oder der zeitliche Verlauf der Bewegung ermittelt werden, wenn während des Belichtungszeitintervalls keine Umkehr der Bewegung stattgefunden hat. Z.B. beschreibt Jason Geng in "Structured-light 3D surface imaging: a tutorial", Advances in Optics and Photonics 3, 128 - 160 (2011) doi: 10.1364/AOP.3.000128, ein solches mathematisches Verfahren. Auch andere darin beschriebene mathematische Verfahren zur Erfassung dreidimensionaler Oberflächenstrukturen können auf das der vorliegenden Erfindung zu Grunde liegende Anwendungsgebiet der Erkennung von Bewegungen übertragen werden.

Der oben dargestellte Sachverhalt, wonach eine zeitlich konstante Strahlungsintensität jedenfalls im Fall eines einziges Markers und einer einzigen Kamera mit gleichem Belichtungszeitintervall für alle Sensorelemente keine ausreichende Information für die Ermittlung der Orientierung und/oder des zeitlichen Verlaufs der Bewegung aus einem einzigen Aufzeichnungsbild ermöglicht, ist für einen weiteren Fall in Fig. 17 dargestellt. Wie bereits erwähnt, findet außerdem im Fall der Fig. 17 eine Umkehr der Bewegung des Markers statt. Ausgehend von dem links oben in Fig. 17 dargestellten Ort x0 des Markers zum Zeitpunkt t0 des Beginns des Belichtungszeitintervalls erreicht der Marker bereits nach einem Drittel der Dauer des Belichtungszeitintervalls seine maximale Entfernung vom Ort x0. Im weiteren Verlauf der Bewegung während des Belichtungszeitintervalls findet eine Bewegung in umgekehrter Richtung statt, jedoch mit geringerer Geschwindigkeit als im ersten Drittel des Belichtungszeitintervalls. Die resultierende Bestrahlungsmenge S(x) als Funktion des Ortes x, die von den Sensorelementen aufgenommen wird, zeigt qualitativ den im oberen Diagramm der Fig. 17 dargestellten Verlauf. Am Ort, den der Marker am Ende des Belichtungszeitintervalls erreicht hat, findet ein nahezu sprungförmiger Anstieg der Strahlungsmenge S(x) statt, da der Marker diesen Ort und alle weiter vom Ort x0 entfernten Orte zweimal während des Belichtungszeitintervalls durchlaufen bzw. erreicht hat.

Obwohl Fig. 18 für den gleichen Fall der Bewegung des Markers eine konstant abfallende Strahlungsintensität zeigt, lässt sich dennoch aus einem einzigen Aufzeichnungsbild nicht eindeutig ermitteln, wann der Marker während des Belichtungszeitintervalls sich mit welcher Orientierung bewegt hat. Der durch eine durchgezogene Linie in Fig. 18 dargestellte Verlauf der von den Sensorelementen empfangenen Strahlungsmenge S(x) ist dem in Fig. 17 gezeigten Verlauf qualitativ ähnlich. Lediglich die beiden Plateaus des Verlaufs sind leicht verändert und fallen zu größeren Werten von x stellenweise ab, wobei das rechte Plateau hin zu dem maximalen x-Wert zunächst nochmals leicht ansteigt, weil dort die Umkehr der Bewegung stattgefunden hat und die Aufenthaltsdauer des Markers dort verhältnismäßig lang war.

Jedoch zeigen die mit gestrichelten Linien dargestellte Variante des zeitlichen Verlaufs der Strahlungsintensität I(t) und die resultierende Variante der Strahlungsmenge S(x) den Wert der zusätzlich erhaltenen Information, wenn die Strahlungsintensität im Verlauf der Zeit mit großer Änderungsrate abnimmt. Für den umgekehrten Fall einer Zunahme mit großer Änderungsrate gilt entsprechendes. Die Strahlungsintensität ist im ersten Zehntel des Belichtungszeitintervalls besonders groß und dies führt zu einem Maximum der Strahlungsmenge nahe des Ortes x0. Es wird somit die Information gewonnen, dass sich mit hoher Wahrscheinlichkeit der Marker zu Beginn des Belichtungszeitintervalls an diesem Ort befunden hat.

Fig. 20 zeigt eine pseudozufällige Variation der Strahlungsintensität I(t). Dabei kann es sich um die Gesamt-Strahlungsintensität handeln oder um eine andere Strahlungsintensität, z.B. eine Strahlungsintensität innerhalb eines bekannten und/oder vorgegebenen Spektralbereichs der Strahlung. Ferner alternativ kann es sich dabei um die Strahlungsintensität von Strahlung einer bestimmten Polarisationsrichtung handeln. Z. B. kann die Strahlungsintensität innerhalb von anderen bekannten und/oder vorgegebenen Spektralbereichen der Strahlung ebenfalls pseudozufällig variiert werden und zwar mit verschiedenen pseudozufälligen Intensitätsniveausprüngen in den verschiedenen Spektralbereichen der Strahlung. Entsprechendes gilt für Strahlungsanteile mit anderen Polarisationsrichtungen.

Die Strahlungsintensität ist jeweils innerhalb von Teil-Zeitintervallen konstant und springt am Ende des Teil-Zeitintervalls stufenartig auf ein anderes Intensitätsniveau. Fig. 20 zeigt den Zeitraum eines Belichtungszeitintervalls zwischen dem Anfangszeitpunkt t0 und dem Endzeitpunkt t0+T. Innerhalb des Teil-Zeitintervalls befinden sich in dem Ausführungsbeispiel acht Teil-Zeitintervalle, in denen die Strahlungsintensität jeweils einen konstanten Wert hat.

Die pseudozufällige Intensitätsverteilung ist nicht auf acht Teil-Zeitintervalle pro Belichtungszeitintervall beschränkt, sondern kann vielmehr jede andere geeignete Anzahl und Dauer der Teil-Zeitintervalle haben. Auch ist es nicht zwingend erforderlich, dass die Teil-Zeitintervalle alle gleich lang sind. Z.B. kann in der Art des in Fig. 18 als Variante bezeichneten Verlaufs der Strahlungsintensität ein einzelnes Teilzeitintervall einen sehr viel höheren Wert der Strahlungsintensität haben als die unmittelbar benachbarten Teil-Zeitintervalle oder als alle Teil-Zeitintervalle innerhalb desselben Belichtungszeitintervalls. Auf diese Weise wird in dem oben beschriebenen Sinn die Szene während dieses Teilzeitintervalls in das Aufzeichnungsbild "eingebrannt".

**Patentansprüche**

1. Verfahren zum Betreiben eines Bewegungsmesssystems (10, 13, 23, 31) einer Maschine, insbesondere eines Koordinatenmessgerätes (1) oder einer Werkzeugmaschine (11), wobei

   • eine an einem ersten Teil (2) der Maschine angeordnete Bildaufzeichnungseinrichtung (13; 23) eine örtliche Strahlungsverteilung aufgrund von Strahlung erfasst, die von einem zweiten Teil (7) der Maschine ausgeht, und zumindest ein entsprechendes Aufzeichnungsbild des zweiten Teils (7) aufnimmt, wobei das erste Teil (2) und das zweite Teil (7) relativ zueinander beweglich sind,
   • eine Erfassungsstruktur (31; 41), die durch das zweite Teil (7) gebildet ist und/oder die an dem zweiten Teil (7) angeordnet ist, durch das zumindest eine Aufzeichnungsbild erfasst wird und
   • unter Verwendung von Informationen über eine tatsächliche Erscheinung der Erfassungsstruktur (31; 41) in einem unbewegten Zustand, aus Unterschieden des zumindest einen Aufzeichnungsbildes zu der tatsächlichen Erscheinung der Erfassungsstruktur (31; 41), die durch einen zeitlichen Verlauf der örtlichen Strahlungsverteilung innerhalb eines Aufnahme-Zeitintervalls des jeweiligen Aufzeichnungsbildes während einer Relativbewegung des ersten Teils (2) und des zweiten Teils (7) entstehen, eine Geschwindigkeit der Relativbewegung des ersten Teils (2) und des zweiten Teils (7) ermittelt wird.

2. Verfahren nach Anspruch 1, wobei die Informationen über die tatsächliche Erscheinung der Erfassungsstruktur (31; 41) ein Referenzbild der Erfassungsstruktur (31; 41) aufweisen und wobei durch Auswerten von Unterschieden des Referenzbildes und des zumindest einen von der Bildaufzeichnungseinrichtung (13; 23) aufgenommenen Aufzeichnungsbildes die Geschwindigkeit der Relativbewegung ermittelt wird.

3. Verfahren nach Anspruch 2, wobei durch mathematische Faltung des Referenzbildes mit demjenigen Bereich des Aufzeichnungsbildes, in dem die Erfassungsstruktur (31; 41) abgebildet ist, ein Faltungskern der Faltung ermittelt wird und aus dem Faltungskern die Geschwindigkeit der Relativbewegung ermittelt wird.

4. Verfahren nach Anspruch 3, wobei der Faltungskern als geometrische Struktur interpretiert wird, deren äußere Abmessungen den äußeren Abmessungen des Referenzbildes und den äußeren Abmessungen des Bereichs des Aufzeichnungsbildes entsprechen, in dem die Erfassungsstruktur (31; 41) abgebildet ist, und wobei die Geschwindigkeit der Relativbewegung aus zumindest einer geometrischen Eigenschaft einer Teilstruktur (53, 54) des Faltungskerns ermittelt wird.

5. Verfahren nach Anspruch 4, wobei das Aufzeichnungsbild und das Referenzbild zweidimensionale Bilder sind und wobei ein Betrag und/oder eine Richtung der Geschwindigkeit der Relativbewegung aus einer Geometrie der Teilstruktur (54) des Faltungskerns ermittelt werden.

6. Verfahren nach einem der Ansprüche 1-5, wobei die Erfassungsstruktur (41) eine Struktur ist, deren in den Frequenzraum transformierte Ortsfunktion innerhalb eines Frequenzbereichs, der bei der Frequenz null beginnt, der die Frequenz null aber nicht mit einschließt und der bei einer vorgegebenen Maximalfrequenz endet, keine Nullstelle aufweist.

7. Verfahren nach Anspruch 6, wobei der Funktionswert der in den Frequenzraum transformierten Ortsfunktion der Erfassungsstruktur in dem gesamten Frequenzbereich größer als ein vorgegebener Mindestwert ist.

8. Verfahren nach Anspruch 7, wobei der vorgegebene Mindestwert größer als eine durch die Aufzeichnung des Aufzeichnungsbildes und durch eine Ermittlung der Geschwindigkeit bewirkte statistische Schwankungsamplitude von Bildwerten des Aufzeichnungsbildes.

9. Verfahren nach einem der Ansprüche 6 bis 8, wobei der Funktionswert der in den Frequenzraum transformierten Ortsfunktion der Erfassungsstruktur in dem gesamten Frequenzbereich konstant ist.

10. Verfahren nach einem der Ansprüche 1 bis 9, wobei das Aufzeichnungsbild Pixel aufweist, deren Bildwerte jeweils einer über ein Belichtungszeitintervall integrierten Strahlungsmenge entsprechen, wobei sich die Belichtungszeitintervalle verschiedener Pixel des Aufzeichnungsbildes voneinander unterscheiden und wobei unter Berücksichtigung von Informationen über die unterschiedlichen Belichtungszeitintervalle die Geschwindigkeit der Relativbewegung und/oder Informationen über einen zeitlichen Verlauf der Bewegung ermittelt wird/werden.

11. Verfahren nach einem der Ansprüche 1-10, wobei unter Verwendung der Informationen über eine tatsächliche Erscheinung der Erfassungsstruktur (31; 41) aus Unterschieden des zumindest einen Aufzeichnungsbildes zu der tatsächlichen Erscheinung der Erfassungsstruktur (31; 41) eine Orientierung und/oder ein zeitlicher Verlauf der Relativbewegung des ersten Teils (2) und des zweiten Teils (7) ermittelt wird.

12. Bewegungsmesssystem (10, 13, 23, 31) für eine Maschine, insbesondere ein Koordinatenmessgerät (1) oder eine Werkzeugmaschine (11), die ein erstes Teil und ein zweites Teil aufweist, welche relativ zueinander beweglich sind, wobei das Bewegungsmesssystem (10, 13, 23, 31) aufweist:

   • zumindest eine Erfassungsstruktur (31; 41) und zumindest eine Bildaufzeichnungseinrichtung (13; 23), wobei die Bildaufzeichnungseinrichtung (13; 23) an dem ersten Teil (2) der Maschine angeordnet oder anordenbar ist, wobei die Erfassungsstruktur (31; 41) durch das zweite Teil (7) gebildet ist und/oder an dem zweiten Teil (7) anordenbar ist und wobei die Bildaufzeichnungseinrichtung (13; 23) ausgestaltet ist, eine örtliche Strahlungsverteilung aufgrund von Strahlung zu erfassen, die von dem zweiten Teil (7) der Maschine ausgeht, und zumindest ein entsprechendes Aufzeichnungsbild der Erfassungsstruktur (31; 41) zu erfassen, und
   • eine Ermittlungseinrichtung, die ausgestaltet ist, unter Verwendung von Informationen über eine tatsächliche Erscheinung der Erfassungsstruktur (31 ; 41) in einem unbewegten Zustand, aus Unterschieden des zumindest einen Aufzeichnungsbildes zu der tatsächlichen Erscheinung der Erfassungsstruktur (31 ; 41), die durch einen zeitlichen Verlauf der örtlichen Strahlungsverteilung innerhalb eines Aufnahme-Zeitintervalls des jeweiligen Aufzeichnungsbildes während einer Relativbewegung des ersten Teils (2) und des zweiten Teils (7) entstehen, eine Geschwindigkeit der Relativbewegung des ersten Teils (2) und des zweiten Teils (7) zu ermitteln.

**13.** Bewegungsmesssystem (10, 13, 23, 31) nach Anspruch 12 wobei die Ermittlungseinrichtung ausgestaltet ist, unter Verwendung der Informationen über eine tatsächliche Erscheinung der Erfassungsstruktur (31; 41) aus Unterschieden des zumindest einen Aufzeichnungsbildes zu der tatsächlichen Erscheinung der Erfassungsstruktur (31; 41) eine Orientierung und/oder einen zeitlichen Verlauf der Relativbewegung des ersten Teils (2) und des zweiten Teils (7) zu ermitteln.

**14.** Verfahren zum Herstellen einer Erfassungsstruktur (31; 41), die in dem Bewegungsmesssystems (10, 13, 23, 31) für einer Maschine nach Anspruch 12 oder 13 verwendet wird, wobei

- die Erfassungsstruktur als Teil des Bewegungsmesssystems (10, 13, 23, 31) der Maschine hergestellt wird,
- eine beim Betrieb des Bewegungsmesssystems (10, 13, 23, 31) eine an einem ersten Teil (2) der Maschine angeordnete Bildaufzeichnungseinrichtung (13; 23) eine örtliche Strahlungsverteilung aufgrund von Strahlung erfasst, die von einem zweiten Teil (7) der Maschine ausgeht, und zumindest ein entsprechendes Aufzeichnungsbild des zweiten Teils (7) aufnimmt, wobei das erste Teil (2) und das zweite Teil (7) relativ zueinander beweglich sind,
- die Erfassungsstruktur (31; 41), die durch das zweite Teil (7) gebildet ist und/oder die an dem zweiten Teil (7) angeordnet ist, beim Betrieb des Bewegungsmesssystems (10, 13, 23, 31) durch das zumindest eine Aufzeichnungsbild erfasst wird und
- beim Betrieb des Bewegungsmesssystems (10, 13, 23, 31) unter Verwendung von Informationen über eine tatsächliche Erscheinung der Erfassungsstruktur (31; 41) in einem unbewegten Zustand aus Unterschieden des zumindest einen Aufzeichnungsbildes zu der tatsächlichen Erscheinung der Erfassungsstruktur (31; 41), die durch einen zeitlichen Verlauf der örtlichen Strahlungsverteilung innerhalb eines Aufnahme-Zeitintervalls des jeweiligen Aufzeichnungsbildes während einer Relativbewegung des ersten Teils (2) und des zweiten Teils (7) entstehen, eine Geschwindigkeit der Relativbewegung des ersten Teils (2) und des zweiten Teils (7) ermittelt wird, und wobei Abmessungen von Strukturelementen der Erfassungsstruktur (31; 41) abhängig von einer Größe einer zu erwartenden Geschwindigkeit der Relativbewegung des ersten und des zweiten Teils (7) der Maschine gewählt werden.

**15.** Maschine, insbesondere Koordinatenmessgerät (1) oder Werkzeugmaschine (11), wobei die Maschine ein erstes Teil, ein relativ zu dem ersten Teil (2) bewegliches zweites Teil und das Bewegungsmesssystem (10, 13, 23, 31) nach Anspruch 12 aufweist.

**Claims**

**1.** Method for operating a motion-measuring system (10, 13, 23, 31) of a machine, in particular of a coordinate measuring machine (1) or of a machine tool (11), wherein

• an image recording device (13; 23) arranged on a first part (2) of the machine captures a spatial radiation distribution on the basis of a radiation emanating from a second part (7) of the machine and records at least one corresponding recording image of the second part (7), wherein the first part (2) and the second part (7) are movable relative to one another,
• a capturing structure (31; 41), which is formed by the second part (7) and/or which is arranged on the second part (7), is captured by the at least one recording image, and
• using information about an actual appearance of the capturing structure (31; 41) in a motionless state, a speed of the relative movement of the first part (2) and the second part (7) is determined from differences between the at least one recording image and the actual appearance of the capturing structure (31; 41), which differences arise as a result of a temporal profile of the spatial radiation distribution within a recording time interval of the respective recording image during a relative movement of the first part (2) and the second part (7).

**2.** Method according to Claim 1, wherein the information about the actual appearance of the capturing structure (31; 41) comprises a reference image of the capturing structure (31; 41), and wherein the speed of the relative movement is determined by evaluating differences between the reference image and the at least one recording image recorded by the image recording device (13; 23).

3. Method according to Claim 2, wherein, by mathematical convolution of the reference image with that region of the recording image in which the capturing structure (31; 41) is imaged, a convolution kernel of the convolution is determined and the speed of the relative movement is determined from the convolution kernel.

4. Method according to Claim 3, wherein the convolution kernel is interpreted as a geometric structure whose external dimensions correspond to the external dimensions of the reference image and the external dimensions of the region of the recording image in which the capturing structure (31; 41) is imaged, and wherein the speed of the relative movement is determined from at least one geometric property of a partial structure (53, 54) of the convolution kernel.

5. Method according to Claim 4, wherein the recording image and the reference image are two-dimensional images, and wherein an absolute value and/or a direction of the speed of the relative movement are/is determined from a geometry of the partial structure (54) of the convolution kernel.

6. Method according to any of Claims 1-5, wherein the capturing structure (41) is a structure whose position function transformed into the frequency domain has no zero within a frequency range which begins at the frequency zero but which does not include the frequency zero and which ends at a predefined maximum frequency.

7. Method according to Claim 6, wherein the function value of the position function of the capturing structure transformed into the frequency domain is greater than a predefined minimum value in the entire frequency range.

8. Method according to Claim 7, wherein the predefined minimum value is greater than a statistical fluctuation amplitude of image values of the recording image, said statistical fluctuation amplitude being brought about by the recording of the recording image and by a determination of the speed.

9. Method according to any of Claims 6 to 8, wherein the function value of the position function of the capturing structure transformed into the frequency domain is constant in the entire frequency range.

10. Method according to any of Claims 1 to 9, wherein the recording image has pixels whose image values correspond in each case to a quantity of radiation integrated over an exposure time interval, wherein the exposure time intervals of different pixels of the recording image differ from one another, and wherein the speed of the relative movement and/or information about a temporal profile of the movement are/is determined taking account of information about the different exposure time intervals.

11. Method according to any of Claims 1-10, wherein, using the information about an actual appearance of the capturing structure (31; 41), an orientation and/or a temporal profile of the relative movement of the first part (2) and of the second part (7) are/is determined from differences between the at least one recording image and the actual appearance of the capturing structure (31; 41) .

12. Motion-measuring system (10, 13, 23, 31) for a machine, in particular a coordinate measuring machine (1) or a machine tool (11), which has a first part and a second part, which are movable relative to one another, wherein the motion-measuring system (10, 13, 23, 31) has:

   • at least one capturing structure (31; 41) and at least one image recording device (13; 23), wherein the image recording device (13; 23) is arranged or arrangeable on the first part (2) of the machine, wherein the capturing structure (31; 41) is formed by the second part (7) and/or is arrangeable on the second part (7), and wherein the image recording device (13; 23) is configured to capture a spatial radiation distribution on the basis of radiation emanating from the second part (7) of the machine and to capture at least one corresponding recording image of the capturing structure (31; 41), and
   • a determining device configured to determine, using information about an actual appearance of the capturing structure (31; 41) in a motionless state, a speed of the relative movement of the first part (2) and of the second part (7) from differences between the at least one recording image and the actual appearance of the capturing structure (31; 41), which differences arise as a result of a temporal profile of the spatial radiation distribution within a recording time interval of the respective recording image during a relative movement of the first part (2) and the second part (7).

13. Motion-measuring system (10, 13, 23, 31) according to Claim 12, wherein the determining device is configured to determine, using the information about an actual appearance of the capturing structure (31; 41), an orientation and/or a temporal profile of the relative movement of the first part (2) and of the second part (7) from differences between the at least one recording image and the actual appearance of the capturing structure (31; 41) .

14. Method for producing a capturing structure (31; 41) which is used in the motion-measuring system (10, 13, 23, 31) for a machine according to Claim 12 or 13, wherein

- the capturing structure is produced as part of the motion-measuring system (10, 13, 23, 31) of the machine,
- an image recording device (13; 23) arranged on a first part (2) of the machine during operation of the motion-measuring system (10, 13, 23, 31) captures a spatial radiation distribution on the basis of radiation emanating from a second part (7) of the machine and records at least one corresponding recording image of the second part (7), wherein the first part (2) and the second part (7) are movable relative to one another,
- the capturing structure (31; 41) which is formed by the second part (7) and/or which is arranged on the second part (7), is captured by the at least one recording image during the operation of the motion-measuring system (10, 13, 23, 31), and
- during the operation of the motion-measuring system (10, 13, 23, 31), using information about an actual appearance of the capturing structure (31; 41) in a motionless state, a speed of the relative movement of the first part (2) and the second part (7) is determined from differences between the at least one recording image and the actual appearance of the capturing structure (31; 41), which differences arise as a result of a temporal profile of the spatial radiation distribution within a recording time interval of the respective recording image during a relative movement of the first part (2) and the second part (7), and wherein dimensions of structure elements of the capturing structure (31; 41) are chosen depending on a magnitude of an expected speed of the relative movement of the first part and of the second part (7) of the machine.

15. Machine, in particular coordinate measuring machine (1) or machine tool (11), wherein the machine has a first part, a second part, which is movable relative to the first part (2), and the motion-measuring system (10, 13, 23, 31) according to Claim 12.


**Revendications**

1. Procédé pour faire fonctionner un système de mesure de déplacement (10, 13, 23, 31) d'une machine, en particulier d'un appareil de mesure de coordonnées (1) ou d'une machine-outil (11), dans lequel

- un dispositif d'enregistrement d'image (13 ; 23) disposé sur une première partie (2) de la machine détecte une distribution spatiale de rayonnement due à un rayonnement émanant d'une deuxième partie (7) de la machine et acquiert au moins une image d'enregistrement correspondante de la deuxième partie (7), dans lequel la première partie (2) et la deuxième partie (7) sont mobiles l'une par rapport à l'autre,
- une structure de détection (31 ; 41) qui est formée par la deuxième partie (7) et/ou qui est disposée sur la deuxième partie (7) et par laquelle au moins une image d'enregistrement est détectée, et
- en utilisant des informations sur une apparence réelle de la structure de détection (31 ; 41), dans un état stationnaire, une vitesse du déplacement relatif de la première partie (2) et de la deuxième partie (7) est déterminée à partir de différences entre ladite au moins une image d'enregistrement et l'apparence réelle de la structure de détection (31 ; 41), qui résultent d'une variation dans le temps de la distribution spatiale de rayonnement au cours d'un intervalle de temps d'acquisition de l'image d'enregistrement respective, pendant un déplacement relatif de la première partie (2) et de la deuxième partie (7).

2. Procédé selon la revendication 1, dans lequel les informations sur l'apparence réelle de la structure de détection (31 ; 41) comprennent une image de référence de la structure de détection (31 ; 41) et dans lequel la vitesse du déplacement relatif est déterminée en évaluant des différences entre l'image de référence et ladite au moins une image d'enregistrement acquise par le dispositif d'enregistrement d'image (13 ; 23).

3. Procédé selon la revendication 2, dans lequel un noyau de convolution de la convolution est déterminé par convolution mathématique de l'image de référence avec la région de l'image d'enregistrement dans laquelle est formée l'image de la structure de détection (31, 41) et la vitesse du déplacement relatif est déterminée à partir du noyau de convolution.

4. Procédé selon la revendication 3, dans lequel le noyau de convolution est interprété comme étant une structure géométrique dont les dimensions extérieures correspondent aux dimensions extérieures de l'image de référence et aux dimensions extérieures de la région de l'image d'enregistrement dans laquelle est formée l'image de la structure de détection (31 ; 41) ; et dans lequel la vitesse du déplacement relatif est déterminée à partir d'au moins une propriété géométrique d'une structure partielle (53, 54) du noyau de convolution.

5. Procédé selon la revendication 4, dans lequel l'image d'enregistrement et l'image de référence sont des images bidimensionnelles ; et dans lequel une amplitude et/ou une direction de la vitesse du déplacement relatif sont déterminées à partir d'une géométrie de la structure partielle (54) du noyau de convolution.

6. Procédé selon l'une des revendications 1 à 5, dans lequel la structure de détection (41) est une structure dont la fonction spatiale, transformée dans l'espace de fréquence dans une plage de fréquences commençant à la fréquence zéro mais ne comprenant pas la fréquence zéro et se terminant à une fréquence maximale prédéterminée, ne comporte pas de zéro.

7. Procédé selon la revendication 6, dans lequel la valeur de fonction de la fonction spatiale de la structure de détection transformée dans l'espace de fréquence est supérieure à une valeur minimale prédéterminée dans la totalité de la plage de fréquences.

8. Procédé selon la revendication 7, dans lequel la valeur minimale prédéterminée est supérieure à une amplitude de fluctuation statistique de valeurs d'image de l'image d'enregistrement, provoquée par l'enregistrement de l'image d'enregistrement et par une détermination de la vitesse.

9. Procédé selon l'une des revendications 6 à 8, dans lequel la valeur de fonction de la fonction spatiale de la structure de détection transformée dans le domaine de fréquence est constante dans la totalité de la plage de fréquences.

10. Procédé selon l'une des revendications 1 à 9, dans lequel l'image d'enregistrement comprend des pixels dont les valeurs d'image correspondent chacune à une quantité de rayonnement intégrée sur un intervalle de temps d'exposition, dans lequel les intervalles de temps d'exposition de différents pixels de l'image d'enregistrement sont différents les uns des autres, et dans lequel la vitesse du déplacement relatif et/ou des informations sur une variation dans le temps du déplacement est/sont déterminée(s) en tenant compte d'informations sur les différents intervalles de temps d'exposition.

11. Procédé selon l'une des revendications 1-10, dans lequel une orientation et/ou une variation temporelle du déplacement relatif de la première partie (2) et de la deuxième partie (7) sont déterminées à partir de différences entre ladite au moins une image d'enregistrement et l'apparence réelle de la structure de détection (31 ; 41) en utilisant les informations sur une apparence réelle de la structure de détection (31 ; 41) .

12. Système de mesure de déplacement (10, 13, 23, 31) pour une machine, en particulier un appareil de mesure de coordonnées (1) ou une machine-outil (11) présentant une première partie et une deuxième partie qui sont mobiles l'une par rapport à l'autre,
dans lequel le système de mesure de déplacement (10, 13, 23, 31) comporte :

   - au moins une structure de détection (31 ; 41) et au moins un dispositif d'enregistrement d'image (13 ; 23), dans lequel le dispositif d'enregistrement d'image (13 ; 23) est disposé ou peut être disposé sur la première partie (2) de la machine, dans lequel la structure de détection (31 ; 41) est formée par la deuxième partie (7) et/ou peut être disposée sur la deuxième partie (7) et dans lequel le dispositif d'enregistrement d'image (13 ; 23) est conçu pour détecter une distribution spatiale de rayonnement due à un rayonnement émanant de la deuxième partie (7) de la machine et pour détecter au moins une image d'enregistrement correspondante de la structure de détection (31 ; 41), et
   - un dispositif de détection qui est configuré pour déterminer une vitesse du déplacement relatif de la première partie (2) et de la deuxième partie (7) en utilisant des informations sur une apparence réelle de la structure de détection (31 ; 41) dans un état stationnaire, à partir de différences entre ladite au moins une image d'enregistrement et l'apparence réelle de la structure de détection (31 ; 41), qui résultent d'une variation dans le temps de la distribution spatiale de rayonnement au cours d'un intervalle de temps d'acquisition de l'image d'enregistrement respective, pendant un déplacement relatif de la première partie (2) et de la deuxième partie (7).

13. Système de mesure de déplacement (10, 13, 23, 31) selon la revendication 12, dans lequel le dispositif de détermination est conçu pour déterminer une orientation et/ou une variation dans le temps du déplacement relatif de la première partie (2) et de la deuxième partie (7) à partir de différences entre ladite au moins une image d'enregistrement et l'apparence réelle de la structure de détection (31 ; 41) en utilisant les informations sur une apparence réelle de la structure de détection (31 ; 41) .

14. Procédé de fabrication d'une structure de détection (31 ; 41) utilisée dans le système de mesure de déplacement (10, 13, 23, 31) pour une machine selon la revendication 12 ou 13, dans lequel

- la structure de détection est fabriquée en tant que partie intégrante du système de mesure de déplacement (10, 13, 23, 31) de la machine,
- un dispositif d'enregistrement d'image (13 ; 23) disposé sur une première partie (2) de la machine, lors du fonctionnement du système de mesure de déplacement (10, 13, 23, 31), détecte une distribution spatiale de rayonnement due à un rayonnement émanant d'une deuxième partie (7) de la machine et acquiert au moins une image d'enregistrement correspondante de la deuxième partie (7), dans lequel la première partie (2) et la deuxième partie (7) sont mobiles l'une par rapport à l'autre,
- la structure de détection (31 ; 41), qui est formée par la deuxième partie (7) et/ou qui est disposée sur la deuxième partie (7), est détectée par ladite au moins une image d'enregistrement lors du fonctionnement du système de mesure de déplacement (10, 13, 23, 31), et
- lors du fonctionnement du système de mesure de déplacement (10, 13, 23, 31), en utilisant des informations sur une apparence réelle de la structure de détection (31 ; 41), dans un état stationnaire, une vitesse du déplacement relatif de la première partie (2) et de la deuxième partie (7) est déterminée à partir de différences entre ladite au moins une image d'enregistrement et l'apparence réelle de la structure de détection (31 ; 41), qui résultent d'une variation dans le temps de la distribution spatiale de rayonnement au cours d'un intervalle de temps d'acquisition de l'image d'enregistrement respective pendant un déplacement relatif de la première partie (2) et de la deuxième partie (7) de l'enregistrement, et dans lequel des dimensions des éléments structurels de la structure de détection (31 ; 41) sont choisies en fonction d'une amplitude d'une vitesse attendue du déplacement relatif des première et deuxième parties (7) de la machine.

15. Machine, en particulier appareil de mesure de coordonnées (1) ou machine-outil (11), dans laquelle la machine comporte une première partie, une deuxième partie mobile par rapport à la première partie (2), et le système de mesure de déplacement (10, 13, 23, 31) selon la revendication 12.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

t0          t0+τ/3       t0+2τ/3       t0+τ

S(x)

x0                                  x

I(t)

t0                        t0+τ    t

Fig. 15

t0          t0+τ/3    t0+2τ/3   t0+τ

S(x)

x0                                  x

I(t)

Fig. 16

t0                        t0+τ    t

t0      t0+τ    t0+2τ/3    t0+τ/3

S(x)

x0

x

I(t)

t0        t0+τ   t

Fig. 17

t0      t0+τ    t0+2τ/3    t0+τ/3

S(x)

x0

x

I(t)

t0        t0+τ   t

Fig. 18

I(t)

λ1   λ2   λ3

t0                    t0+τ      t

Fig. 19

I(t)

t0                        t0+τ      t

Fig. 20

**EP 3 278 302 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012103982 A1
- JP 2010219940 A

**In der Beschreibung aufgeführte Nicht-Patentliteratur**

- **REKLEITIS, I.** Steerable Filters and Cepstral Analysis for Optical Flow Calculation from a Single Blurred Image. *Vision Interface,* 1996
- The Non-parametric Sub-pixel Local Point Spread Function Estimation Is a Well Posed Problem. **MAURICIO DELBRACIO et al.** International Journal of Computer Vision. Springer, 2012, vol. 96, 175-195
- **JASON GENG.** Structured-light 3D surface imaging: a tutorial. *Advances in Optics and Photonics,* 2011, vol. 3, 128-160